(19) Europäisches Patentamt / European Patent Office / Office européen des brevets

(11) **EP 4 454 456 A1**

(12) **EUROPEAN PATENT APPLICATION**
published in accordance with Art. 153(4) EPC

(43) Date of publication:
**30.10.2024 Bulletin 2024/44**

(21) Application number: **22911310.5**

(22) Date of filing: **21.12.2022**

(51) International Patent Classification (IPC):
**A01G 31/00** (2018.01)

(52) Cooperative Patent Classification (CPC):
**A01C 23/042; A01G 31/00; C05F 17/40**

(86) International application number:
**PCT/JP2022/047223**

(87) International publication number:
**WO 2023/120608 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.12.2021   JP 2021207205**

(71) Applicant: **Asahi Kasei Kabushiki Kaisha**
**Tokyo 1000006 (JP)**

(72) Inventors:
• **TOYAMA, Shoko**
 **Tokyo 100-0006 (JP)**
• **IDEGAMI, Naohiro**
 **Tokyo 100-0006 (JP)**

(74) Representative: **Hoffmann Eitle**
**Patent- und Rechtsanwälte PartmbB**
**Arabellastraße 30**
**81925 München (DE)**

(54) **CULTURE DEVICE, CULTURE METHOD AND CULTURE PROGRAM**

(57) Provided is a cultivation apparatus including: a decomposition tank which decomposes at least a part of an organic matter contained in a fertilizer source to generate a decomposition liquid in which the at least a part of the organic matter is mineralized; an administration apparatus which administers, to a cultivation target, the decomposition liquid generated by the decomposition tank; and an arithmetic apparatus which calculates a decomposition condition in the decomposition tank based on a nutrient component profile indicating a component to be contained in the decomposition liquid, wherein the decomposition tank calculates the decomposition liquid based on the decomposition condition, and the administration apparatus administers, to the cultivation target, the decomposition liquid generated based on the decomposition condition.

FIG.1
100

EP 4 454 456 A1

**Description**

BACKGROUND

1. TECHNICAL FIELD

The present invention relates to a cultivation apparatus, a cultivation method, and a cultivation program.

2. RELATED ART

Patent Document 1 describes that "capable of using the nutrient solution for cultivation for a long period without destroying the ion balance of main seven elements in the nutrient solution" (abstract). Patent Document 2 describes that "a plant can be cultured while adding an organic compound directly to a nutrient solution" (abstract).

PRIOR ART DOCUMENTS

PATENT DOCUMENT

Patent Document 1: Japanese Patent Application Publication No. 2001-103855
Patent Document 2: International Publication No. 2008/068829

GENERAL DISCLOSURE

A first aspect of the present invention provides a cultivation apparatus. The cultivation apparatus includes: a decomposition tank which decomposes at least a part of an organic matter contained in a fertilizer source to generate a decomposition liquid in which the at least a part of the organic matter is mineralized; an administration apparatus which administers, to a cultivation target, the decomposition liquid generated by the decomposition tank; and an arithmetic apparatus which calculates a decomposition condition in the decomposition tank based on a nutrient component profile indicating a component to be contained in the decomposition liquid. The decomposition tank generates the decomposition liquid based on the decomposition condition. The administration apparatus administers, to the cultivation target, the decomposition liquid generated based on the decomposition condition.

The decomposition tank may hold a liquid for generating the decomposition liquid. The cultivation apparatus may further include a fertilizer source input apparatus which inputs the fertilizer source to the liquid based on the nutrient component profile. The decomposition tank may decompose at least a part of the organic matter in the fertilizer source input into the liquid, to generate the decomposition liquid.

In any of the above cultivation apparatuses, the arithmetic apparatus may calculate, as the decomposition condition, a concentration of an inorganic matter in the decomposition liquid at a predetermined timing based on the nutrient component profile. The fertilizer source input apparatus may input the fertilizer source to the liquid at the timing such that a concentration of an inorganic matter in the decomposition liquid becomes the concentration of the inorganic matter in the decomposition liquid calculated by the arithmetic apparatus.

In any of the above cultivation apparatuses, the arithmetic apparatus may calculate the decomposition condition based on the nutrient component profile and a composition of the fertilizer source. The composition of the fertilizer source may be a composition ratio of a plurality of elements or trace elements among carbon, nitrogen, potassium, phosphorus, calcium, magnesium, and trace elements contained in the fertilizer source. The trace elements may include one or more of iron, manganese, copper, zinc, molybdenum, and boron.

In any of the above cultivation apparatuses, the arithmetic apparatus may calculate the decomposition condition based on the nutrient component profile and a mass ratio of carbon atoms and nitrogen atoms contained in the fertilizer source.

In any of the above cultivation apparatuses, the arithmetic apparatus may calculate, based on a mass ratio of carbon atoms and nitrogen atoms in each of a plurality of fertilizer sources including the fertilizer source, a mixing ratio of one of the fertilizer sources and another of the fertilizer sources, and calculate the decomposition condition based on the mixing ratio.

In any of the above cultivation apparatuses, a relationship between at least one of one temperature or one decomposition time of the liquid and a generation amount of at least one inorganic matter including the inorganic matter may be determined in advance for each type or concentration of the plurality of the fertilizer sources. The arithmetic apparatus may calculate the decomposition condition based on the relationship. The fertilizer source input apparatus may input at least one of the plurality of fertilizer sources to the decomposition liquid, based on the decomposition condition. The relationship between at least one of one temperature or one decomposition time of the decomposition liquid and the generation amount of at least one inorganic matter may be stored in the storage apparatus.

Any of the above cultivation apparatuses may further include a temperature control apparatus which controls a temperature of the liquid such that a concentration of an inorganic matter in the decomposition liquid or a decomposition time of the liquid becomes a predetermined concentration or a predetermined time.

In any of the above cultivation apparatuses, the arithmetic apparatus may calculate a concentration of the fertilizer source of the liquid under the decomposition condition. Any of the above cultivation apparatuses may further include a concentration control apparatus which controls the concentration of the fertilizer source of the liquid based on the concentration of the fertilizer source calculated by the arithmetic apparatus.

In any of the above cultivation apparatuses, the arithmetic apparatus may determine whether the concentration of the fertilizer source is equal to or more than a first threshold concentration and equal to or less than a second threshold concentration. The concentration control apparatus may control the concentration of the fertilizer source in the liquid when the arithmetic apparatus determines that the concentration of the fertilizer source is equal to or more than the first threshold concentration and equal to or less than the second threshold concentration.

When the concentration of the fertilizer source is less than the concentration of the first threshold value, the fertilizer source input apparatus may input, into the liquid, such an amount of the fertilizer source that allows the concentration of the fertilizer source to be the concentration of the first threshold value. When the concentration of the fertilizer source exceeds the concentration of the second threshold value, the fertilizer source input apparatus may input, into the liquid, at least one of the fertilizer source or the water in such an amount that allows the concentration of the fertilizer source to be the concentration of the second threshold value.

In any of the above cultivation apparatuses, the arithmetic apparatus may calculate the decomposition condition based on a concentration of the organic matter in the liquid measured by an organic matter sensor. The decomposition condition may be a decomposition condition that the concentration of the organic matter in the decomposition liquid is a predetermined concentration.

Any of the above cultivation apparatuses may further include a temperature control apparatus which controls a temperature of the liquid based on the concentration of the organic matter measured by the organic matter sensor.

In any of the above cultivation apparatuses, the arithmetic apparatus may correct the nutrient component profile based on a concentration of the organic matter measured by an organic matter sensor, and calculate the decomposition condition based on the nutrient component profile which has been corrected.

In any of the above cultivation apparatuses, the arithmetic apparatus may calculate the decomposition condition based on a pH of the liquid measured by a pH sensor. The decomposition condition may be a decomposition condition that the concentration of the organic matter in the decomposition liquid is a predetermined concentration. The fertilizer source input apparatus may input at least one of the fertilizer source or the water into the liquid based on the calculated decomposition condition.

In any of the above cultivation apparatuses, the arithmetic apparatus may determine the magnitude of the pH of the liquid measured by the pH sensor and a predetermined reference profile. The arithmetic apparatus may calculate a difference between the pH of the liquid measured by the pH sensor at one time and the pH on the reference profile at the one time. The temperature control apparatus may control the temperature of the liquid based on the difference. The fertilizer source input apparatus may input one fertilizer source into the liquid based on the difference. When the difference is positive, the fertilizer source input apparatus may input, into the liquid, a fertilizer source having a mass ratio smaller than a mass ratio of carbon atoms and nitrogen atoms contained in the fertilizer source input into the liquid. When the difference is negative, the fertilizer source input apparatus may input, into the liquid, a fertilizer source having a mass ratio larger than the mass ratio of carbon atoms and nitrogen atoms contained in the fertilizer source input into the liquid.

In any of the above cultivation apparatuses, the arithmetic apparatus may calculate the decomposition condition based on an electrical conductivity of the liquid measured by a conductivity sensor. The decomposition condition may be a decomposition condition that the concentration of the organic matter in the decomposition liquid is a predetermined concentration. The fertilizer source input apparatus may input at least one of the fertilizer source or the water into the liquid based on the calculated decomposition condition.

In any of the above cultivation apparatuses, the arithmetic apparatus may determine the magnitude of the conductivity of the liquid measured by the conductivity sensor and a predetermined reference profile. The arithmetic apparatus may calculate a difference between the conductivity of the liquid measured by the conductivity sensor at one time and the conductivity on the reference profile at the one time. The temperature control apparatus may control the temperature of the liquid based on the difference. The fertilizer source input apparatus may input one fertilizer source into the liquid based on the difference. When the difference is positive, the fertilizer source input apparatus may input, into the liquid, a fertilizer source having a mass ratio smaller than a mass ratio of carbon atoms and nitrogen atoms contained in the fertilizer source input into the liquid. When the difference is negative, the fertilizer source input apparatus may input, into the liquid, a fertilizer source having a mass ratio larger than the mass ratio of carbon atoms and nitrogen atoms contained in the fertilizer source input into the liquid.

In any of the above cultivation apparatuses, the arithmetic apparatus may calculate the decomposition condition based on at least one of an amount of solar radiation to the cultivation target or a sunshine time acquired by an acquisition apparatus which acquires the at least one of the amount of solar radiation or the sunshine time. The decomposition condition may be a decomposition condition that the concentration of the organic matter in the decomposition liquid is a predetermined concentration. The fertilizer source input apparatus may input at least one of the fertilizer source or the water into the liquid based on the calculated decomposition condition.

In any of the above cultivation apparatuses, the arithmetic apparatus may correct at least one of the nutrient component profile or the decomposition condition based on the at least one of the amount of solar radiation or the sunshine time acquired by the acquisition apparatus.

In any of the above cultivation apparatuses, the cultivation target may be arranged in a cultivation space. The arithmetic apparatus may calculate the decomposition condition based on at least one of an air temperature or a humidity of the cultivation space measured by a temperature and humidity sensor which measures the at least one of the air temperature or the humidity in the cultivation space. The decomposition condition may be a decomposition condition that the concentration of the organic matter in the decomposition liquid is a predetermined concentration. The fertilizer source input apparatus may input at least one of the fertilizer source or the water into the liquid based on the calculated decomposition condition.

In any of the above cultivation apparatuses, the arithmetic apparatus may calculate the decomposition condition based on a carbon dioxide concentration of the cultivation space measured by a carbon dioxide sensor which measures the carbon dioxide concentration in the cultivation space. The decomposition condition may be a decomposition condition that the concentration of the organic matter in the decomposition liquid is a predetermined concentration. The fertilizer source input apparatus may input at least one of the fertilizer source or the water into the liquid based on the calculated decomposition condition.

In any of the above cultivation apparatuses, the arithmetic apparatus may correct at least one of the nutrient component profile or the decomposition condition based on at least one of the at least one of the air temperature or the humidity of the cultivation space measured by the temperature and humidity sensor, or the carbon dioxide concentration of the cultivation space measured by the carbon dioxide concentration sensor.

In any of the above cultivation apparatuses, a growth state of the cultivation target may be measured by a growth state sensor. The arithmetic apparatus may calculate the decomposition condition based on the growth state of the cultivation target measured by the growth state sensor. The decomposition condition may be a decomposition condition that the concentration of the organic matter in the decomposition liquid is a predetermined concentration. The administration apparatus may administer at least one of the fertilizer source or the water to the cultivation target based on the calculated decomposition condition.

In any of the above cultivation apparatuses, a nutrient component of the decomposition liquid to be administered to the cultivation target may be measured by a nutrient component sensor. The arithmetic apparatus may calculate the decomposition condition based on the nutrient component of the decomposition liquid measured by the nutrient component sensor. The decomposition condition may be a decomposition condition that the concentration of the organic matter in the decomposition liquid is a predetermined concentration. The administration apparatus may administer at least one of the fertilizer source or the water to the cultivation target based on the calculated decomposition condition.

In any of the above cultivation apparatuses, the arithmetic apparatus may correct the decomposition condition based on at least one of the growth state of the cultivation target or the nutrient component of the decomposition liquid.

In any of the above cultivation apparatuses, the arithmetic apparatus may correct the nutrient component profile based on at least one of the growth state of the cultivation target or the nutrient component of the decomposition liquid.

In any of the above cultivation apparatuses, the arithmetic apparatus may correct the decomposition condition based on the nutrient component profile which has been corrected.

Any of the above cultivation apparatuses may further include an administration control apparatus which controls timings when the administration apparatus administers, to the cultivation target, a plurality of decomposition liquids including the decomposition liquid, generated by a plurality of decomposition tanks including the decomposition tank, respectively. The administration control apparatus may control the administration apparatus based on at least one of the growth state of the cultivation target measured by the growth state sensor or the nutrient component of the decomposition liquid measured by the nutrient component sensor, such that a timing when one of the decomposition liquids generated in one of the decomposition tanks is administered to the cultivation target is different from a timing when another of the decomposition liquids generated in another of the decomposition tanks is administered to the cultivation target.

Any of the above cultivation apparatuses may further include a temperature control apparatus which controls a temperature of the liquid. When the administration control apparatus controls the administration apparatus so as not to administer, to the cultivation target, the decomposition liquid generated by the one of the decomposition tanks, the temperature control apparatus may control the temperature of the liquid in the one of the decomposition tanks.

In any of the above cultivation apparatuses, each of a plurality of decomposition tanks including the decomposition tank may be provided with a plurality of decomposition liquid sensors which measure a component of the liquid. The arithmetic apparatus may calculate the decomposition condition based on the component of the liquid measured by each of the plurality of decomposition liquid sensors. The decomposition condition may be a decomposition condition that the concentration of the organic matter in the decomposition liquid in each of the plurality of decomposition tanks becomes a predetermined concentration. The respective decomposition conditions for the plurality of decomposition tanks may be different from each other. The administration apparatus may administer at least one of the fertilizer source or the water to the cultivation target based on the calculated decomposition condition.

In any of the above cultivation apparatuses, the arithmetic apparatus may calculate the nutrient component profile based on information on the cultivation target input by an inputting apparatus.

In any of the above cultivation apparatuses, the administration apparatus may administer the decomposition liquid to a cultivation tank which cultivates the cultivation target. At least a part of the decomposition liquid having passed through the cultivation tank may be introduced into the decomposition tank.

In any of the above cultivation apparatuses, the decomposition liquid administered to the cultivation tank may be purified by a purification tank. In the decomposition tank, at least a part of the decomposition liquid purified by the purification tank may be introduced into the decomposition tank. The at least a part of the decomposition liquid purified by the purification tank may be a liquid.

A second aspect of the present invention provides a cultivation apparatus. The cultivation apparatus includes: a storage apparatus in which a program is stored; and an arithmetic apparatus including a processor. The program causes the processor to execute: decomposing, by a decomposition tank, at least a part of an organic matter contained in a fertilizer source to generate a decomposition liquid in which the at least a part of the organic matter is mineralized; administering, by an administration apparatus, to a cultivation target, the decomposition liquid generated by the decomposition tank; calculating, by the arithmetic apparatus, a decomposition condition in the decomposition tank based on a nutrient component profile indicating a component to be contained in the decomposition liquid; generating, by the decomposition tank, the decomposition liquid based on the decomposition condition; and administering, by the administration apparatus, to the cultivation target, the decomposition liquid generated based on the decomposition condition.

A third aspect of the present invention provides a cultivation method. A cultivation method includes: decomposing, by a decomposition tank, at least a part of an organic matter contained in a fertilizer source to generate a decomposition liquid in which the at least a part of the organic matter is mineralized; administering, by an administration apparatus, to a cultivation target, the decomposition liquid generated by the decomposing; and calculating, by an arithmetic apparatus, a decomposition condition in the decomposition tank based on a nutrient component profile indicating a component to be contained in the decomposition liquid. The decomposing is generating, by the decomposition tank, the decomposition liquid based on the decomposition condition. The administrating is administering, by the administration apparatus, to the cultivation target, the decomposition liquid generated based on the decomposition condition. A cultivation method.

A fourth aspect of the present invention provides a cultivation program. The cultivation program causes a computer to function as a cultivation apparatus.

Note that the summary clause does not necessarily describe all necessary features of the embodiments of the present invention. In addition, the invention may also be a sub-combination of the features described above.

BRIEF DESCRIPTION OF THE DRAWINGS

Fig. 1 shows an example of a cultivation apparatus 100 according to one embodiment of the present invention.
Fig. 2 shows an example of a nutrient component profile of a decomposition liquid 12.
Fig. 3 shows an example of cultivation target information Ic.
Fig. 4 shows an example of cultivation apparatus information Ia.
Fig. 5 shows an example of a nutrient component profile Pf.
Fig. 6 shows the nutrient component profile Pf shown in Fig. 5.
Fig. 7 shows an example of a liquid amount AL of the decomposition liquid 12 for each period T.
Fig. 8 shows an example of fertilizer source information If.
Fig. 9 shows an example of a decomposition condition Cd.
Fig. 10 shows another example of the fertilizer source information If.
Fig. 11 shows an example of fertilizer source inventory information Ifs.
Fig. 12 shows an example of a liquid amount AL of the decomposition liquid 12 for each period T.
Fig. 13 shows another example of the decomposition condition Cd.
Fig. 14 shows another example of the fertilizer source information If.

Fig. 15 shows another example of the cultivation apparatus 100 according to one embodiment of the present invention.

Fig. 16 shows an example of measurement of an oxidation reduction potential in the decomposition liquid 12 by an ORP sensor 14.

Fig. 17 shows an example of a relationship between the voltage of the decomposition liquid 12 measured by the ORP sensor 14 and time.

Fig. 18 shows an example of a relationship between the pH of the decomposition liquid 12 measured by a pH sensor 16 and time.

Fig. 19 shows an example of the relationship between the pH of the decomposition liquid 12 measured by the pH sensor 16 and time, together with a reference profile Pfc1.

Fig. 20 shows an example of a relationship between the conductivity σ of the decomposition liquid 12 measured by a conductivity sensor 17 and time, together with a reference profile Pfc2.

Fig. 21 shows another example of the cultivation apparatus 100 according to one embodiment of the present invention.

Fig. 22 shows another example of the cultivation apparatus 100 according to one embodiment of the present invention.

Fig. 23 shows another example of the cultivation apparatus 100 according to one embodiment of the present invention.

Fig. 24 shows another example of the cultivation apparatus 100 according to one embodiment of the present invention.

Fig. 25 is a timing chart showing an example of administration timings of a decomposition liquid 12-1 to a decomposition liquid 12-3 to a cultivation target 92.

Fig. 26 shows another example of the cultivation apparatus 100 according to one embodiment of the present invention.

Fig. 27 is an enlarged view of the vicinity of a pipe 48 and an administration apparatus 40 in Fig. 26.

Fig. 28 is a flowchart showing an example of a cultivation method according to one embodiment of the present invention.

Fig. 29 is a flowchart showing another example of the cultivation method according to one embodiment of the present invention.

Fig. 30 is a flowchart showing another example of the cultivation method according to one embodiment of the present invention.

Fig. 31 is a flowchart showing an example of details of steps between a nutrient component profile calculation step S90 and a decomposition step S102 in Fig. 30.

Fig. 32 is a flowchart showing another example of the cultivation method according to one embodiment of the present invention.

Fig. 33 is a flowchart showing another example of the cultivation method according to one embodiment of the present invention.

Fig. 34 is a flowchart showing another example of the cultivation method according to one embodiment of the present invention.

Fig. 35 is a flowchart showing another example of the cultivation method according to one embodiment of the present invention.

Fig. 36 shows an example of a computer 2200 in which the cultivation apparatus 100 according to one embodiment of the present invention may be wholly or partially embodied.

DESCRIPTION OF EXEMPLARY EMBODIMENTS

Hereafter, the present invention will be described through embodiments of the invention, but the following embodiments do not limit the invention according to claims. In addition, not all of the combinations of features described in the embodiments are essential to the solution of the invention.

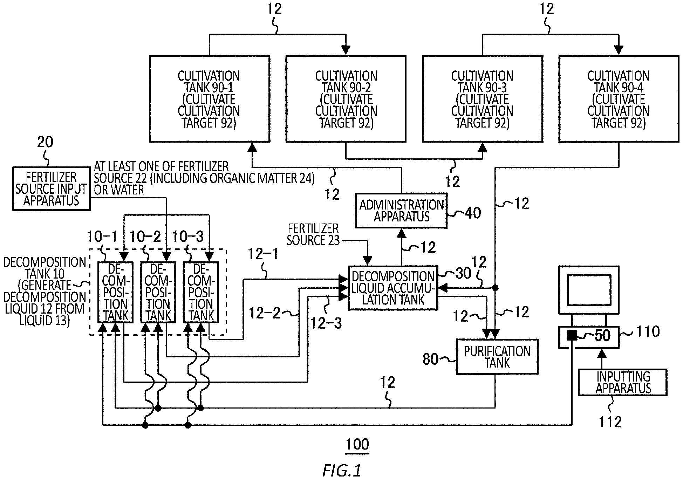

Fig. 1 shows an example of a cultivation apparatus 100 according to one embodiment of the present invention. The cultivation apparatus 100 includes a decomposition tank 10, an administration apparatus 40, and an arithmetic apparatus 50. The cultivation apparatus 100 may include a fertilizer source input apparatus 20, a decomposition liquid accumulation tank 30, a purification tank 80, and a cultivation tank 90. The cultivation tank 90 is a tank which cultivates a cultivation target 92. The cultivation target 92 is, for example, a plant.

The decomposition tank 10 generates a decomposition liquid 12 from a liquid 13. The liquid 13 contains a fertilizer source 22. As a result, the liquid 13 may contain an organic matter 24. The fertilizer source input apparatus 20 may input the fertilizer source 22 into the liquid 13. In this case, the fertilizer source input apparatus 20 may administer the fertilizer source 22 to the liquid 13 held in the decomposition tank 10, or may adjust the liquid 13 by inputting the fertilizer source 22 into the decomposition tank 10. In addition, the liquid 13 may be adjusted by inputting the fertilizer source 22 into a container or the like different from the decomposition tank 10, and in this case, the liquid 13 may be sent to the decomposition tank 10 by using a pipe or the like. The decomposition tank 10 may generate the decomposition liquid 12 by decomposing at least a part of the organic matter 24 contained in the liquid 13. In the present example, the fertilizer source input apparatus 20 inputs the fertilizer source 22 into the decomposition tank 10. The fertilizer source 22 contains the organic matter 24. The fertilizer source 22 is, for example, fish soluble made from bonito, cow manure, a corn immersion liquid, or the like.

The liquid 13 is a liquid before at least a part of the organic matter 24 is mineralized. The liquid 13 may be a liquid after at least a part of the organic matter 24 is mineralized and before at least another part of the organic matter 24 is mineralized. The decomposition liquid 12 is a liquid after at least a part of the organic matter 24 is mineralized. The decomposition liquid 12 may contain the organic matter 24 which is not mineralized.

The liquid obtained by mineralizing the organic matter 24 may refer to a liquid obtained by ammoniating the organic matter 24, or may refer to a liquid obtained by nitrifying the organic matter 24 (nitrification liquid). The decomposition tank 10 generates the decomposition liquid 12 by decomposing at least a part of the organic matter 24 in the liquid 13. The organic matter 24 may be decomposed by microorganisms. The microorganisms may be contained in the cultivation tank 90 or may be contained in the fertilizer source 22. When the microorganisms are contained in the fertilizer source 22, the microorganisms may be input into the fertilizer source 22.

The cultivation apparatus 100 may include a plurality of decomposition tanks 10. In the present example, the cultivation apparatus 100 includes three decomposition tanks 10 (decomposition tanks 10-1 to 10-3). In the present example, the decomposition tank 10-1 to the decomposition tank 10-3 generate a decomposition liquid 12-1 to a decomposition liquid 12-3, respectively. The cultivation apparatus 100 may include a plurality of cultivation tanks 90. In the present example, the cultivation apparatus 100 includes four cultivation tanks 90 (cultivation tanks 90-1 to 90-4).

The decomposition liquid accumulation tank 30 accumulates the decomposition liquid 12 generated by the decomposition tank 10. In the present example, the decomposition liquid accumulation tank 30 accumulates the decomposition liquid 12 mixed with the decomposition liquid 12-1 to the decomposition liquid 12-3. A fertilizer source 23 may be input into the decomposition liquid accumulation tank 30. The fertilizer source 23 is, for example, fermented limestone, organic potash, or the like. The fertilizer source 23 input into the decomposition liquid accumulation tank 30 may be mixed with the decomposition liquid 12 in the decomposition liquid accumulation tank 30.

The administration apparatus 40 administers, to the cultivation target 92, the decomposition liquid 12 generated by the decomposition tank 10. The decomposition liquid 12 contains nutrients for growth of the cultivation target 92. The nutrients are N (nitrogen), $H_3PO_4$ (phosphoric acid), K (potassium), and the like. The cultivation target 92 may be arranged in the cultivation tank 90, or may be arranged in soil 91 (described later). When the cultivation target 92 is arranged in the cultivation tank 90, the administration apparatus 40 may administer the decomposition liquid 12 to the cultivation target 92 arranged in the cultivation tank 90. When the cultivation target 92 is arranged in the soil 91 (described later), the administration apparatus 40 may administer the decomposition liquid 12 to the cultivation target 92 arranged in the soil 91 (described later), and may the administer decomposition liquid 12 to the soil 91 (described later). The decomposition tank 10 may further decompose the decomposition liquid 12 administered to the cultivation tank 90 by the administration apparatus 40.

The administration apparatus 40 may administer, to the cultivation target 92, the decomposition liquid 12 accumulated in the decomposition liquid accumulation tank 30. The administration apparatus 40 may administer, to the cultivation target 92, any one of the decomposition liquid 12-1 to the decomposition liquid 12-3 before being accumulated in the decomposition liquid accumulation tank 30.

In the present example, the administration apparatus 40 administers the decomposition liquid 12 to the cultivation tank 90-1 among the cultivation tank 90-1 to the cultivation tank 90-4. In the present example, the decomposition liquid 12 administered to the cultivation tank 90-1 passes through the cultivation tanks 90 in the order of the cultivation tank 90-2, the cultivation tank 90-3, and the cultivation tank 90-4. At least a part of the decomposition liquid 12 having passed through the cultivation tanks 90 may be accumulated in the decomposition liquid accumulation tank 30. In the present example, at least a part of the decomposition liquid 12 having passed through the cultivation tank 90-4 is accumulated in the decomposition liquid accumulation tank 30. At least a part of the decomposition liquid having passed through cultivation tank 90-4 may be introduced into the decomposition tank 10. The decomposition tank 10 may further decompose the decomposition liquid 12 administered to the cultivation tank 90.

The decomposition liquid 12 administered to the cultivation tank 90 may be purified by the purification tank 80. The purification of the decomposition liquid 12 refers to lowering the concentration of nitrate nitrogen in decomposition liquid 12. The purification of the decomposition liquid 12 may refer to removing components such as NaCl (sodium chloride) remaining in the decomposition liquid 12. The concentration of nitrate nitrogen in the decomposition liquid 12 may be adjusted by the purification tank 80. The concentration of NaCl (sodium chloride) in the decomposition liquid 12 may be adjusted by the purification tank 80.

At least a part of the decomposition liquid 12 having passed through the cultivation tank 90 may be accumulated in the purification tank 80. In the present example, at least a part of the decomposition liquid 12 having passed through the cultivation tank 90-4 is purified by the purification tank 80. At least a part of the decomposition liquid 12 accumulated in the decomposition liquid accumulation tank 30 may be purified by the purification tank 80. At least a part of the decomposition liquid 12 purified by the purification tank 80 may be introduced into the decomposition tank 10. The decomposition tank 10 may further decompose the decomposition liquid 12 purified by the purification tank 80. The decomposition liquid 12 may circulate through the decomposition tank 10, the cultivation tank 90, and the purification tank 80. Note that the decomposition liquid 12 may be discarded.

The cultivation apparatus 100 may include a control apparatus 110. In the present example, the control apparatus 110 includes the arithmetic apparatus 50. The arithmetic apparatus 50 is, for example, a central processing unit (CPU). The control apparatus 110 may be a computer including the CPU. The control apparatus 110 may be a stationary computer or a portable computer such as a smartphone or a tablet. The control apparatus 110 may include an inputting apparatus 112. The inputting apparatus 112 is, for example, a keyboard, a mouse, a touch panel, or the like. The control apparatus 110 may be a computer including the arithmetic apparatus 50, the inputting apparatus 112, a memory, an interface, and the like.

The arithmetic apparatus 50 calculates a decomposition condition in the decomposition tank 10. The decomposition condition is defined as a decomposition condition Cb. The decomposition condition Cb is a condition for the decomposition tank 10 to generate the decomposition liquid 12 in which a predetermined proportion of the organic matter 24 is mineralized.

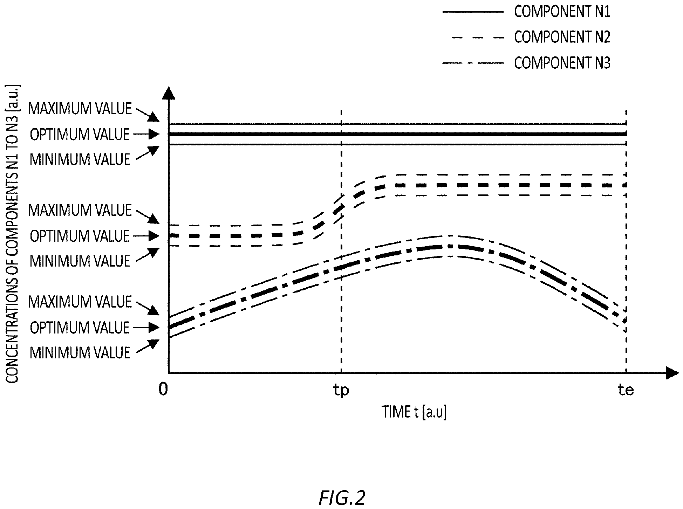

Fig. 2 shows an example of a nutrient component profile of the decomposition liquid 12. The nutrient component profile is defined as a nutrient component profile Pf. The nutrient component profile Pf is a profile of an inorganic matter in the decomposition liquid 12. The nutrient component profile Pf is a profile of components of the decomposition liquid 12 (see Fig. 1), and may be a concentration, in the decomposition liquid 12, of each of one or more inorganic components generated by the fertilizer source 22 (see Fig. 1) being mineralized. The nutrient component profile Pf may be a relationship between the inorganic component and time t. The time t may be the number of days of cultivation of the cultivation target 92. The nutrient component profile Pf may include a time change in the concentration of the inorganic component in the decomposition liquid 12.

In the present example, three inorganic components are a component N1, a component N2, and a component N3. The inorganic component generated by the fertilizer source 22 (see Fig. 1) being mineralized may contain at least one of the component N1, the component N2, or the component N3. The component N1 is, for example, $NO_3^-$ (nitrate ion). The component N2 is, for example, $NO_2^-$ (nitrite ion). The component N3 is, for example, $NH_4^+$ (ammonia ion). In Fig. 2, the time changes of the concentrations of the component N1, the component N2, and the component N3 in the decomposition liquid 12 (see Fig. 1) are indicated by a solid line, a broken line, and an alternate long and short dash line, respectively.

In Fig. 2, a thick line indicates the optimum value of the concentration of each of the component N1, the component N2, and the component N3. In Fig. 2, thin lines on both sides of the thick line indicate the minimum value and the maximum value of the concentration of each of the component N1, the component N2, and the component N3. A range between the minimum value and the maximum value may be an allowable range of the inorganic component generated by the fertilizer source 22 (see Fig. 1) being mineralized. In Fig. 2, a time te is, for example, a harvest day of a growth target grown by the cultivation target 92 (see Fig. 1).

The nutrient component profile Pf may include a profile of the organic matter 24 (see Fig. 1). The nutrient component profile Pf may include a time change in the concentration of the organic matter 24 in the decomposition liquid 12 (see Fig. 1).

The nutrient component profile Pf shows a component to be contained in the decomposition liquid 12 (see Fig. 1). The component to be contained in the decomposition liquid 12 may mean a concentration of the component preferable for cultivation of the cultivation target 92 (see Fig. 1), or may mean a ratio of concentrations of a plurality of components including the component. The nutrient component profile Pf may be different for each type of the cultivation target 92, may be different for each season, or may be different for each region in which the cultivation target 92 is cultivated. The type of the cultivation target 92 is, for example, a type of plant.

The arithmetic apparatus 50 (see Fig. 1) calculates the decomposition condition Cb in the decomposition tank 10 (see Fig. 1) based on the nutrient component profile Pf. The decomposition condition Cb calculated by the arithmetic apparatus 50 may include at least one of the dosage or administration timing of the decomposition liquid 12 (see Fig. 1) to the cultivation target 92 (see Fig. 1), the concentration of one or more minerals in the decomposition liquid 12 (see Fig. 1), the purification amount and purification timing of the decomposition liquid 12 purified by the purification tank 80 (see Fig. 1), the temperature of the decomposition liquid 12, or the number of the decomposition tanks 10. The decomposition tank 10 generates the decomposition liquid 12 based on the decomposition condition Cb calculated by the arithmetic apparatus 50.

The dosage of the decomposition liquid 12 may be the mass or volume of the decomposition liquid 12 administered to the cultivation target 92 per unit time. In the case of the example shown in Fig. 1, the decomposition liquid 12 of a dosage administered to the cultivation target 92 may circulate through the cultivation tank 90, the purification tank 80, the decomposition tank 10, and the decomposition liquid accumulation tank 30. The dosage administered to the cultivation target 92 is, for example, 80 L per day.

The purification amount of the decomposition liquid 12 may be the mass or volume of the decomposition liquid 12 purified per unit time. When the microorganisms are input into the fertilizer source 22, the decomposition condition Cb may include at least one of the input amount or the input timing of the microorganisms to the fertilizer source 22 (see Fig. 1). The input amount of microorganisms may be the mass or volume of microorganisms input per unit time.

The decomposition liquid 12 (see Fig. 1) generated based on the decomposition condition Cb easily contains components at a concentration preferable for the cultivation target 92 (see Fig. 1). The administration apparatus 40 (see Fig. 1) administers, to the cultivation target 92, the decomposition liquid 12 generated based on the decomposition condition Cb. Accordingly, the decomposition liquid 12 containing a component having a concentration preferable for cultivation of the cultivation target 92 is administered to the cultivation target 92.

Information on the cultivation target 92 (see Fig. 1) may be input by the inputting apparatus 112. The information on the cultivation target 92 may be information regarding at least one of a type of the cultivation target 92, an amount of the cultivation target 92, a season in which the cultivation target 92 is cultivated, a region in which the cultivation target 92 is cultivated, polyphenol or vitamin C of the cultivation target 92, or the like. The amount of the cultivation target 92 may be the mass of the cultivation target 92. The arithmetic apparatus 50 (see Fig. 1) may calculate the nutrient component profile Pf based on the information on the cultivation target 92 input by the inputting apparatus 112. The nutrient component profile Pf may be input by the user of the cultivation apparatus 100 using the inputting apparatus 112.

The fertilizer source input apparatus 20 (see Fig. 1) may input the fertilizer source 22 (see Fig. 1) into the liquid 13 (see Fig. 1) based on the nutrient component profile Pf. The decomposition condition Cb may include at least one of a timing when the fertilizer source input apparatus 20 inputs the fertilizer source 22 into the liquid 13 or an amount of the fertilizer source 22 input into the liquid 13 by the fertilizer source input apparatus 20. The input amount of the fertilizer source 22 may be the mass or volume of the fertilizer source input per unit time. The decomposition condition Cb may further include at least one of the concentration of the fertilizer source 22 in the liquid 13, the decomposition time for decomposing the fertilizer source 22, the temperature of the liquid 13 for decomposing the fertilizer source 22, at least one of the type or amount of the microorganisms contained in the fertilizer source 22 or the cultivation tank 90, or the amount of aeration to the liquid 13.

The arithmetic apparatus 50 (see Fig. 1) may calculate, as the decomposition condition Cb, the concentration of the inorganic matter in the decomposition liquid 12 at a predetermined timing based on the nutrient component profile Pf. The predetermined timing is defined as a time tp. The time tp may be one timing between a time zero and a time te shown in Fig. 2. The inorganic matter in the decomposition liquid 12 may be at least one of $NO_3^-$ (nitrate ion), $NO_2^-$ (nitrite ion), or $NH_4^+$ (ammonium ion).

The fertilizer source input apparatus 20 (see Fig. 1) may input the fertilizer source 22 into the liquid 13 such that the concentration of the inorganic matter in the decomposition liquid 12 (see Fig. 1) becomes the concentration calculated by the arithmetic apparatus 50 (see Fig. 1) at the time tp. Accordingly, the concentration of the inorganic matter in the decomposition liquid 12 becomes easier to be a concentration preferable for cultivation of the cultivation target 92 at the time tp. The decomposition liquid 12 may be administered to the cultivation target 92 at the time tp.

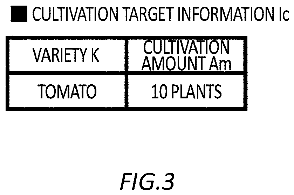

Fig. 3 shows an example of the cultivation target information Ic. The cultivation target information Ic is information regarding the cultivation target 92. The cultivation target information Ic may include information regarding a variety K of the cultivation target 92 and information regarding a cultivation amount Am of the cultivation target 92. The variety K of the cultivation target 92 may refer to a type of a vegetable such as fruit vegetables, leaf vegetables, and root vegetables, and may refer to a type of a fruit such as pomaceous fruits, citrus fruits, stone fleshy fruits, fruit vegetables, and nuts. The variety K of the cultivation target 92 may refer to a specific variety of a vegetable such as tomato, cabbage, or lettuce, or may refer to a specific variety of a fruit such as orange or apple. The information regarding the cultivation amount Am may be the number of plants, may be a mass, or may be a volume of the cultivation target 92. Fig. 3 shows an example of a case where the variety K is tomato and the cultivation amount Am is 10 plants. The cultivation target information Ic may be stored in the storage apparatus 52 (described later).

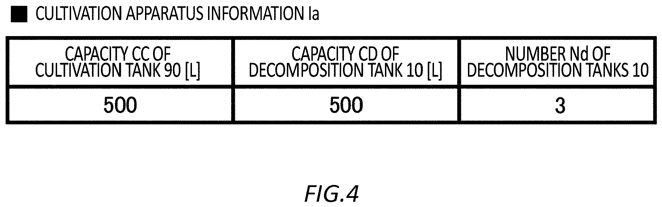

Fig. 4 shows an example of the cultivation apparatus information Ia. The cultivation apparatus information Ia is information regarding the cultivation apparatus 100. The cultivation apparatus information Ia may include information regarding a capacity CC of the cultivation tank 90, information regarding a capacity CD of the decomposition tank 10, and information regarding a number Nd of the decomposition tanks 10. The information regarding the capacity CC of the cultivation tanks 90 may refer to information regarding the total capacity of the plurality of cultivation tanks 90, or may refer to information regarding the capacity of each cultivation tank 90 in the plurality of cultivation tanks 90. The information regarding the capacity CD of the decomposition tank 10 may refer to information regarding the total capacity of the plurality of decomposition tanks 10, or may refer to information regarding the capacity of each decomposition tank 10 in the plurality of decomposition tanks 10. The information regarding the number Nd of the decomposition tanks 10 is information regarding the maximum number of the decomposition tanks 10 included in the cultivation apparatus 100. Fig. 4 shows an example of a case where the capacity CC is 500 L, the capacity CD is 500 L, and the number Nd is 3. The cultivation apparatus information Ia may be stored in the storage apparatus 52 (described later).

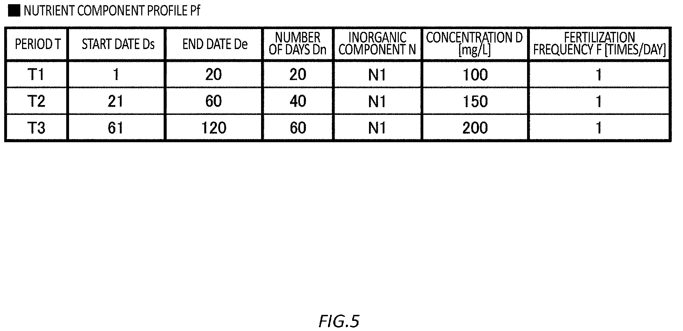

Fig. 5 shows an example of the nutrient component profile Pf. The arithmetic apparatus 50 (see Fig. 1) may calculate the nutrient component profile Pf based on the cultivation target information Ic and the cultivation apparatus information Ia. The arithmetic apparatus 50 may calculate the nutrient component profile Pf based on the cultivation target information Ic and at least one of the capacity CC of the cultivation tank 90 or the capacity CD of the decomposition tank 10.

The nutrient component profile Pf may include information regarding a period T during which cultivation target 92 is cultivated, a start date Ds, an end date De, a number of days Dn, an inorganic component N, a concentration D of the inorganic component N, and a fertilization frequency F. The start date Ds is a date on which the cultivation of the cultivation target 92 is started. The end date Ds is a date on which the cultivation of the cultivation target 92 is ended. Fig. 5 shows an example of a case where a period T1 is from a first day to a 20th day, a period T2 is from a 21st day to a 60 day, and a period T3 is from a 61 day to a 120 day. The start date Ds and the end date De may be a cultivation start time and a cultivation end time of the cultivation target 92, respectively. The number of days Dn may be a length from the cultivation start time to the cultivation end time.

The inorganic component N is a type of the inorganic component N generated by the fertilizer source 22 being mineralized. Fig. 5 shows an example of a case where the inorganic component N is the component N1 in any one of the period T1 to the period T3. The concentration D is the concentration of the inorganic component N in the decomposition liquid 12. Fig. 5 is an example of a case where the concentration D in the period T1 is 100 (mg/L), the concentration D in the period T2 is 150 (mg/L), and the concentration D in the period T3 is 200 (mg/L). The fertilization frequency F is the number of times of fertilization per unit time. In the present example, the fertilization frequency F is the number of times of fertilization per day. Fig. 5 shows an example of a case where the fertilization frequency F is 1 (time/day) in any one of the period T1 to the period T3.

The arithmetic apparatus 50 (see Fig. 1) may calculate the period T, the start date Ds, the end date De, the number of days Dn, the inorganic component N, the concentration D, and the fertilization frequency F based on the cultivation target information Ic and the cultivation apparatus information Ia. The arithmetic apparatus 50 (see Fig. 1) may calculate the period T, the start date Ds, the end date De, the number of days Dn, the concentration D, and the fertilization frequency F for each type of the inorganic component N based on the cultivation target information Ic and the cultivation apparatus information Ia. The nutrient component profile Pf shown in Fig. 5 may be stored in the storage apparatus 52 (described later).

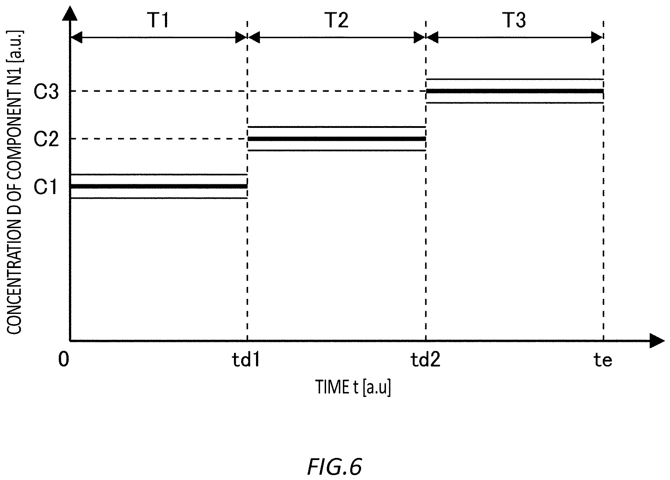

Fig. 6 shows the nutrient component profile Pf shown in Fig. 5. Fig. 6 is an example of a relationship between the time t and the component N1. As described in Fig. 3, the thick line in Fig. 6 indicates the optimum value of the concentration of the component N1, and the thin lines on both sides of the thick line are the maximum value and the minimum value of the concentration of the component N1. The arithmetic apparatus 50 (see Fig. 1) may calculate the maximum value and the minimum value in addition to the optimum value. For the component N2 and the component N3, the arithmetic apparatus 50 may similarly calculate the nutrient component profile Pf. In Fig. 6, the concentrations D in the period T1 to the period T3 are defined as C1 to C3, respectively. In Fig. 6, the end date De of the period T1 is indicated by a time td1, the end date De of the period T2 is indicated by a time td2, and the end date De of the period T3 is indicated by the time te.

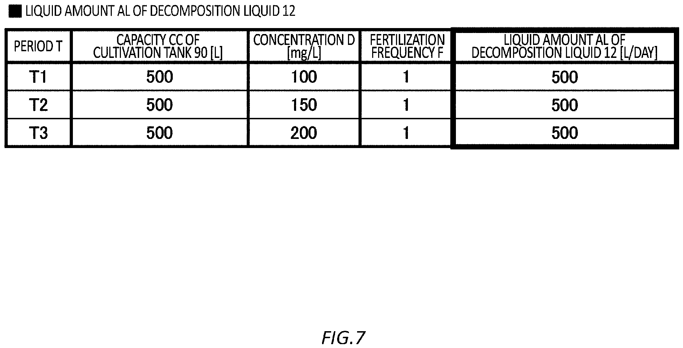

Fig. 7 shows an example of a liquid amount AL of the decomposition liquid 12 for each period T. The arithmetic apparatus 50 (see Fig. 1) may calculate the liquid amount AL of the decomposition liquid 12 based on the nutrient component profile Pf. The liquid amount AL of the decomposition liquid 12 is the liquid amount of the decomposition liquid 12 for embodying the relationship between the time t and the concentration D of the inorganic component N shown in the nutrient component profile Pf. The liquid amount AL of the decomposition liquid 12 may be a liquid amount per day. The arithmetic apparatus 50 may calculate the liquid amount AL of the decomposition liquid 12 by integrating the capacity CC and the fertilization frequency F. In the example of Fig. 7, the arithmetic apparatus 50 calculates the liquid amount AL of the decomposition liquid 12 in the period T1 to the period T3 to be 500 (L/day). The liquid amount AL of the decomposition liquid 12 for each period T may be stored in the storage apparatus 52 (described later).

The arithmetic apparatus 50 may calculate the liquid amount AL of the decomposition liquid 12 for each period T based on the nutrient component profile Pf. The arithmetic apparatus 50 may calculate the liquid amount AL of the decomposition liquid 12 for each type of the component N based on the nutrient component profile Pf. Fig. 7 shows an example of a case where the component N is N1.

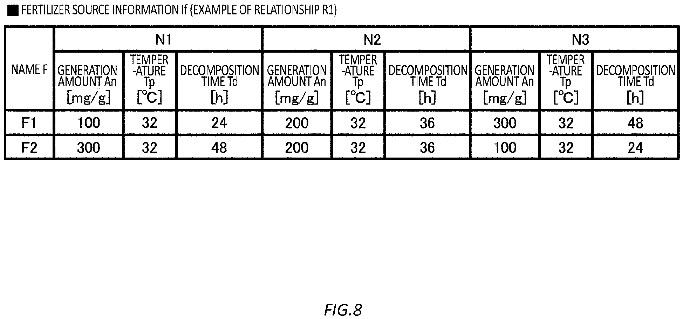

Fig. 8 shows an example of the fertilizer source information If. The fertilizer source information If is information regarding the fertilizer source 22 (see Fig. 1). The fertilizer source information If may include information regarding a generation amount An of the inorganic component N, information regarding a temperature Tp at which the inorganic component N is generated, and information regarding a decomposition time Td of the organic matter 24 (see Fig. 1) contained in the fertilizer source 22. The information regarding the generation amount An refers to information regarding the generation amount of the inorganic component N generated per unit amount of the fertilizer source 22. The information regarding the temperature Tp refers to information regarding the temperature at which the inorganic component N is generated from the fertilizer source 22. The temperature may be an optimum temperature for generating the inorganic component N from the fertilizer source 22. The information regarding the decomposition time Td refers to information regarding the time for generating the inorganic component N of the generation amount An. Respective numerical values shown in Fig. 8 are examples of the generation amount An (mg/g), the temperature Tp (°C), and the decomposition time Td (h). The fertilizer source information If may be stored in the storage apparatus 52 (described later).

The fertilizer source information If may include the information regarding the generation amount An, the information regarding the temperature Tp, and the information regarding the decomposition time Td for each type of the inorganic component N generated by the fertilizer source 22 being mineralized. In the present example, the fertilizer source information If includes, for each of the component N1 to the component N3, the information regarding the generation amount An, the information regarding the temperature Tp, and the information regarding the decomposition time Td.

The fertilizer source information If may include, for each type of the fertilizer source 22, the information regarding the generation amount An, the information regarding the temperature Tp, and the information regarding the decomposition time Td. A relationship between at least one of one temperature Tp or one decomposition time Td of the liquid 13 and the generation amount An of at least one inorganic matter N may be determined in advance for each type of the fertilizer source 22. The relationship is defined as a relationship R1. In the present example, in the fertilizer source information If, the relationship R1 between one temperature Tp and one decomposition time Td of the liquid 13 and the generation amount An is determined in advance for each of two types of fertilizer sources 22. The relationship between at least one of the one temperature Tp or one decomposition time Td of the liquid 13 and the generation amount An of at least one inorganic matter N may be determined in advance for each concentration of the fertilizer source 22 in the liquid 13. The relationship is defined as a relationship R2.

The fertilizer source 22 of a name F1 and the fertilizer source 22 of a name F2 may be different fertilizer sources. The different fertilizer sources refer to fertilizer sources in which at least some of organic matters contained in the fertilizer source 22 are different from each other. For example, the different fertilizer sources means a case where the fertilizer source 22 with the name F1 is fish soluble made from bonito and the fertilizer source 22 with the name F2 is cow manure.

The different fertilizer sources 22 may refer to the fertilizer sources 22 in which the compositions of the fertilizer sources 22 are different from each other when the organic matters 24 contained in the fertilizer sources 22 are the same,. The composition of the fertilizer source 22 refers to a composition ratio of a plurality of elements or trace elements among C (carbon), N (nitrogen), K (potassium), P (phosphorus), Ca (calcium), Mg (magnesium), and trace elements contained in the fertilizer source 22. The trace elements refers to one or more of Fe (iron), Mn (manganese), Cu (copper), Zn (zinc), Mo (molybdenum), and B (boron). The fact that the compositions of the fertilizer sources 22 are different from each other may indicate that at least one type of the elements or the trace elements contained in the fertilizer source 22 is different, or may indicate that the composition ratio of the elements or the trace elements is different when the elements or the trace elements contained in the fertilizer source 22 are the same.

The different fertilizer sources 22 may refer to fertilizer sources coming from different production areas when the fertilizer sources 22 have the same name F. This is a case where the fertilizer source 22 with the name F1 is fish soluble made from bonito from a production area A, and the fertilizer source 22 with the name F2 is fish soluble made from bonito from a production area B. Even in a case where the fertilizer sources 22 have the same name F, when the fertilizer sources 22 come from different production areas, the compositions of the fertilizer sources 22 can be different from each other.

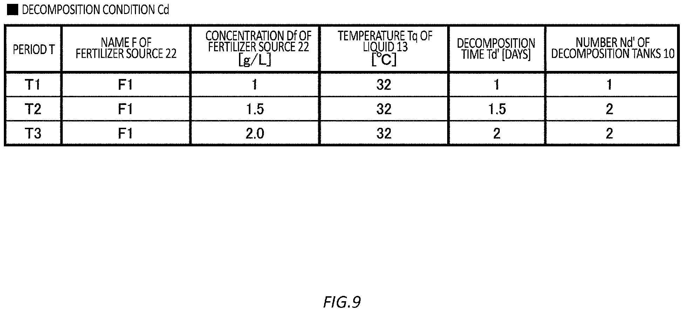

Fig. 9 shows an example of the decomposition condition Cd. The arithmetic apparatus 50 (see Fig. 1) calculates the decomposition condition Cd based on the nutrient component profile Pf (Figs. 2, 5, and 6). The decomposition condition Cd may include information regarding the name F of the fertilizer source 22, a concentration Df of the fertilizer source 22, a temperature Tq of the liquid 13, a decomposition time Td', and a number Nd' of the decomposition tanks 10. The concentration Df refers to the concentration of the fertilizer source 22 at a time point when the fertilizer source 22 is input into the decomposition tank 10. The time point at which the fertilizer source 22 is input refers to a time point before the decomposition of the fertilizer source 22 starts in the decomposition liquid 12. The concentration Df may refer to the concentration of the fertilizer source 22 in the liquid 13. The temperature Tq is the temperature of the liquid 13 for embodying the desired nutrient component profile Pf. The number Nd of the decomposition tanks 10 may refer to one or more of the decomposition tank 10-1 to the decomposition tank 10-3 (see Fig. 1). Respective numerical values shown in Fig. 9 are examples of the concentration Df (g/L), the temperature Tq (°C), the decomposition time Td' (day), and the number Nd'. The decomposition tank 10 may generate the decomposition liquid 12 based on the decomposition condition Cd shown in Fig. 9.

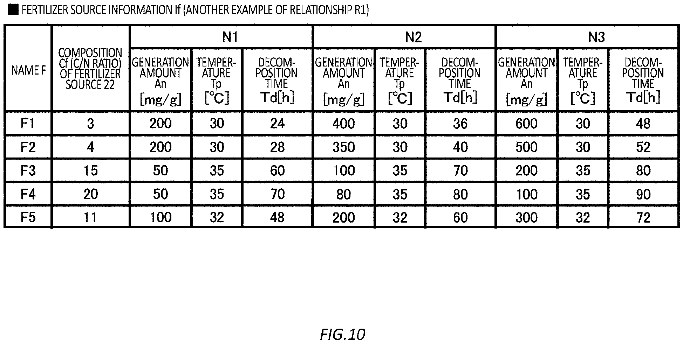

Fig. 10 shows another example of the fertilizer source information If. The fertilizer source information If of Fig. 10 is different from the fertilizer source information If of Fig. 8 in that it further includes information regarding a composition Cf of the fertilizer source 22. As described above, the composition Cf of the fertilizer source 22 refers to a composition ratio of a plurality of elements or trace elements among C (carbon), N (nitrogen), K (potassium), P (phosphorus), Ca (calcium), Mg (magnesium), and trace elements constituting the fertilizer source 22. The trace elements refers to one or more of Fe (iron), Mn (manganese), Cu (copper), Zn (zinc), Mo (molybdenum), and B (boron). Fig. 10 shows an example of a case where the composition Cf is a mass ratio of C (carbon) atoms and N (nitrogen) atoms (mass of C (carbon) atoms/mass of N (nitrogen) atoms).

The generation amount An of the inorganic component N, the temperature Tq of the decomposition liquid 12, and the decomposition time Td' can be different for each composition Cf of the fertilizer source 22. The fertilizer source information If shown in Fig. 10 is information indicating a relationship between the composition Cf, and the generation amount An, the temperature Tq, and the decomposition time Td' in each of the fertilizer sources 22 having five names (names F1 to F5).

The fertilizer source 22 with one of the name F1 to the name F5 may include the fertilizer source 22 in which a plurality of other fertilizer sources 22 in the name F1 to the name F5 are combined. For example, when the fertilizer source 22 with the name F1 is fish soluble made from bonito from the production area A, the fertilizer source 22 with the name F2 is fish soluble made from bonito from the production area B, the fertilizer source 22 with the name F3 is cow manure from the production area C, and the fertilizer source 22 with the name F4 is cow manure from the production area D, the fertilizer source 22 with the name F5 may be the fertilizer source 22 in which the fish soluble made from bonito from the production area A and the cow manure from the production area C are combined.

The arithmetic apparatus 50 (see Fig. 1) may calculate the decomposition condition Cd based on the nutrient component profile Pf and the composition Cf of the fertilizer source 22. Accordingly, the arithmetic apparatus 50 can calculate the decomposition condition Cd reflecting the composition Cf of the fertilizer source 22.

The arithmetic apparatus 50 (see Fig. 1) may calculate the decomposition condition Cd based on at least one of the relationship R1 (see Fig. 8) or the relationship R2. The fertilizer source input apparatus 20 (see Fig. 1) may input at least one of a plurality of fertilizer sources 22 to the decomposition liquid 12, based on the decomposition condition Cd.

The composition Cf may be a mass ratio of C (carbon) atoms and N (nitrogen) atoms (mass of C (carbon) atoms/mass of N (nitrogen) atoms) contained in the fertilizer source 22. The mass ratio of C (carbon) atoms and N (nitrogen) atoms is defined as a mass ratio Rm. The arithmetic apparatus 50 (see Fig. 1) may calculate the decomposition condition Cd based on the nutrient component profile Pf and the mass ratio Rm.

The temperature control apparatus 70 (see Fig. 3) may control the temperature of the liquid 13 such that the concentration of the inorganic matter (inorganic component N) in the decomposition liquid 12 becomes a predetermined concentration value. As the mass ratio Rm of the fertilizer source 22 is larger (that is, as the ratio of C (carbon) atoms is higher), the fertilizer source 22 is less likely to be decomposed. The temperature control apparatus 70 may raise the temperature of the liquid 13 when the concentration of the inorganic matter (inorganic component N) in the decomposition liquid 12 is smaller than the predetermined concentration value. Accordingly, the generation of the inorganic component N can be promoted. The temperature control apparatus 70 may lower the temperature of the liquid 13 when the concentration of the inorganic matter (inorganic component N) in the decomposition liquid 12 is larger than the predetermined concentration value. Accordingly, the generation of the inorganic component N can be suppressed.

The temperature control apparatus 70 (see Fig. 3) may control the temperature of the liquid 13 such that the decomposition time Td of the liquid 13 becomes a predetermined time value. The decomposition time Td of the liquid 13 refers to time required to decompose at least a part of the organic matter 24 contained in the liquid 13. The temperature control apparatus 70 may lower the temperature of the liquid 13 when the decomposition time Td of the liquid 13 is shorter than the predetermined time value. Accordingly, the generation of the inorganic component N can be suppressed. The temperature control apparatus 70 may raise the temperature of the liquid 13 when the decomposition time Td of the liquid 13 is longer than the predetermined time value. Accordingly, the generation of the inorganic component N can be promoted.

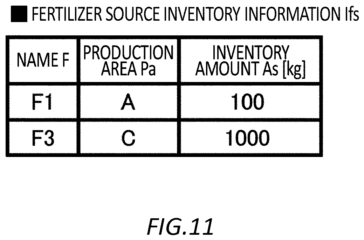

Fig. 11 shows an example of fertilizer source inventory information Ifs. The fertilizer source inventory information Ifs is information regarding the inventory of the fertilizer source 22 (see Fig. 1). The fertilizer source inventory information Ifs may include information regarding a production area Pa and an inventory amount As of the fertilizer source 22. The fertilizer source inventory information Ifs may include the information regarding the production area Pa and the inventory amount As for each name F of the fertilizer source 22. The fertilizer source inventory information Ifs may be stored in the storage apparatus 52 (described later).

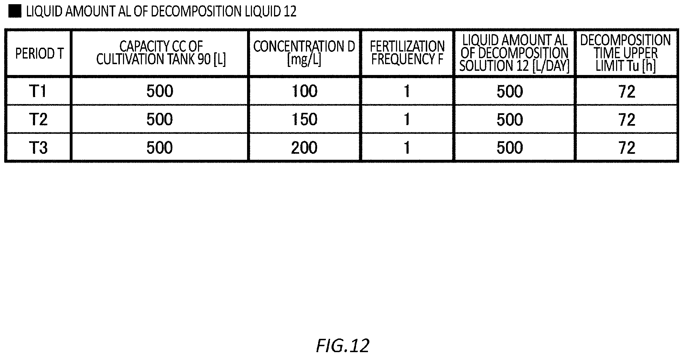

Fig. 12 shows an example of the liquid amount AL of the decomposition liquid 12 for each period T. Fig. 12 shows information regarding a decomposition time upper limit Tu together with the example of Fig. 7. The arithmetic apparatus 50 (see Fig. 1) may calculate the decomposition time upper limit Tu based on the capacity CD (see Fig. 4) of the decomposition tank 10, the number Nd (see Fig. 4) of the decomposition tanks 10, and the liquid amount AL of the decomposition liquid 12. In the example of Fig. 12, the arithmetic apparatus 50 calculates the decomposition time upper limit Tu in the period T1 to the period T3 to be 72 hours.

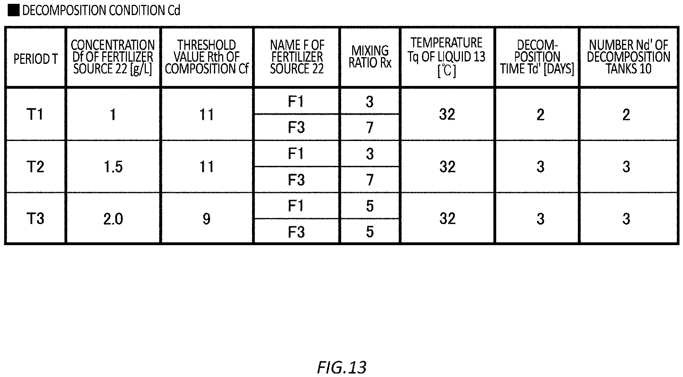

Fig. 13 shows another example of the decomposition condition Cd. The arithmetic apparatus 50 (see Fig. 1) may calculate a mixing ratio of one fertilizer source 22 and another fertilizer source 22 based on the mass ratio Rm. The mixing ratio is defined as a mixing ratio Rx. One fertilizer source 22 refers to, for example, the fertilizer source with any one of the name F1 to the name F5 shown in Fig. 10. The another fertilizer source 22 refers to, for example, the fertilizer source 22 which is any fertilizer source with the name F1 to the name F5 shown in Fig. 10 and is different from the one fertilizer source 22.

The arithmetic apparatus 50 (see Fig. 1) may calculate the mixing ratio Rx based on the mass ratio Rm and a predetermined constraint condition. The constraint condition is defined as a constraint condition Cx. The constraint condition Cx refers to the specification of the cultivation apparatus 100, the type of the fertilizer source 22, or the like which can be a constraint in the calculation of the decomposition condition Cd. The constraint condition Cx is, for example, a decomposition time condition Tu (see Fig. 12), the inventory of the fertilizer source 22 (see Fig. 11), and a threshold value of a C/N ratio with which the fertilizer source 22 can be decomposed. The threshold value is defined as a threshold value Rth.

In the example of Fig. 11, the C/N ratio of the fertilizer source 22 with the name F1 (for example, the fish soluble made from bonito from the production area A) is defined as Rc1, and the C/N ratio of the fertilizer source 22 with the name F3 (for example, the cow manure from the production area C) is defined as Rc3. The arithmetic apparatus 50 may calculate the mixing ratio Rx based on following Expression 1.
(Mathematical expression 1)

$$a \times Rc1 + (1 - a) \times Rc3 = Rth \qquad (1)$$

Expression 1 is an equation for an unknown a. In the example of Fig. 11, Rc1 is 3, and Rc3 is 15. Assuming that the threshold value Rth is 11, the unknown a is calculated to be 0.3. Accordingly, in the present example, the mixing ratio Rx between the fertilizer source 22 with the name F1 and the fertilizer source 22 with the name F3 is calculated to be 3:7.

The arithmetic apparatus 50 (see Fig. 1) may calculate the decomposition condition Cd based on the mixing ratio Rx. In the present example, the decomposition condition Cd shown in Fig. 13 is calculated based on the mixing ratio Rx. The arithmetic apparatus 50 may calculate the mixing ratio Rx for each period T, and may calculate the decomposition condition Cd based on the mixing ratio Rx for each period T.

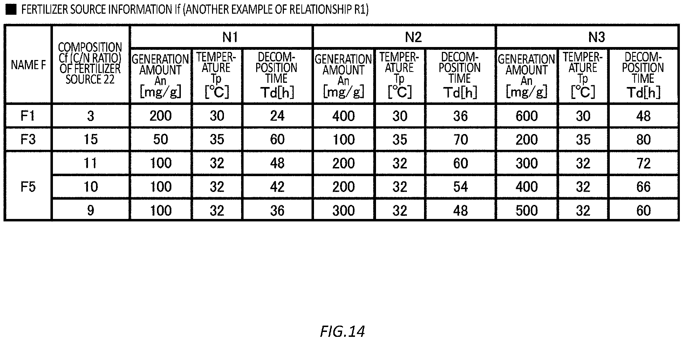

Fig. 14 shows another example of the fertilizer source information If. In the present example, it is assumed that the constraint condition Cx further includes a ratio of the component N1 to the component N3. The ratio may be a molar ratio, a mass ratio, or a concentration ratio of the component N1 to the component N3. The ratio of the component 1 to the component N3 is, for example, 1:2:4.

The arithmetic apparatus 50 (see Fig. 1) may calculate the mass ratio Rm of carbon atoms and nitrogen atoms in the fertilizer source 22 based on a mutual ratio in a plurality of inorganic components N. In the present example, the arithmetic apparatus 50 calculates the mass ratio Rm based on the ratio of the component N1 to the component N3. The arithmetic apparatus 50 may select one or more fertilizer sources 22, based on the mass ratio Rm, which is calculated based on the mutual ratio of the plurality of inorganic components N. The arithmetic apparatus 50 may calculate the mixing ratio Rx of the plurality of fertilizer sources 22, based on the mass ratio Rm, which is calculated based on the mutual ratio of the plurality of inorganic components N. When one fertilizer source 22 cannot be calculated based on the mass ratio Rm, the arithmetic apparatus 50 may calculate the mixing ratio Rx of the plurality of fertilizer sources 22. When calculating the mixing ratio Rx of the plurality of fertilizer sources 22, the arithmetic apparatus 50 may calculate the mixing ratio Rx by prioritizing the fertilizer source 22 having a large inventory amount As (see Fig. 11) of the fertilizer source 22.

In the example of Fig. 11, assuming that the threshold value Rth is 10, the unknown a is calculated to be 0.4 by Expression 1. Accordingly, a mixing ratio Cx between the fertilizer source 22 with the name F1 and the fertilizer source 22 with the name F3 in the present example is calculated to be 2:3.

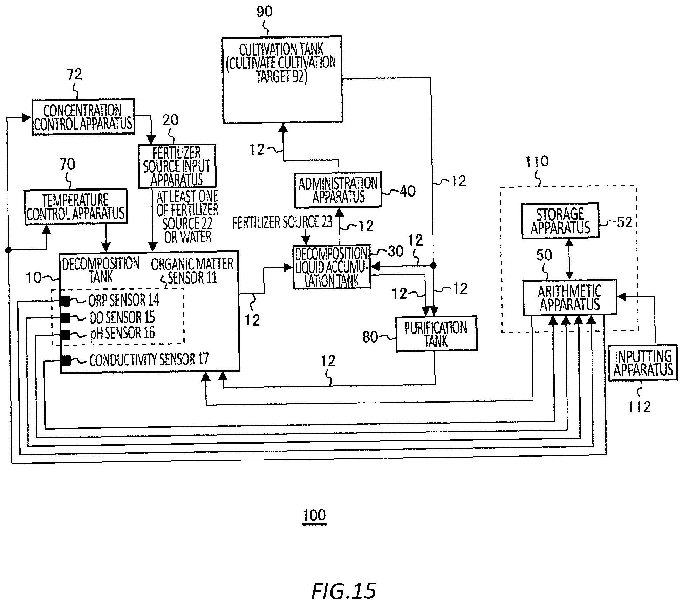

Fig. 15 shows another example of the cultivation apparatus 100 according to one embodiment of the present invention. In the present example, an organic matter sensor 11 and a conductivity sensor 17 are provided in the decomposition tank 10. In the present example, the cultivation apparatus 100 further includes a temperature control apparatus 70 and a concentration control apparatus 72. The cultivation apparatus 100 of the present example is different from the cultivation apparatus 100 shown in Fig. 1 in these points. In the present example, the control apparatus 110 further includes a storage apparatus 52. In Fig. 15, the decomposition tank 10-1 to the decomposition tank 10-3 shown in Fig. 1 are shown as one decomposition tank 10. In Fig. 15, the cultivation tank 90-1 to the cultivation tank 90-4 shown in Fig. 1 are shown as one cultivation tank 90.

The arithmetic apparatus 50 may calculate the concentration Df (see Figs. 9 and 12) of the fertilizer source 22 of the liquid 13 under the decomposition condition Cd. The concentration control apparatus 72 may control the concentration of the fertilizer source 22 of the liquid 13 based on the concentration Df calculated by the arithmetic apparatus 50. The concentration control apparatus 72 may control the concentration of the fertilizer source 22 of the liquid 13 by controlling the fertilizer source input apparatus 20. The concentration control apparatus 72 may control the concentration of the fertilizer source 22 such that the concentration of the fertilizer source 22 of the liquid 13 becomes the concentration Df calculated by the arithmetic apparatus 50.

The concentration control apparatus 72 may control the concentration of the fertilizer source 22 of the liquid 13 by performing control such that the fertilizer source input apparatus 20 inputs at least one of the fertilizer source 22 or $H_2O$ (water) to the liquid 13. The liquid 13 into which at least one of the fertilizer source 22 or $H_2O$ (water) is input may be the decomposition liquid 12 purified by the purification tank 80.

The arithmetic apparatus 50 may determine whether the concentration of the fertilizer source 22 in the decomposition liquid 12 is equal to or more than a first threshold value and equal to or less than a second threshold value. The first threshold value is defined as a threshold value Rt1. The second threshold value is defined as a threshold value Rt2. The threshold value Rt1 may be a minimum value of the concentration of the fertilizer source 22 which allows the active state of the microorganisms in the decomposition liquid 12 to be maintained. The threshold value Rt2 may be a maximum value of the concentration of the fertilizer source 22 which allows the active state of the microorganisms in the decomposition liquid 12 to be maintained. The concentration control apparatus 72 may control the concentration of the fertilizer source 22 of the liquid 13 when the arithmetic apparatus 50 determines that the concentration of the fertilizer source 22 is equal to or more than the first threshold value Rt1 and equal to or less than the second threshold value Rt2.

When the arithmetic apparatus 50 determines that the concentration of the fertilizer source 22 is less than the first threshold value Rt1, the concentration control apparatus 72 may control the concentration of the fertilizer source 22 of the liquid 13 such that the concentration of the fertilizer source 22 becomes a concentration equal to or more than the first threshold value Rt1. The concentration control apparatus 72 may control the fertilizer source input apparatus 20 such that the fertilizer source input apparatus 20 inputs, into the liquid 13, such an amount of the fertilizer source 22 that allows the concentration of the fertilizer source 22 to be a concentration equal to or more than the first threshold value Rt1. Accordingly, the active state of microorganisms in the decomposition liquid 12 can be maintained.

When the fertilizer source input apparatus 20 inputs, into the decomposition liquid 12, such an amount of the fertilizer source 22 that allows the concentration of the fertilizer source 22 to be a concentration equal to or more than the first threshold value Rt1, such that the concentration D (see Figs. 5, 7, and 12) of the inorganic component N exceeds the concentration D of the inorganic component N in the nutrient component profile Pf, the fertilizer source input apparatus 20 may input $H_2O$ (water) to the liquid 13. The fertilizer source input apparatus 20 may dilute the liquid 13 by inputting $H_2O$ (water) into the liquid 13.

When the arithmetic apparatus 50 determines that the concentration of the fertilizer source 22 exceeds the second threshold value Rt2, the concentration control apparatus 72 may control the concentration of the fertilizer source 22 of the liquid 13 such that the concentration of the fertilizer source 22 becomes a concentration equal to or less than the second threshold value Rt2. The concentration control apparatus 72 may control the fertilizer source input apparatus 20 such that the fertilizer source input apparatus 20 inputs, into the liquid 13, such an amount of at least one of the fertilizer source 22 or $H_2O$ (water) that allows the concentration of the fertilizer source 22 to be a concentration equal to or less than the second threshold value Rt2. Accordingly, the active state of the microorganisms in the liquid 13 can be maintained.

When the concentration of the fertilizer source 22 calculated by the arithmetic apparatus 50 exceeds the concentration of the second threshold value Rt2, the fertilizer source input apparatus 20 may input, into the liquid 13, such an amount of the fertilizer source 22 that allows the concentration to be the concentration of the second threshold value Rt2. The arithmetic apparatus 50 may notify the user of the cultivation apparatus 100 of the shortage of the fertilizer source 22. The cultivation apparatus 100 may include a reserve tank for reserving the surplus decomposition liquid 12. When the decomposition liquid 12 having a concentration equal to or more than the second threshold value Rt2 is reserved in the reserve tank, the administration apparatus 40 may administer the reserved decomposition liquid 12 to the cultivation target 92.

The decomposition tank 10 may be provided with an oxidation reduction potential (ORP) sensor 14, a dissolved oxygen (DO) sensor 15, and a pH sensor 16. The ORP sensor 14, the DO sensor 15, and the pH sensor 16 may be included in the organic matter sensor 11.

The ORP sensor 14 measures an oxidation reduction potential in the liquid 13. The DO sensor 15 measures a dissolved oxygen concentration in the liquid 13. The pH sensor 16 measures the pH of the liquid 13. The conductivity sensor 17 measures the electrical conductivity of the liquid 13.

The organic matter sensor 11 measures the concentration of the organic matter 24 in the liquid 13. The organic matter sensor 11 may be provided in the decomposition tank 10. The organic matter sensor 11 may measure the concentration of the organic matter 24 in the liquid 13 in the decomposition tank 10. The organic matter sensor 11 may measure the concentration of the organic matter 24 contained in the fertilizer source 22 and not mineralized by the decomposition tank 10.

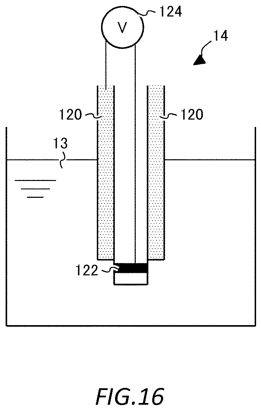

Fig. 16 shows an example of measurement of the oxidation reduction potential in the liquid 13 by the ORP sensor 14. The ORP sensor 14 may include a reference electrode 120, a wetted electrode 122, and a voltmeter 124. The reference electrode 120 is not in contact with the liquid 13. The wetted electrode 122 is in contact with the liquid 13. The potential of the reference electrode 120 is maintained to be a constant potential regardless of the measurement target of the oxidation reduction potential. The voltmeter 124 measures a potential difference between the reference electrode 120 and the wetted electrode 122.

The potential difference between the reference electrode 120 and the wetted electrode 122 is defined as a potential difference Eh. The potential of the reference electrode 120 is defined as a potential $Eh_0$. The potential difference Eh is expressed by following Expression 2 called the Nernst equation.

(Mathematical expression 2)

$$Eh = Eh_0 + \frac{RT}{nF} \ln \frac{Ox}{Red} \qquad (2)$$

Here, R is a gas constant, T is an absolute temperature, n is the number of reaction electrons, F is a Faraday constant, and Ox is the concentration of an oxidant in the liquid 13. The oxidant in the liquid 13 may refer to dissolved oxygen in the liquid 13. Red is the concentration of a reductant in the liquid 13.

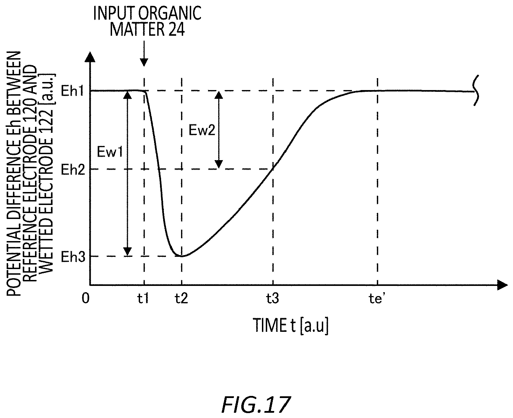

Fig. 17 shows an example of a relationship between the voltage of the liquid 13 measured by the ORP sensor 14 and time. The voltage of the liquid 13 refers to a potential difference between the reference electrode 120 (see Fig. 16) and the wetted electrode 122 (see Fig. 16).

It is assumed that the potential difference Eh is a certain potential difference Eh1 at the time zero. It is assumed that the organic matter 24 is input into the decomposition liquid 12 at a time t1. It is assumed that a time t3 is the current time. Since the organic matter 24 is a reductant, the concentration Red of the reductant in Expression 1 increases from the time t1. Therefore, the potential difference Eh starts to decrease from the time t1.

When the organic matter 24 is decomposed by the decomposition tank 10, and the concentration Red of the reductant continues to decrease, the concentration of the oxidant and the concentration of the reductant in the liquid 13 become equal at a certain time t2. At this time t2, the potential difference Eh becomes equal to the potential $Eh_0$ in Expression 1. The potential difference Eh at the time t2 is the minimum value of the potential difference Eh. The minimum value of the potential difference Eh is defined as a potential difference Eh3. From the time t2, the concentration of the oxidant in the liquid 13 becomes higher than the concentration of the reductant. Therefore, the potential difference Eh starts to increase.

When all the organic matters 24 are decomposed by the decomposition tank 10, and the concentration Red of the reductant becomes zero, the potential difference Eh becomes equal to the potential difference Eh1 at the time zero. From the time t2, the potential difference Eh converges to the potential difference Eh1 with the lapse of time. The time at which the potential difference Eh converges to the potential difference Eh1 is defined as a time te'.

A difference between the potential difference Eh1 and the potential difference Eh3 is defined as a difference Ew1. A difference between the potential difference Eh1 and the potential difference Eh2 is defined as a difference Ew2. The amount of the organic matter 24 input into the liquid 13 at the time t1 is defined as an amount Ag1. The amount of the organic matter 24 contained in the decomposition liquid 12 at the time t3 is defined as an amount Ag2. The amount Ag2 is represented by following Expression 3.

(Mathematical expression 3)

$$Ag2 = Ag1 \times \frac{Ew2}{Ew1} \qquad (3)$$

The concentration of the organic matter 24 in the decomposition liquid 12 at the time t3 may be calculated by Expression 3. Note that a concentration Ox of the oxidant in Expression 2 may be measured by the DO sensor 15.

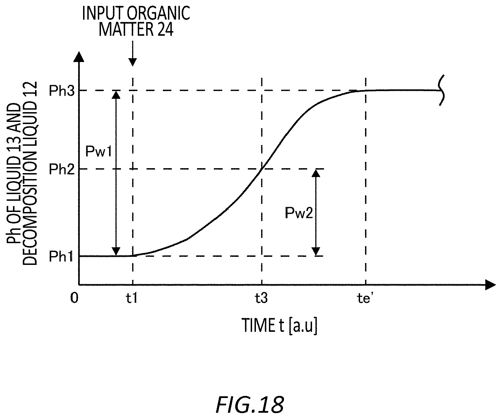

Fig. 18 shows an example of a relationship between the pH of the liquid 13 and the decomposition liquid 12 measured by the pH sensor 16 and time. The pH of the liquid 13 at the time zero is defined as pH1. Similarly to Fig. 17, it is assumed that the organic matter 24 is input into the liquid 13 at the time t1, and the time t3 is the current time. The pH of the liquid 13 at the time t3 is defined as pH2.

Since the organic matter 24 is a reductant, the pH of the liquid 13 starts to increase from the time t1. When all the organic matter 24 is decomposed by the decomposition tank 10, the pH of the decomposition liquid 12 converges to a constant value. The constant value is defined as pH3. At the time te', the pH of the decomposition liquid 12 converges to pH3. The organic matter 24 is decomposed into $NH_4^+$ (ammonium ion) in the decomposition liquid 12.

A difference between Ph3 and Ph1 is defined as a difference Pw1. A difference between Ph2 and Ph1 is defined as a difference Pw2. As described above, the amount of the organic matter 24 input into the decomposition tank 10 at the time t1 is defined as the amount Ag1, and the amount of the organic matter 24 contained in the liquid 13 at the time t3 is defined as the amount Ag2. A relationship between the amount Ag1 and the difference Pw1 may be measured in advance. The relationship between the amount Ag1 and the difference Pw1 is defined as a relationship Re. The relationship Re may be stored in the storage apparatus 52 (see Fig. 15).

The amount Ag2 is represented by following Expression 4.

(Mathematical expression 4)

$$Ag2 = Ag1 \times \frac{Pw2}{Pw1} \qquad (4)$$

The concentration of the organic matter 24 in the liquid 13 at the time t3 may be calculated by Expression 4, based on Ph2 measured by the pH sensor 16 and the relationship R stored in the storage apparatus 52.

The arithmetic apparatus 50 (see Fig. 15) may calculate the decomposition condition Cb based on the concentration of the organic matter 24 measured by the organic matter sensor 11. The decomposition condition Cb may be a decomposition condition Cb that the concentration of the organic matter 24 in the decomposition liquid 12 becomes a predetermined concentration. The predetermined concentration of the organic matter 24 may be different for each type of the cultivation target 92 (see Fig. 15).

When the decomposition liquid 12 containing the organic matter 24 is administered to the cultivation target 92 (see Fig. 15), the organic matter 24 may apply stress to the cultivation target 92. When stress is applied to the cultivation target 92, the color of the grown cultivation target 92 may change as compared with a case where stress is not applied. When the cultivation target 92 is lettuce, and the stress is applied to the lettuce, the color of a part of the lettuce may become red. As described above, when the decomposition liquid 12 containing the organic matter 24 is administered to the cultivation target 92, the cultivation apparatus 100 (see Fig. 15) can grow the cultivation target 92 which stimulates the purchase desire of a consumer.

The temperature control apparatus 70 controls the temperature of the liquid 13. The temperature control apparatus 70 (see Fig. 15) may control the temperature of the liquid 13 based on the concentration of the organic matter 24 measured by the organic matter sensor 11. The temperature control apparatus 70 may control the temperature of the liquid 13 in the decomposition tank 10. The temperature of the liquid 13 is defined as a temperature T.

The arithmetic apparatus 50 (see Fig. 15) may calculate the temperature T of the liquid 13 at which the concentration of the organic matter 24 in the decomposition liquid 12 becomes a predetermined concentration at a predetermined time. The predetermined time is defined as a time th. The predetermined concentration is defined as a concentration dh. The time th may be a time desired by the user of the cultivation apparatus 100. The concentration dh may be a concentration desired by the user of the cultivation apparatus 100. The temperature T of the decomposition liquid 12 calculated by the arithmetic apparatus 50 is defined as a temperature Ta.

The temperature control apparatus 70 (see Fig. 15) may control the temperature T of the liquid 13 such that the temperature T of the liquid 13 becomes the temperature Ta. When the temperature T is in a desired range, the organic matter 24 input into the decomposition tank 10 is easily mineralized quickly by microorganisms than that in a case where the temperature T is out of the desired range. The temperature Ta may be one temperature T in the desired range. The temperature control apparatus 70 controls the temperature T of the liquid 13, such that the user of the cultivation apparatus 100 can control the concentration of the organic matter 24 in the decomposition liquid 12.

The arithmetic apparatus 50 (see Fig. 15) may correct the nutrient component profile Pf based on the concentration of the organic matter 24 measured by the organic matter sensor 11. The nutrient component profile Pf can be an assumed profile of the inorganic matter in the decomposition liquid 12. Therefore, the concentration of the inorganic matter based on the nutrient component profile Pf can be different from the concentration of the inorganic matter generated by the decomposition of the organic matter 24. By correcting the nutrient component profile Pf based on the concentration of the organic matter 24, the nutrient component profile Pf can be a more accurate profile reflecting a more accurate concentration of the inorganic matter.

The arithmetic apparatus 50 (see Fig. 15) may calculate the decomposition condition Cb based on the nutrient component profile Pf corrected based on the concentration of the organic matter 24. Accordingly, the decomposition condition Cb can be a more accurate decomposition condition Cb than the case based on the nutrient component profile Pf before correction.

The arithmetic apparatus 50 (see Fig. 15) may calculate the decomposition condition Cb based on the pH of the liquid 13 measured by the pH sensor 16 (see Fig. 15). The decomposition condition Cb may be a decomposition condition Cb that the concentration of the organic matter 24 in the decomposition liquid 12 becomes a predetermined concentration. The fertilizer source input apparatus 20 (see Fig. 15) may input at least one of the fertilizer source 22 or $H_2O$ (water) into the liquid 13 based on the calculated decomposition condition Cb. As described above, when the organic matter 24 is decomposed into $NH_4^+$ (ammonium ion), the pH of the liquid 13 increases. When the increase rate of the pH of the liquid 13 measured by the pH sensor 16 is lower than a predetermined rate, the fertilizer source input apparatus 20 may input the fertilizer source 22 into the liquid 13. Accordingly, the increase rate of the pH of the liquid 13 can increase. When the increase rate of the pH of the liquid 13 measured by the pH sensor 16 is higher than the predetermined rate, the fertilizer source input apparatus 20 may input $H_2O$ (water) into the liquid 13. Accordingly, the increase rate of the pH of the liquid 13 can decrease.

$NH_4^+$ (ammonium ion) in the liquid 13 can be further decomposed into $NO_2^-$ (nitrite ion) by microorganisms. When $NH_4^+$ (ammonium ion) is decomposed into $NO_2^-$ (nitrite ion) by microorganisms, the pH of the liquid 13 is more likely to decrease than before the decomposition. When the pH of the liquid 13 measured by the pH sensor 16 is lower than a predetermined pH, the fertilizer source input apparatus 20 may input the fertilizer source 22 into the liquid 13. The predetermined pH may be a pH desired by the user of the cultivation apparatus 100 (see Fig. 15). Accordingly, the pH of the liquid 13 becomes easier to rise than before the fertilizer source 22 is input. When the pH of the liquid 13 measured by the pH sensor 16 is higher than the predetermined pH, the fertilizer source input apparatus 20 may input $H_2O$ (water) into the liquid 13. Accordingly, the pH of the liquid 13 becomes more difficult to rise than before $H_2O$ (water) is input.

The arithmetic apparatus 50 (see Fig. 15) may calculate a timing to input the fertilizer source 22 into the liquid 13, based on the pH of the liquid 13 measured by the pH sensor 16. The arithmetic apparatus 50 may calculate the timing to input the fertilizer source 22 into the liquid 13, based on the measured pH of the liquid 13 and the nutrient component profile Pf. The fertilizer source input apparatus 20 may input the fertilizer source 22 into the liquid 13 at the timing calculated by the arithmetic apparatus 50.

The arithmetic apparatus 50 (see Fig. 15) may calculate the decomposition condition Cb based on the electrical conductivity of the liquid 13 measured by the conductivity sensor 17 (see Fig. 15). The decomposition condition Cb may be a decomposition condition Cb that the concentration of the organic matter 24 in the decomposition liquid 12 becomes a predetermined concentration. The fertilizer source input apparatus 20 (see Fig. 15) may input at least one of the fertilizer source 22 or $H_2O$ (water) into the liquid 13 based on the calculated decomposition condition Cb. As described above, $NH_4^+$ (ammonium ion) in the liquid 13 can be further decomposed into $NO_2^-$ (nitrite ion) by microorganisms. When $NH_4^+$ (ammonium ion) is decomposed into $NO_2^-$ (nitrite ion) by microorganisms, the electrical conductivity of the liquid 13 is more likely to decrease than before the decomposition.

When the electrical conductivity of the liquid 13 measured by the conductivity sensor 17 (see Fig. 15) is higher than a predetermined electrical conductivity, the fertilizer source input apparatus 20 may input the fertilizer source 22 into the liquid 13. The predetermined electrical conductivity may be an electrical conductivity desired by the user of the cultivation apparatus 100 (see Fig. 15). Accordingly, the electrical conductivity of the liquid 13 becomes easier to decrease than before the fertilizer source 22 is input. When the electrical conductivity of the liquid 13 measured by the conductivity sensor 17 (see Fig. 15) is lower than the predetermined electrical conductivity, the fertilizer source input apparatus 20 may input $H_2O$ (water) into the liquid 13. Accordingly, the electrical conductivity of the liquid 13 becomes easier to rise than before $H_2O$ (water) is input.

The arithmetic apparatus 50 (see Fig. 15) may calculate the timing to input the fertilizer source 22 into the liquid 13, based on the electrical conductivity of the liquid 13 measured by the conductivity sensor 17. The arithmetic apparatus 50 may calculate the timing to input the fertilizer source 22 into the liquid 13, based on the measured electrical conductivity of the liquid 13 and the nutrient component profile Pf. The fertilizer source input apparatus 20 may input the fertilizer source 22 into the liquid 13 at the timing calculated by the arithmetic apparatus 50.

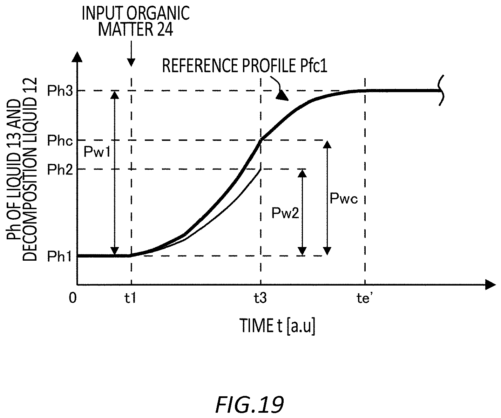

Fig. 19 shows an example of the relationship between the pH of the liquid 13 and the decomposition liquid 12 measured by the pH sensor 16 and time, together with a reference profile Pfc1. In Fig. 19, the reference profile Pfc1 is indicated by a thick solid line. The reference profile Pfc1 may be decided based on a plurality of measurement results of the relationship between the measured values of the pH of the liquid 13 and the decomposition liquid 12, and the time t. The reference profile Pfc1 may be an average of the plurality of measurement results. In Fig. 19, the relationship of a thin solid line from the time zero to the time t3 is the same as that in Fig. 18.

In the reference profile Pfc1, the PH of the liquid 13 at the time t3 is defined as PHc. A difference between PHc and PH1 is defined as a difference Pwc. The arithmetic apparatus 50 (see Fig. 15) may determine the magnitude of the pH of the liquid 13 measured by the pH sensor 16 and the predetermined reference profile Pfc1. The arithmetic apparatus 50 may calculate a difference between the pH of the liquid 13 measured by the pH sensor 16 at one time t and the pH on the reference profile Pfc1 at the one time t. In the present example, the arithmetic apparatus 50 determines the magnitude of the difference Pw2 and the difference Pwc at the time t3 and calculates a difference between the difference Pw2 and the difference Pwc. A difference (difference Pwc - difference Pw2) between the difference Pwc and the difference Pw2 is defined as a difference Pwd.

The temperature control apparatus 70 (see Fig. 15) may control the temperature of the liquid 13 based on the difference Pwd. When the difference Pwd is positive, the temperature control apparatus 70 may control to raise the temperature of the liquid 13. Accordingly, the decomposition of the organic matter 24 in the liquid 13 can be promoted. Accordingly, the pH of the liquid 13 can approach the reference profile Pfc1. When the difference Pwd is negative, the temperature control apparatus 70 may control to lower the temperature of the liquid 13. Accordingly, the decomposition of the organic matter 24 in the liquid 13 can be suppressed. Accordingly, the pH of the liquid 13 can approach the reference profile Pfc1.

The fertilizer source input apparatus 20 (see Fig. 15) may input one fertilizer source 22 into the liquid 13 based on the difference Pwd. When the difference Pwd is positive, the fertilizer source input apparatus 20 may input, into the liquid 13, the fertilizer source 22 having a mass ratio Rm smaller than the mass ratio Rm of the carbon atoms and nitrogen atoms contained in the fertilizer source 22 input into the liquid 13. Accordingly, the decomposition of the organic matter 24 in the liquid 13 can be promoted. Accordingly, the pH of the liquid 13 can approach the reference profile Pfc1. When the difference Pwd is negative, the fertilizer source input apparatus 20 may input, into the liquid 13, the fertilizer source 22 having a mass ratio Rm larger than the mass ratio Rm of the carbon atoms and nitrogen atoms contained in the fertilizer source 22 input into the liquid 13. Accordingly, the decomposition of the organic matter 24 in the liquid 13 can be suppressed. Accordingly, the pH of the liquid 13 can approach the reference profile Pfc1.

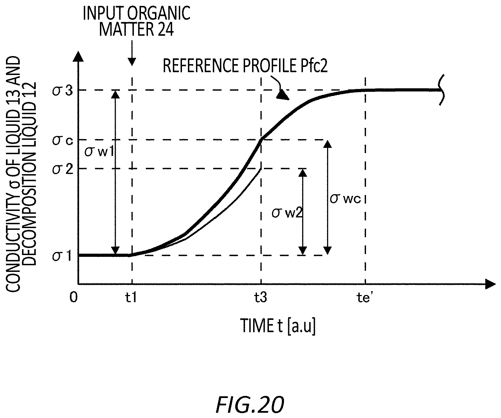

Fig. 20 shows an example of a relationship between the conductivity $\sigma$ of the liquid 13 and the decomposition liquid 12 measured by the conductivity sensor 17 and the time t, together with a reference profile Pfc2. In Fig. 20, the reference profile Pfc2 is indicated by a thick solid line. The reference profile Pfc2 may be decided based on a plurality of measurement results of the relationship between the measured values of the conductivity $\sigma$ of the liquid 13 and the decomposition liquid 12 and the time t. The reference profile Pfc2 may be an average of the plurality of measurement results.

The conductivity $\sigma$ of the liquid 13 at the time zero is defined as $\sigma1$. Similarly to Figs. 17 and 18, it is assumed that the organic matter 24 is input into the liquid 13 at the time t1, and the time t3 is the current time. The conductivity $\sigma$ of the liquid 13 at the time t3 is defined as $\sigma2$.

From the time t1 when the organic matter 24 is input, the conductivity $\sigma$ of the liquid 13 starts to increase. When all the organic matter 24 is decomposed by the decomposition tank 10, the conductivity $\sigma$ of the decomposition liquid 12 converges to a constant value. The constant value is defined as $\sigma3$. At time te', the conductivity $\sigma$ of the decomposition liquid 12 converges to $\sigma3$. A difference between $\sigma3$ and $\sigma1$ is defined as a difference $\sigma w1$. A difference between $\sigma2$ and $\sigma1$ is defined as a difference $\sigma w2$.

In the reference profile Pfc2, the conductivity $\sigma$ of the decomposition liquid 12 at the time t3 is defined as $\sigma c$. A difference between ac and $\sigma1$ is defined as a difference $\sigma wc$.

The arithmetic apparatus 50 (see Fig. 15) may determine the magnitude of the conductivity $\sigma$ of the liquid 13 measured by the conductivity sensor 17 and the predetermined reference profile Pfc2. The arithmetic apparatus 50 may calculate a difference between the conductivity of the liquid 13 measured by the conductivity sensor 17 at one time t and the conductivity $\sigma$ on the reference profile Pfc2 at the one time t. In the present example, the arithmetic apparatus 50 determines the magnitude of the difference $\sigma w2$ and the difference awc at the time t3 and calculates a difference between the difference $\sigma w2$ and the difference $\sigma wc$. A difference (difference awc - difference $\sigma w2$) between the difference awc and the difference $\sigma w2$ is defined as a difference awd.

The temperature control apparatus 70 (see Fig. 15) may control the temperature of the liquid 13 based on the difference owd. When the difference owd is positive, the temperature control apparatus 70 may control to raise the temperature of the liquid 13. Accordingly, the decomposition of the organic matter 24 in the liquid 13 can be promoted. Accordingly, the conductivity $\sigma$ of the liquid 13 can approach the reference profile Pfc2. When the difference owd is negative, the temperature control apparatus 70 may control to lower the temperature of the liquid 13. Accordingly, the decomposition of the organic matter 24 in the liquid 13 can be suppressed. Accordingly, the conductivity $\sigma$ of the liquid 13 can approach the reference profile Pfc2.

The fertilizer source input apparatus 20 (see Fig. 15) may input one fertilizer source 22 into the liquid 13 based on the difference owd. When the difference owd is positive, the fertilizer source input apparatus 20 may input, into the liquid 13, the fertilizer source 22 having a mass ratio Rm smaller than the mass ratio Rm of the carbon atoms and nitrogen atoms contained in the fertilizer source 22 input into the liquid 13. Accordingly, the decomposition of the organic matter 24 in the liquid 13 can be promoted. Accordingly, the conductivity $\sigma$ of the liquid 13 can approach the reference profile Pfc2. When the difference owd is negative, the fertilizer source input apparatus 20 may input, into the liquid 13, the fertilizer source 22 having a mass ratio Rm larger than the mass ratio Rm of the carbon atoms and nitrogen atoms contained in the fertilizer source 22 input into the liquid 13. Accordingly, the decomposition of the organic matter 24 in the liquid 13 can be suppressed. Accordingly, the conductivity $\sigma$ of the liquid 13 can approach the reference profile Pfc2.

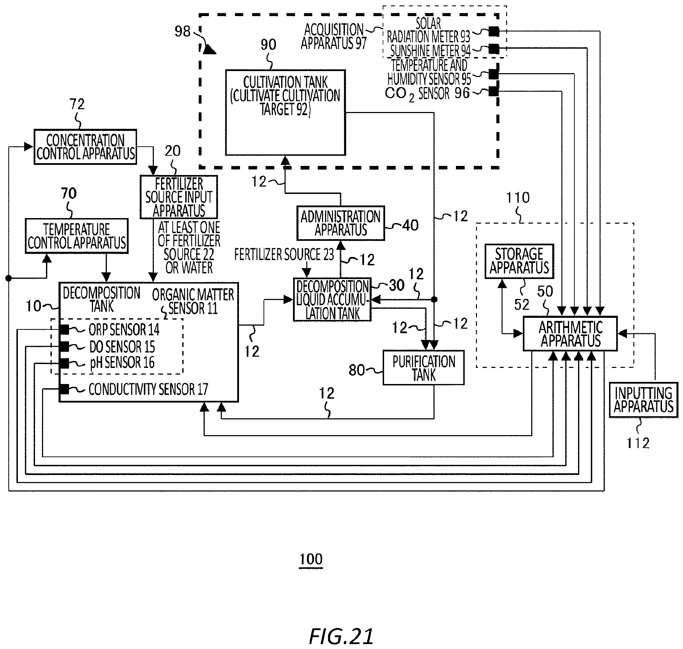

Fig. 21 shows another example of the cultivation apparatus 100 according to one embodiment of the present invention. In the present example, the cultivation target 92 is arranged in a cultivation space 98. The present example is different from the cultivation apparatus 100 shown in Fig. 15 in this respect. In Fig. 21, the cultivation space 98 is indicated by a thick rough broken line portion.

The cultivation space 98 may be a closed space or may be an open space. A case where the cultivation space 98 is a closed space is a case where the cultivation space 98 is, for example, a room, indoors, or the like. When the cultivation space 98 is a closed space, the closed space may be, for example, a room which allows ventilation or the like with respect to the outside of the cultivation space 98, and may not be a space 100% isolated from the outside of the cultivation space 98. A case where the cultivation space 98 is an open space is a case where the cultivation space 98 is, for example, outdoors.

The cultivation space 98 may be provided with an acquisition apparatus 97, a temperature and humidity sensor 95, and a $CO_2$ (carbon dioxide) sensor 96. The acquisition apparatus 97 may include a solar radiation meter 93 and a sunshine meter 94. The cultivation apparatus 100 may include the acquisition apparatus 97, the temperature and humidity sensor 95, and the $CO_2$ (carbon dioxide) sensor 96.

The acquisition apparatus 97 acquires at least one of an amount of solar radiation to the cultivation target 92 or a sunshine time. The temperature and humidity sensor 95 measures at least one of the air temperature or humidity of the cultivation space 98. The $CO_2$ (carbon dioxide) sensor 96 measures a $CO_2$ (carbon dioxide) concentration of the cultivation space 98. The solar radiation meter 93 measures an amount of solar radiation to the cultivation space 98. The solar radiation meter 93 may be a thermoelectric element. The sunshine meter 94 measures a sunshine time to the cultivation space 98.

When the cultivation space 98 is a closed space such as a room, the acquisition apparatus 97, the temperature and humidity sensor 95, and the $CO_2$ (carbon dioxide) sensor 96 may be provided on a wall, a ceiling, or the like of the room. When the cultivation space 98 is an open space such as outdoors, the acquisition apparatus 97, the temperature and humidity sensor 95, and the $CO_2$ (carbon dioxide) sensor 96 may be arranged at a distance less than a predetermined distance from the cultivation target 92, for example, in the cultivation tank 90. The predetermined distance is, for example, a distance at which the temperature and humidity sensor 95 is close enough to measure the air temperature around the cultivation target 92.

The arithmetic apparatus 50 may calculate the decomposition condition Cb based on at least one of the amount of solar radiation to the cultivation target 92 or the sunshine time acquired by the acquisition apparatus 97. The decomposition condition Cb may be a decomposition condition Cb that the concentration of the organic matter 24 in the decomposition liquid 12 becomes a predetermined concentration. The fertilizer source input apparatus 20 may input at least one of the fertilizer source 22 or $H_2O$ (water) into the decomposition liquid 12 based on the calculated decomposition condition Cb. The amount of solar radiation to the cultivation target 92 and the sunshine time may depend on the weather of a place in which the cultivation target 92 is cultivated. The consumption amount of the decomposition liquid 12 consumed by the cultivation target 92 can vary depending on the amount of solar radiation to the cultivation target 92 or the sunshine time. When the amount of solar radiation to the cultivation target 92 increases, and the sunshine time is lengthened, the cultivation target 92 consumes the decomposition liquid 12 relatively easily. Therefore, when the amount of solar radiation to the cultivation target 92 increases, and the sunshine time is lengthened, the concentration of the fertilizer source 22 in the decomposition liquid 12 decreases relatively easily. The decomposition condition Cb is calculated based on at least one of the amount of solar radiation to the cultivation target 92 or the sunshine time, and at least one of the fertilizer source 22 or $H_2O$ (water) is input into the liquid 13 based on the decomposition condition Cb, such that at least one of the fertilizer source 22 or $H_2O$ (water) in an amount reflecting at least one of the solar radiation amount or the sunshine time is easily input into the liquid 13.

The arithmetic apparatus 50 may calculate, as the decomposition condition Cb, the amount of at least one of the fertilizer source 22 or $H_2O$ (water) to be input into the liquid 13 based on at least one of the solar radiation amount or the sunshine time acquired by the acquisition apparatus 97. The fertilizer source input apparatus 20 may input, into the liquid 13, at least one of the fertilizer source 22 or $H_2O$ (water) in the amount calculated by the arithmetic apparatus 50. The arithmetic apparatus 50 may further calculate, as the decomposition condition Cb, a timing when at least one of the fertilizer source 22 or $H_2O$ (water) is input into the liquid 13 based on at least one of the solar radiation amount or the sunshine time acquired by the acquisition apparatus 97. The fertilizer source input apparatus 20 may input at least one of the fertilizer source 22 or $H_2O$ (water) into the liquid 13 at the timing calculated by the arithmetic apparatus 50.

The arithmetic apparatus 50 may correct at least one of the nutrient component profile Pf or the decomposition condition Cb based on at least one of the solar radiation amount or the sunshine time acquired by the acquisition apparatus 97. As described above, the consumption amount of the decomposition liquid 12 consumed by the cultivation target 92 can vary depending on the amount of solar radiation to the cultivation target 92 or the sunshine time. Therefore, the concentration of the inorganic matter in the decomposition liquid 12 can vary depending on the amount of solar radiation to the cultivation target 92 or the sunshine time. Therefore, the concentration of the inorganic matter based on the nutrient component profile Pf can be different from the actual concentration of the inorganic matter in the decomposition liquid 12.

When the solar radiation amount or the sunshine time acquired by the acquisition apparatus 97 is larger than a predetermined solar radiation amount or sunshine time, respectively, the arithmetic apparatus 50 may correct the nutrient component profile Pf such that the concentration of the inorganic matter based on the nutrient component profile Pf increases. When the solar radiation amount or the sunshine time acquired by the acquisition apparatus 97 is smaller than the predetermined solar radiation amount or sunshine time, respectively, the arithmetic apparatus 50 may correct the nutrient component profile Pf such that the concentration of the inorganic matter based on the nutrient component profile Pf decreases. The predetermined solar radiation amount and sunshine time are a solar radiation amount and a sunshine time in a normal year at a place and a timing in which the cultivation target 92 is cultivated, respectively, and may be the solar radiation amount and sunshine time disclosed by the Meteorological Agency, a weather forecasting company, or the like. By correcting the nutrient component profile Pf based on at least one of the solar radiation amount or the sunshine time, the nutrient component profile Pf can be a more accurate profile reflecting a more accurate concentration of the inorganic matter.

The arithmetic apparatus 50 may calculate the decomposition condition Cb based on the corrected nutrient component profile Pf. As described above, the decomposition condition Cb can include at least one of the concentration of one or more minerals in the decomposition liquid 12 (see Fig. 1), the purification amount and purification timing of the decomposition liquid 12 purified by the purification tank 80 (see Fig. 1), the temperature of the liquid 13, or the number of the decomposition tanks 10. The arithmetic apparatus 50 may correct at least one of the concentration of one or more minerals in the decomposition liquid 12, the purification amount and purification timing of the decomposition liquid 12 purified by the purification tank 80, the temperature of the liquid 13, or the number of the decomposition tanks 10.

The decomposition tank 10 may generate the decomposition liquid 12 based on the corrected decomposition condition Cb. The administration apparatus 40 may administer, to the cultivation target 92, the generated decomposition liquid 12.

The arithmetic apparatus 50 may calculate the decomposition condition Cb based on at least one of the air temperature or the humidity in the cultivation space 98 measured by the temperature and humidity sensor 95. The decomposition condition Cb may be a decomposition condition Cb that the concentration of the organic matter 24 in the decomposition liquid 12 becomes a predetermined concentration. The fertilizer source input apparatus 20 may input at least one of the fertilizer source 22 or $H_2O$ (water) into the liquid 13 based on the calculated decomposition condition Cb. The consumption amount of the decomposition liquid 12 consumed by the cultivation target 92 can vary depending on the air temperature or the humidity in the cultivation space 98. As the air temperature of the cultivation space 98 is a temperature and humidity more suitable for the cultivation target 92, the cultivation target 92 consumes the decomposition liquid 12 more easily. Therefore, as the air temperature of the cultivation space 98 is a temperature and humidity more suitable for the cultivation target 92, the concentration of the fertilizer source 22 in the decomposition liquid 12 decrease more easily. The decomposition condition Cb is calculated based on at least one of the air temperature or the humidity in the cultivation space 98, and at least one of the fertilizer source 22 or $H_2O$ (water) is input into the liquid 13 based on the decomposition condition Cb, such that at least one of the fertilizer source 22 or $H_2O$ (water) in an amount reflecting at least one of the air temperature or the humidity in the cultivation space 98 is easily input into the liquid 13.

The arithmetic apparatus 50 may calculate, as the decomposition condition Cb based, the amount of at least one of the fertilizer source 22 or $H_2O$ (water) to be input into the liquid 13 based on at least one of the air temperature and the humidity measured by the temperature and humidity sensor 95. The fertilizer source input apparatus 20 may input, into the liquid 13, at least one of the fertilizer source 22 or $H_2O$ (water) in the amount calculated by the arithmetic apparatus 50. The arithmetic apparatus 50 may further calculate, as the decomposition condition Cb, a timing when at least one of the fertilizer source 22 or $H_2O$ (water) is input into the liquid 13 based on at least one of the air temperature or the humidity measured by the temperature and humidity sensor 95. The fertilizer source input apparatus 20 may input at least one of the fertilizer source 22 or $H_2O$ (water) into the liquid 13 at the timing calculated by the arithmetic apparatus 50.

The arithmetic apparatus 50 may correct at least one of the nutrient component profile Pf or the decomposition condition Cb based on at least one of the air temperature or the humidity measured by the temperature and humidity sensor 95. As described above, the consumption amount of the decomposition liquid 12 consumed by cultivation target 92 can vary depending on the air temperature or humidity in the cultivation space 98. Therefore, the concentration of the inorganic matter in the decomposition liquid 12 can vary depending on the air temperature or humidity in the cultivation space 98. Therefore, the concentration of the inorganic matter based on the nutrient component profile Pf can be different from the actual concentration of the inorganic matter in the decomposition liquid 12.

When the air temperature and humidity measured by the temperature and humidity sensor 95 are larger than a predetermined air temperature and humidity, respectively, the arithmetic apparatus 50 may correct the nutrient component profile Pf such that the concentration of the inorganic matter based on the nutrient component profile Pf increases. When the air temperature and humidity measured by the temperature and humidity sensor 95 are lower than the predetermined air temperature and humidity, respectively, the arithmetic apparatus 50 may correct the nutrient component profile Pf such that the concentration of the inorganic matter based on the nutrient component profile Pf decreases. The predetermined air temperature and humidity are an air temperature and humidity in a normal year at the place and the timing in which the cultivation target 92 is cultivated, respectively, and may be an air temperature and humidity disclosed by the Meteorological Agency, a weather forecasting company, or the like. By correcting the nutrient component profile Pf based on at least one of the air temperature and the humidity, the nutrient component profile Pf can be a more accurate profile reflecting a more accurate concentration of the inorganic matter.

The arithmetic apparatus 50 may calculate the decomposition condition Cb based on the corrected nutrient component profile Pf. The decomposition tank 10 may generate the decomposition liquid 12 based on the corrected decomposition condition Cb. The administration apparatus 40 may administer, to the cultivation target 92, the generated decomposition liquid 12.

The arithmetic apparatus 50 may calculate the decomposition condition Cb based on the $CO_2$ (carbon dioxide) concentration of the cultivation space 98 measured by the $CO_2$ (carbon dioxide) sensor 96. The decomposition condition Cb may be a decomposition condition Cb that the concentration of the organic matter 24 in the decomposition liquid 12 becomes a predetermined concentration. The fertilizer source input apparatus 20 may input at least one of the fertilizer source 22 or $H_2O$ (water) into the liquid 13 based on the calculated decomposition condition Cb. The consumption amount of the decomposition liquid 12 consumed by the cultivation target 92 can vary depending on the $CO_2$ (carbon dioxide) concentration of the cultivation space 98. As the $CO_2$ (carbon dioxide) concentration of the cultivation space 98 is more suitable for the cultivation target 92, the cultivation target 92 consumes the decomposition liquid 12 more easily. Therefore, as the $CO_2$ (carbon dioxide) concentration of the cultivation space 98 is more suitable for the cultivation target 92, the concentration of the fertilizer source 22 in the decomposition liquid 12 decreases more easily. The decomposition condition Cb is calculated based on the $CO_2$ (carbon dioxide) concentration of the cultivation space 98, and at least one of the fertilizer source 22 or $H_2O$ (water) is input into the liquid 13 based on the decomposition condition Cb, such that at least one of the fertilizer source 22 or $H_2O$ (water) in an amount reflecting the $CO_2$ (carbon dioxide) concentration in the cultivation space 98 is easily input into the liquid 13.

The arithmetic apparatus 50 may calculate the amount of the fertilizer source 22 to be input into the liquid 13 based on the $CO_2$ (carbon dioxide) concentration measured by the $CO_2$ (carbon dioxide) sensor 96. The fertilizer source input apparatus 20 may input, into the liquid 13, the amount of the fertilizer source 22 calculated by the arithmetic apparatus 50. The arithmetic apparatus 50 may further calculate a timing for inputting the fertilizer source 22 into the liquid 13, based on the $CO_2$ (carbon dioxide) concentration measured by the $CO_2$ (carbon dioxide) sensor 96. The fertilizer source input apparatus 20 may input the fertilizer source 22 into the liquid 13 at the timing calculated by the arithmetic apparatus 50.

The arithmetic apparatus 50 may correct at least one of the nutrient component profile Pf or the decomposition condition Cb based on the $CO_2$ (carbon dioxide) concentration measured by the $CO_2$ (carbon dioxide) sensor 96. As described above, the consumption amount of the decomposition liquid 12 consumed by the cultivation target 92 can vary depending on the $CO_2$ (carbon dioxide) concentration of the cultivation space 98. Therefore, the concentration of the inorganic matter in the decomposition liquid 12 can vary depending on the $CO_2$ (carbon dioxide) concentration of the cultivation space 98. Therefore, the concentration of the inorganic matter based on the nutrient component profile Pf can be different from the actual concentration of the inorganic matter in the decomposition liquid 12.

When the $CO_2$ (carbon dioxide) concentration measured by the $CO_2$ (carbon dioxide) sensor 96 is greater than or less than a predetermined $CO_2$ (carbon dioxide) concentration, the arithmetic apparatus 50 may correct the nutrient component profile Pf such that the concentration of the inorganic matter based on the nutrient component profile Pf increases. The arithmetic apparatus 50 may correct the nutrient component profile Pf based on a difference between the $CO_2$ (carbon dioxide) concentration measured by the $CO_2$ (carbon dioxide) sensor 96 and the predetermined $CO_2$ (carbon dioxide) concentration. The predetermined $CO_2$ (carbon dioxide) concentration may be a $CO_2$ (carbon dioxide) concentration optimal for the cultivation target 92, and may be different for each type of the cultivation target 92. By correcting the nutrient component profile Pf based on the $CO_2$ (carbon dioxide) concentration, the nutrient component profile Pf can be a more accurate profile reflecting a more accurate concentration of the inorganic matter.

The arithmetic apparatus 50 may correct at least one of the nutrient component profile Pf or the decomposition condition Cb based on at least one of the air temperature or the humidity measured by the temperature and humidity sensor 95 or the $CO_2$ (carbon dioxide) concentration measured by the $CO_2$ (carbon dioxide) sensor 96. The arithmetic apparatus 50 may correct at least one of the nutrient component profile Pf or the decomposition condition Cb based on at least one of the air temperature or the humidity measured by the temperature and humidity sensor 95 and the $CO_2$ (carbon dioxide) concentration measured by the $CO_2$ (carbon dioxide) sensor 96.

The arithmetic apparatus 50 may calculate the decomposition condition Cb based on the corrected nutrient component profile Pf. The decomposition tank 10 may generate the decomposition liquid 12 based on the corrected decomposition condition Cb. The administration apparatus 40 may administer, to the cultivation target 92, the generated decomposition liquid 12.

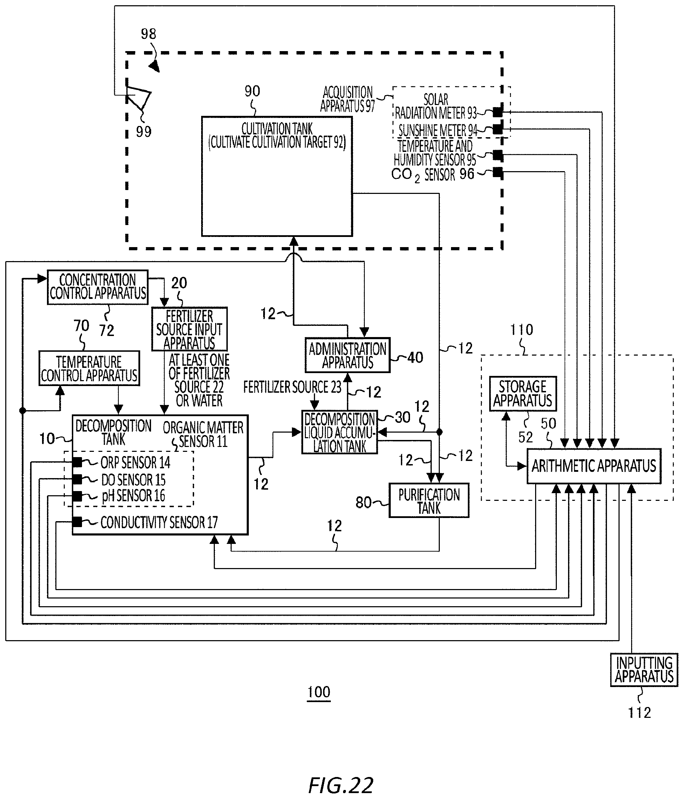

Fig. 22 shows another example of the cultivation apparatus 100 according to one embodiment of the present invention. In the present example, a growth state sensor 99 is arranged in the cultivation space 98. The present example is different from the cultivation apparatus 100 shown in Fig. 21 in this respect. The cultivation apparatus 100 may include the growth state sensor 99.

The growth state sensor 99 measures the growth state of the cultivation target 92. The growth state of the cultivation target 92 may be a height of the cultivation target 92. When the cultivation target 92 is a plant, the growth state of cultivation target 92 may be a flowering state of the plant, a mature state of a fruit of the plant, or a state of a leaf, a stem, or a root of the plant. The growth state sensor 99 is, for example, a camera.

The arithmetic apparatus 50 may calculate the decomposition condition Cb based on the growth state of the cultivation target 92 measured by the growth state sensor 99. The decomposition condition Cb may be a decomposition condition Cb that the concentration of the organic matter 24 in the decomposition liquid 12 becomes a predetermined concentration. The administration apparatus 40 may administer at least one of the decomposition liquid 12 or $H_2O$ (water) into the cultivation target 92 based on the calculated decomposition condition Cb. The actual growth state of the cultivation target 92 is easily reflected in the growth state of the cultivation target 92 measured by the growth state sensor 99. Therefore, the decomposition condition Cb is calculated based on the growth state of the cultivation target 92, and at least one of the decomposition liquid 12 or $H_2O$ (water) is administered to the cultivation target 92 based on the decomposition condition Cb, such that the administration apparatus 40 easily administers an appropriate amount of at least one of the decomposition liquid 12 or $H_2O$ (water) to the cultivation target 92.

The arithmetic apparatus 50 may calculate at least one of an amount or a timing for administering at least one of the decomposition liquid 12 or $H_2O$ (water) to the cultivation target 92, based on the growth state of the cultivation target 92 measured by the growth state sensor 99. The amounts of the decomposition liquid 12 and $H_2O$ (water) administered to the cultivation target 92 may be the mass or volume of the decomposition liquid 12 and $H_2O$ (water) administered to the cultivation target 92 per unit time, respectively. The administration apparatus 40 may administer, to the cultivation target 92, at least one of the decomposition liquid 12 or $H_2O$ (water) in the amount calculated by the arithmetic apparatus 50 at the timing calculated by the arithmetic apparatus 50.

The arithmetic apparatus 50 may correct the decomposition condition Cb based on the growth state of the cultivation target 92 measured by the growth state sensor 99. As described above, the actual growth state of the cultivation target 92 is easily reflected in the growth state of the cultivation target 92 measured by the growth state sensor 99. When the growth state of the cultivation target 92 measured by the growth state sensor 99 has not advanced as much as a predetermined growth state, the arithmetic apparatus 50 may correct the decomposition condition Cb such that the concentration of the inorganic matter in which a part of the organic matter 24 is mineralized increases. When the growth state of the cultivation target 92 measured by the growth state sensor 99 is advanced more than the predetermined growth state, the arithmetic apparatus 50 may correct the decomposition condition Cb such that the concentration of the inorganic matter in which a part of the organic matter 24 is mineralized decreases. The predetermined growth state may be determined based on at least one of an air temperature or humidity in a normal year at the place and the timing in which the cultivation target 92 is cultivated or a $CO_2$ (carbon dioxide) concentration in the place where cultivation target 92 is cultivated. The predetermined growth state may be a past record in the place and the timing in which the cultivation target 92 is cultivated. By correcting the decomposition condition Cb based on the growth state of the cultivation target 92, the decomposition condition Cb can be a more appropriate decomposition condition Cb.

The arithmetic apparatus 50 may correct the nutrient component profile Pf based on the growth state of the cultivation target 92 measured by the growth state sensor 99. When the growth state of the cultivation target 92 measured by the growth state sensor 99 has not advanced as much as the predetermined growth state described above, the arithmetic apparatus 50 may correct the nutrient component profile Pf such that the concentration of the inorganic matter based on the nutrient component profile Pf increases. When the growth state of the cultivation target 92 measured by the growth state sensor 99 is advanced more than the predetermined growth state, the arithmetic apparatus 50 may correct the nutrient component profile Pf such that the concentration of the inorganic matter based on the nutrient component profile Pf decreases. By correcting the nutrient component profile Pf based on the growth state of the cultivation target 92 measured by the growth state sensor 99, the nutrient component profile Pf can be a more appropriate profile.

The arithmetic apparatus 50 may correct the decomposition condition Cb based on the corrected nutrient component profile Pf. When the nutrient component profile Pf is corrected such that the concentration of the inorganic matter based on the nutrient component profile Pf increases, the arithmetic apparatus 50 may correct the decomposition condition Cb based on the nutrient component profile Pf such that the concentration of the inorganic matter in which a part of the organic matter 24 is mineralized increases. When the nutrient component profile Pf is corrected such that the concentration of the inorganic matter based on the nutrient component profile Pf decreases, the arithmetic apparatus 50 may correct the decomposition condition Cb based on the nutrient component profile Pf such that the concentration of the inorganic matter in which a part of the organic matter 24 is mineralized decreases. The decomposition tank 10 may generate the decomposition liquid 12 based on the corrected decomposition condition Cb. The administration apparatus 40 may administer, to the cultivation target 92, the generated decomposition liquid 12.

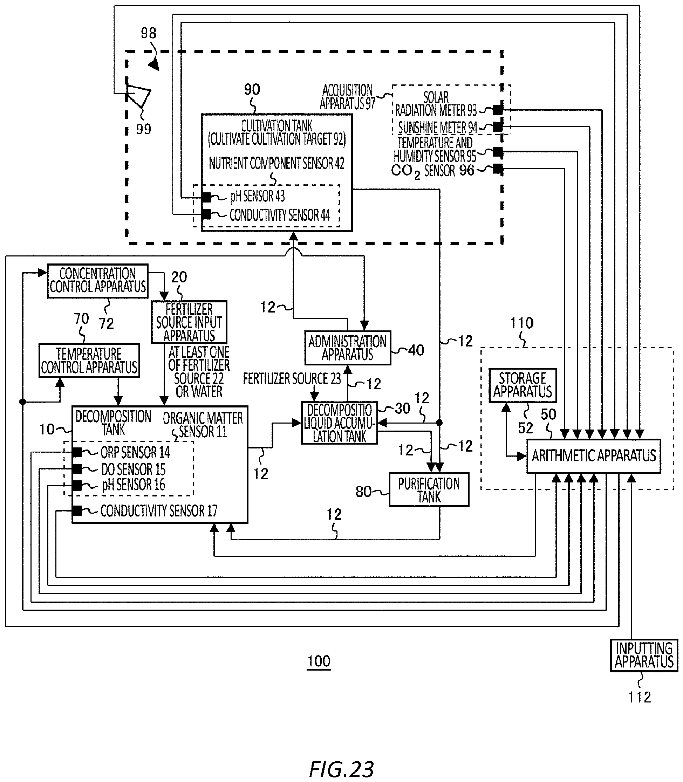

Fig. 23 shows another example of the cultivation apparatus 100 according to one embodiment of the present invention. In the present example, a nutrient component sensor 42 is further arranged in the cultivation space 98. The present example is different from the cultivation apparatus 100 shown in Fig. 22 in this respect.

The nutrient component sensor 42 measures the nutrient component of the decomposition liquid 12 administered to the cultivation target 92. In the present example, the nutrient component sensor 42 includes at least one of a pH sensor 43 or a conductivity sensor 44. The nutrient component sensor 42 may be provided in the cultivation tank 90.

$NH_4^+$ (ammonium ion) in the decomposition liquid 12 can be further decomposed into $NO_2^-$ (nitrite ion) by microorganisms. When $NH_4^+$ (ammonium ion) is decomposed into $NO_2^-$ (nitrite ion) by microorganisms, the pH of the decomposition liquid 12 is more likely to decrease than before the decomposition. Therefore, the pH sensor 43 can measure the nutrient component of the decomposition liquid 12 administered to the cultivation target 92. When $NH_4^+$ (ammonium ion) is decomposed into $NO_2^-$ (nitrite ion), the electrical conductivity of the decomposition liquid 12 is more likely to decrease than before the decomposition. Therefore, the conductivity sensor 44 can measure the nutrient component of the decomposition liquid 12 administered to the cultivation target 92.

The arithmetic apparatus 50 may calculate the decomposition condition Cb based on the nutrient component of the decomposition liquid 12 measured by the nutrient component sensor 42. The decomposition condition Cb may be a decomposition condition Cb that the concentration of the organic matter 24 in the decomposition liquid 12 becomes a predetermined concentration. The administration apparatus 40 may administer at least one of the decomposition liquid 12 or $H_2O$ (water) into the cultivation target 92 based on the calculated decomposition condition Cb. The actual nutrient component of the decomposition liquid 12 is easily reflected in the nutrient component of the decomposition liquid 12 measured by the nutrient component sensor 42. Therefore, the decomposition condition Cb is calculated based on the nutrient component of the decomposition liquid 12, and at least one of the decomposition liquid 12 or $H_2O$ (water) is administered to the cultivation target 92 based on the decomposition condition Cb, such that the administration apparatus 40 easily administers an appropriate amount of at least one of the decomposition liquid 12 or $H_2O$ (water) to the cultivation target 92.

The arithmetic apparatus 50 may calculate at least one of the amount or the timing for administering at least one of the decomposition liquid 12 or $H_2O$ (water) to the cultivation target 92, based on the nutrient component of the decomposition liquid 12 measured by the nutrient component sensor 42. The administration apparatus 40 may administer, to the cultivation target 92, at least one of the decomposition liquid 12 or $H_2O$ (water) in the amount calculated by the arithmetic apparatus 50 at the timing calculated by the arithmetic apparatus 50.

The arithmetic apparatus 50 may correct the decomposition condition Cb based on the nutrient component of the decomposition liquid 12 measured by the nutrient component sensor 42. As described above, the actual nutrient component of the decomposition liquid 12 is easily reflected in the nutrient component of the decomposition liquid 12 measured by the nutrient component sensor 42. When the concentration of the nutrient component of the decomposition liquid 12 measured by the nutrient component sensor 42 is larger than a predetermined concentration, the arithmetic apparatus 50 may correct the decomposition condition Cb such that the concentration of the inorganic matter in which a part of the organic matter 24 is mineralized decreases. When the concentration of the nutrient component of the decomposition liquid 12 measured by the nutrient component sensor 42 is smaller than the predetermined concentration, the arithmetic apparatus 50 may correct the decomposition condition Cb such that the concentration of the inorganic matter in which a part of the organic matter 24 is mineralized increases. By correcting the decomposition condition Cb based on the nutrient component of the decomposition liquid 12, the decomposition condition Cb can be a more appropriate decomposition condition Cb.

The arithmetic apparatus 50 may correct the nutrient component profile Pf based on the nutrient component of the decomposition liquid 12 measured by the nutrient component sensor 42. When the concentration of the nutrient component of the decomposition liquid 12 measured by the nutrient component sensor 42 is larger than the predetermined concentration, the arithmetic apparatus 50 may correct the nutrient component profile Pf such that the concentration of the inorganic matter based on the nutrient component profile Pf decreases. When the concentration of the nutrient component of the decomposition liquid 12 measured by the nutrient component sensor 42 is smaller than the predetermined concentration, the arithmetic apparatus 50 may correct the nutrient component profile Pf such that the concentration of the inorganic matter based on the nutrient component profile Pf increases. By correcting the nutrient component profile Pf based on the nutrient component of the decomposition liquid 12, the nutrient component profile Pf can be a more appropriate profile.

The arithmetic apparatus 50 may correct the decomposition condition Cb based on the corrected nutrient component profile Pf. When the nutrient component profile Pf is corrected such that the concentration of the inorganic matter based on the nutrient component profile Pf increases, the arithmetic apparatus 50 may correct the decomposition condition Cb based on the nutrient component profile Pf such that the concentration of the inorganic matter in which a part of the organic matter 24 is mineralized increases. When the nutrient component profile Pf is corrected such that the concentration of the inorganic matter based on the nutrient component profile Pf decreases, the arithmetic apparatus 50 may correct the decomposition condition Cb based on the nutrient component profile Pf such that the concentration of the inorganic matter in which a part of the organic matter 24 is mineralized decreases. The decomposition tank 10 may generate the decomposition liquid 12 based on the corrected decomposition condition Cb. The administration apparatus 40 may administer, to the cultivation target 92, the generated decomposition liquid 12.

The arithmetic apparatus 50 may correct the decomposition condition Cb or correct the nutrient component profile Pf based on the growth state of the cultivation target 92 measured by the growth state sensor 99 or the concentration of the nutrient component of the decomposition liquid 12 measured by the nutrient component sensor 42. The arithmetic apparatus 50 may correct the decomposition condition Cb or correct the nutrient component profile Pf based on the growth state of the cultivation target 92 measured by the growth state sensor 99 and the concentration of the nutrient component of the decomposition liquid 12 measured by the nutrient component sensor 42.

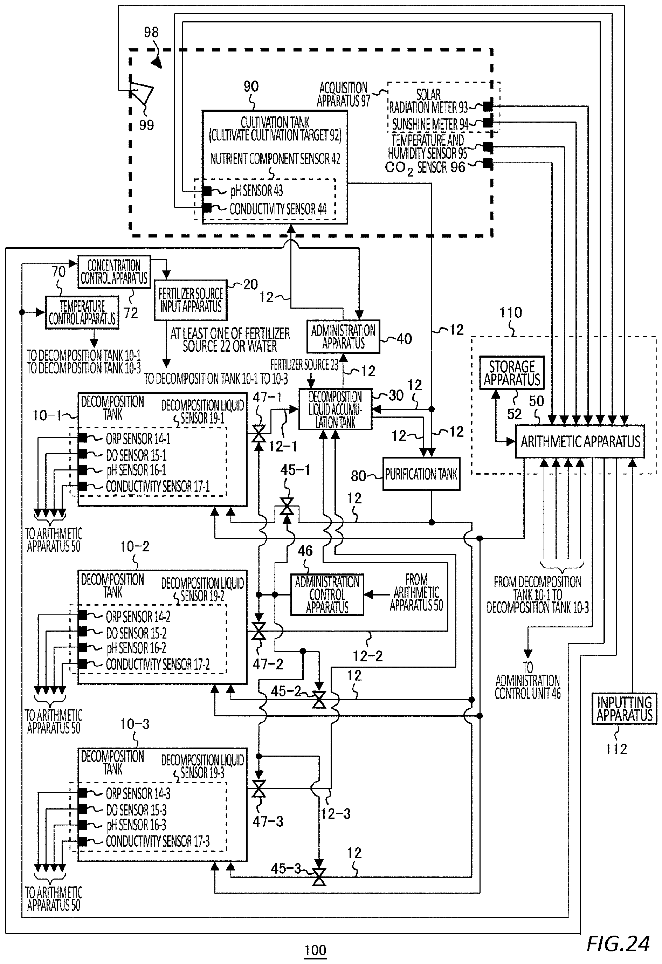

Fig. 24 shows another example of the cultivation apparatus 100 according to one embodiment of the present invention. In the present example, the decomposition tank 10 is provided with a decomposition liquid sensor 19. In the present example, the cultivation apparatus 100 further includes an administration control apparatus 46, a valve 47, and a valve 45. The cultivation apparatus 100 of the present example is different from the cultivation apparatus 100 shown in Fig. 23 in these points.

The decomposition liquid sensor 19 measures the component of the liquid 13. The component of the liquid 13 is defined as a component Co. The component Co of the liquid 13 may be a component of the inorganic matter in the liquid 13, or may be a component ratio of the inorganic matter. The component Co of the liquid 13 may be a component of the organic matter in the liquid 13, or may be a component ratio of the organic matter. The decomposition liquid sensor 19 may include the ORP sensor 14, the DO sensor 15, the pH sensor 16, and the conductivity sensor 17.

The decomposition liquid sensor 19 may be provided in the decomposition tank 10. A plurality of decomposition liquid sensors 19 may be provided in a plurality of decomposition tanks 10, respectively. In the present example, a decomposition liquid sensor 19-1 to a decomposition liquid sensor 19-3 are provided in the decomposition tank 10-1 to the decomposition tank 10-3, respectively.

When the administration apparatus 40 administers, to the cultivation target 92, the respective decomposition liquids 12 generated by the plurality of decomposition tanks 10, the administration control apparatus 46 controls respective timings. In the present example, the administration control apparatus 46 controls respective timings when the administration apparatus 40 administers, to the cultivation target 92, the decomposition liquid 12-1 to the decomposition liquid 12-3 respectively generated by the decomposition tank 10-1 to the decomposition tank 10-3, by controlling a valve 47-1 to a valve 47-3.

The decomposition liquid 12-1 to the decomposition liquid 12-3 administered to the cultivation target 92 may be purified by the purification tank 80. The decomposition liquid 12-1 to the decomposition liquid 12-3 purified by the purification tank 80 may be introduced into the decomposition tank 10. The administration control apparatus 46 may control the timing when each of the decomposition liquid 12-1 to the decomposition liquid 12-3 purified by the purification tank 80 is introduced into the decomposition tank 10, by controlling a valve 45-1 to a valve 45-3.

The arithmetic apparatus 50 may calculate the decomposition condition Cb based on the component of the liquid 13 measured by each of the plurality of decomposition liquid sensors 19. The decomposition condition Cb may be a decomposition condition Cb that the concentration of the organic matter 24 of the decomposition liquid 12 in each of the plurality of decomposition tanks 10 becomes a predetermined concentration. The respective decomposition conditions Cb for the plurality of decomposition tanks 10 may be different from each other. The administration apparatus 40 may administer at least one of the decomposition liquid 12 or $H_2O$ (water) into the cultivation target 92 based on the calculated decomposition condition Cb.

The arithmetic apparatus 50 may calculate the respective timings when the administration apparatus 40 administers, to the cultivation target 92, the respective decomposition liquids 12 generated by the plurality of decomposition tanks 10, based on the components of the respective liquids 13 measured by the respective decomposition liquid sensors 19 in the plurality of decomposition tanks 10. The administration control apparatus 46 may control the valve 47 such that the administration apparatus 40 administers the decomposition liquid 12 to the cultivation target 92 at each timing calculated by the arithmetic apparatus 50. The administration control apparatus 46 may control the valve 45 such that the decomposition liquid 12 purified by the purification tank 80 is introduced into the decomposition tank 10 at each timing calculated by the arithmetic apparatus 50.

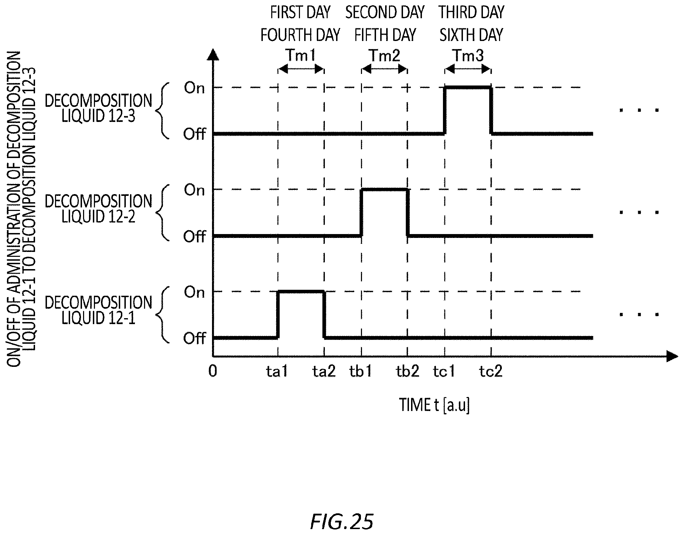

Fig. 25 is a timing chart showing an example of the administration timings of the decomposition liquid 12-1 to the decomposition liquid 12-3 to the cultivation target 92. In the present example, the decomposition liquid 12-1 is administered to the cultivation target 92 between a time ta1 and a time ta2, the decomposition liquid 12-2 is administered to the cultivation target 92 between a time tb1 and a time tb2, and the decomposition liquid 12-3 is administered to the cultivation target 92 between a time tc1 and a time tc2. A timing between the time ta1 and the time ta2 is defined as a timing Tm1. A timing between the time tb1 and the time tb2 is defined as a timing Tm2. A timing between the time tc1 and the time tc2 is defined as a timing Tm3.

The growth state of the cultivation target 92 (see Fig. 24) measured by the growth state sensor 99 (see Fig. 24) is defined as a growth state Sg. The nutrient component of the decomposition liquid 12 (see Fig. 24) measured by the nutrient component sensor 42 (see Fig. 24) is defined as a nutrient component Cn. The nutrient components of the decomposition liquid 12-1 to the decomposition liquid 12-3 measured by the nutrient component sensor 42 are defined as a nutrient component Cn-1 to a nutrient component Cn-3, respectively.

The administration control apparatus 46 (see Fig. 24) may control the administration apparatus 40 based on at least one of the growth state Sg or the nutrient component Cn such that the timing when one decomposition liquid 12 is administered to the cultivation target 92 is different from the timing when another decomposition liquid 12 is administered to the cultivation target 92. In the present example, the administration control apparatus 46 controls the administration apparatus 40 based on at least one of the growth state Sg or the nutrient component Cn such that the timing Tm1, the timing Tm2, and the timing Tm3 are different from each other.

The description that the timing Tm1, the timing Tm2, and the timing Tm3 are different from each other may refer that the timing Tm1, the timing Tm2, and the timing Tm3 do not overlap each other as shown in Fig. 25, or may refer that the timing Tm1, the timing Tm2, and the timing Tm3 partially overlap each other. For example, the time tb1 may be between the time ta1 and the time ta2, or the time tc1 may be between the time tb1 and the time tb2.

The timing Tm1 to the timing Tm3 may be dates. As shown in Fig. 25, the administration control apparatus 46 (see Fig. 24) may control the administration apparatus 40 such that the decomposition liquid 12-1 is administered to the cultivation target 92 (see Fig. 24) on the first day and the fourth day, the decomposition liquid 12-2 is administered to the cultivation target 92 on the second day and the fifth day, and the decomposition liquid 12-3 is administered to the cultivation target 92 on the third day and the sixth day. Note that the administration control apparatus 46 may control the valve 45-1 to the valve 45-3 such that the timing when the administration apparatus 40 administers one decomposition liquid 12 to the cultivation target 92 coincides with the timing when the one decomposition liquid 12 is introduced into the decomposition tank 10.

In the plurality of decomposition tanks 10, the decomposition state of the organic matter 24 (see Fig. 24) (that is, the generation state of the decomposition liquid 12) can be different for each decomposition tank 10. Therefore, when the administration control apparatus 46 (see Fig. 24) controls, based on at least one of the growth state Sg or the nutrient component Cn, the timing Tm1 to the timing Tm3 to be different, the administration apparatus 40 easily administers, to the cultivation target 92, the decomposition liquid 12 in the decomposition state suitable for the growth state Sg or the nutrient component Cn.

Based on at least one of the growth state Sg or the nutrient component Cn, the arithmetic apparatus 50 may calculate the timing when one decomposition liquid 12 is administered to the cultivation target 92 and the timing when another decomposition liquid 12 is administered to the cultivation target 92. The administration control apparatus 46 may control the administration apparatus 40 such that the administration apparatus 40 administers the decomposition liquid 12 at the timing of administering one decomposition liquid 12 and the timing of administering another decomposition liquid 12, the timings being calculated by the arithmetic apparatus 50.

When the administration control apparatus 46 (see Fig. 24) controls the administration apparatus 40 (see Fig. 24) so as not to administer the decomposition liquid 12 generated by one decomposition tank 10 to the cultivation target 92 (see Fig. 24), the temperature control apparatus 70 (see Fig. 24) may control the temperature of the liquid 13 in the one decomposition tank 10. In the present example, for example, the temperature control apparatus 70 controls the temperature of the liquid 13 in one decomposition tank 10-1 at at least one of the timing Tm2 or the timing Tm3 when the administration control apparatus 46 does not administer the decomposition liquid 12-1 generated by one decomposition tank 10-1.

The decomposition state of the organic matter 24 (see Fig. 24) in the decomposition tank 10 can vary depending on the temperature of the liquid 13. As the temperature of the liquid 13 is higher, the organic matter 24 is decomposed more easily. Therefore, when the temperature control apparatus 70 (see Fig. 24) controls the temperature of the liquid 13 in one decomposition tank 10 in the timing when the decomposition liquid 12 generated by the one decomposition tank 10 is not administered to the cultivation target 92, the liquid 13 easily becomes in a decomposition state suitable for the growth state Sg or the nutrient component Cn in the timing when the decomposition liquid 12 is administered.

When the administration control apparatus 46 (see Fig. 24) controls the administration apparatus 40 (see Fig. 24) so as not to administer the decomposition liquid 12 generated by one decomposition tank 10 to the cultivation target 92 (see Fig. 24), the fertilizer source input apparatus 20 (see Fig. 24) may input the fertilizer source 22 into the liquid 13 in the one decomposition tank 10. The arithmetic apparatus 50 (see Fig. 24) may calculate the timing when the fertilizer source input apparatus 20 inputs the fertilizer source 22 into the liquid 13 and an amount of the fertilizer source 22 input into the liquid 13 by the fertilizer source input apparatus 20. When the fertilizer source 22 is input into the liquid 13 in one decomposition tank 10 in the timing when the decomposition liquid 12 generated by the one decomposition tank 10 is not administered to the cultivation target 92, the liquid 13 easily becomes in a decomposition state suitable for the growth state Sg or the nutrient component Cn in the timing when the one decomposition liquid 12 is administered.

When the administration control apparatus 46 (see Fig. 24) controls the administration apparatus 40 (see Fig. 24) so as to administer the decomposition liquid 12 generated by one decomposition tank 10 to the cultivation target 92 (see Fig. 24), the fertilizer source input apparatus 20 (see Fig. 24) may input the fertilizer source 22 into the liquid 13 in the one decomposition tank 10. While the decomposition tank 10 generates the decomposition liquid 12 from the liquid 13, the generated decomposition liquid 12 may be administered to the cultivation target 92.

Based on the component Co of the liquid 13 measured by each of the plurality of decomposition liquid sensors 19 (see Fig. 24), the administration apparatus 40 (see Fig. 24) may administer each of the decomposition liquids 12 generated by the plurality of decomposition tanks 10 (see Fig. 24) to the cultivation target 92 (see Fig. 24). The respective decomposition liquids 12 generated by the plurality of decomposition tanks 10 may be mixed in the decomposition liquid accumulation tank 30. The administration apparatus 40 may administer, to the cultivation target 92, the decomposition liquid 12 mixed in the decomposition liquid accumulation tank 30.

As shown in Fig. 17, the ORP sensor 14 can measure the component Co of the liquid 13 by measuring the oxidation reduction potential in the decomposition liquid 12. The DO sensor 15 can measure the component Co of the liquid 13 by measuring the dissolved oxygen concentration in the liquid 13. As shown in Fig. 18, the pH sensor 16 can measure the component Co of the liquid 13 by measuring the pH of the liquid 13. The conductivity sensor 17 can measure the component Co of the liquid 13 by measuring the electrical conductivity of the liquid 13.

As described above, in the plurality of decomposition tanks 10, the decomposition state of the organic matter 24 (see Fig. 24) (that is, the generation state of the decomposition liquid 12) can be different for each decomposition tank 10. Therefore, the component Co of each liquid 13 in the plurality of decomposition tanks 10 can be different for each liquid 13. In the present example, the administration apparatus 40 administers the decomposition liquid 12 to the cultivation target 92 based on the component Co of each of the plurality of liquids 13. Therefore, the component Co of the decomposition liquid in which the plurality of decomposition liquids 12 are mixed easily becomes the component Co suitable for the growth state Sg or the nutrient component Cn.

Based on the components Co of the plurality of liquids 13, the administration apparatus 40 (see Fig. 24) may administer each decomposition liquid 12 to the cultivation target 92 (see Fig. 24) at the same timing or at different timings. The description that the administration apparatus 40 administers the decomposition liquid 12 at different timings refers, for example, that the administration apparatus 40 administers the decomposition liquid 12-1, the decomposition liquid 12-2, and the decomposition liquid 12-3 at timings different from each other.

The arithmetic apparatus 50 (see Fig. 24) may calculate a ratio of mixing the plurality of decomposition liquids 12, based on the component Co of the liquid 13 measured by each of the plurality of decomposition liquid sensors 19 (see Fig. 24). The plurality of decomposition liquids 12 may be mixed at the ratio in the decomposition liquid accumulation tank 30 (see Fig. 24). The administration apparatus 40 may administer, to the cultivation target 92 (see Fig. 24), the decomposition liquids 12 mixed at the ratio calculated by the arithmetic apparatus 50.

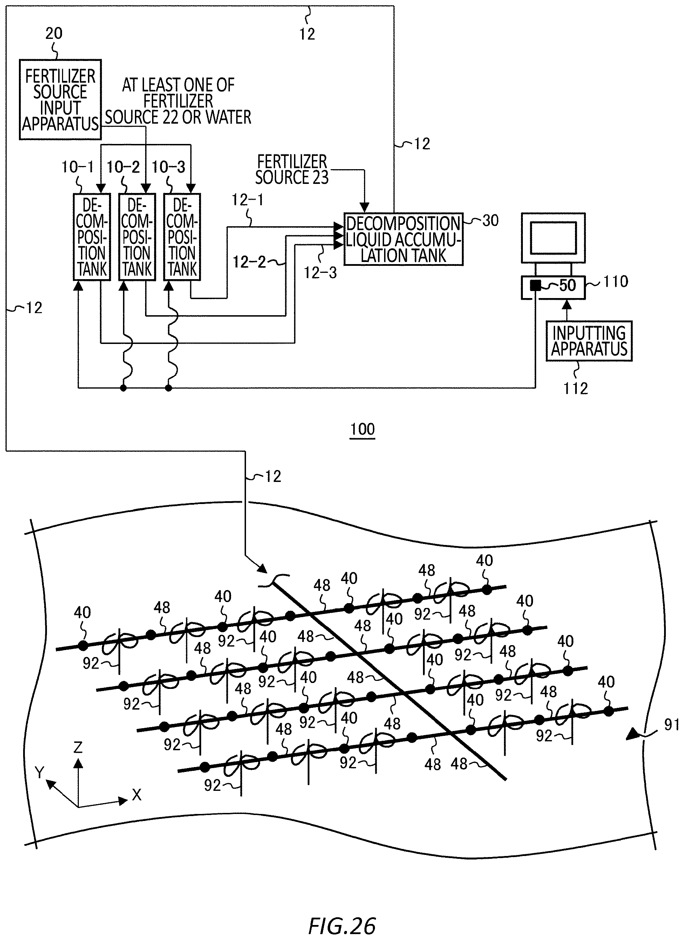

Fig. 26 shows another example of the cultivation apparatus 100 according to one embodiment of the present invention. In the present example, the cultivation target 92 is arranged in the soil 91. In the present example, the cultivation target 92 is not arranged in the cultivation tank 90 (see Fig. 1). The cultivation apparatus 100 of the present example does not include the purification tank 80. The cultivation apparatus 100 of the present example is different from the cultivation apparatus 100 shown in Fig. 1 in these points.

One direction in the soil 91 is defined as an X-axis direction. A plane parallel to the soil 91 is defined as an XY plane. A direction orthogonal to an X axis and a direction in the XY plane are defined as a Y-axis direction. A direction orthogonal to the XY plane is defined as a Z-axis direction. In the present example, the XY plane is a horizontal plane. In the present example, the Z-axis direction is a direction parallel to a vertical direction.

A plurality of pipes 48 is arranged above the soil 91. The pipe 48 is connected to the decomposition liquid accumulation tank 30. The plurality of pipes 48 may be arranged in the XY plane. The plurality of pipes 48 may be provided in the cultivation space 98 (see Figs. 21 to 24). The pipe 48 is provided with the administration apparatus 40.

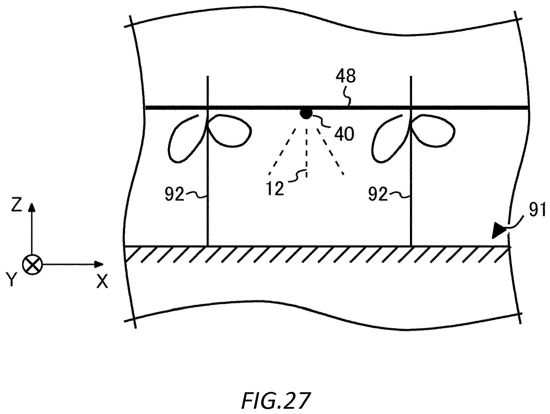

Fig. 27 is an enlarged view of the vicinity of the pipe 48 and the administration apparatus 40 in Fig. 26. Fig. 27 is a view of the vicinity of one pipe 48 and one administration apparatus 40 in Fig. 26 as viewed in the Y-axis direction. The pipe 48 may be provided above the soil 91. The pipe 48 is provided with the administration apparatus 40. In the present example, the administration apparatus 40 administers the decomposition liquid 12 to the soil 91. The administration apparatus 40 may administer the decomposition liquid 12 to the soil 91 from above the soil 91.

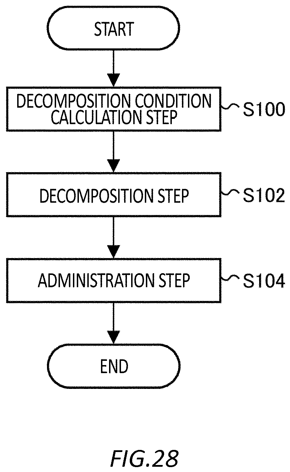

Fig. 28 is a flowchart illustrating an example of a cultivation method according to one embodiment of the present invention. A cultivation method according to one embodiment of the present invention will be described by using, as an example, the cultivation apparatus 100 shown in Fig. 26.

A decomposition condition calculation step S100 is a step in which the arithmetic apparatus 50 calculates the decomposition condition Cb in the decomposition tank 10, based on the nutrient component profile Pf (see Fig. 2) indicating the component to be contained in the decomposition liquid 12. The nutrient component profile Pf is a profile of an inorganic matter in the decomposition liquid 12. The nutrient component profile Pf may include a profile of the organic matter 24. The decomposition condition Cb is a condition for the decomposition tank 10 to generate the decomposition liquid 12 in which a predetermined proportion of the organic matter 24 is mineralized.

A decomposition step S102 is a step in which the decomposition tank 10 decomposes at least a part of the organic matter 24 contained in the fertilizer source 22 to generate the decomposition liquid 12 in which at least a part of the organic matter 24 is mineralized. The decomposition step S102 is a step in which the decomposition tank 10 generates the decomposition liquid 12 based on the decomposition condition Cb.

The fertilizer source 22 is, for example, fish soluble made from bonito, a corn immersion liquid, or the like. When the fertilizer source 22 is fish soluble made from bonito, the organic matter 24 is a bonito. When the fertilizer source 22 is a corn immersion liquid, the organic matter 24 is corn. The liquid obtained by mineralizing the organic matter 24 may refer to a liquid obtained by ammoniating the organic matter 24, or may refer to a liquid obtained by nitrifying the organic matter 24 (nitrification liquid).

The administration step S104 is a step in which the administration apparatus 40 administers, to the cultivation target 92, the decomposition liquid 12 generated in the decomposition step S102. The administration step S104 is a step in which the administration apparatus 40 administers, to the cultivation target 92, the decomposition liquid 12 generated based on the decomposition condition Cb. The decomposition liquid 12 contains nutrients for growth of the cultivation target 92. The nutrients are N (nitrogen), $H_3PO_4$ (phosphoric acid), K (potassium), and the like. The cultivation target 92 may be arranged in the cultivation tank 90, or may be arranged in the soil 91.

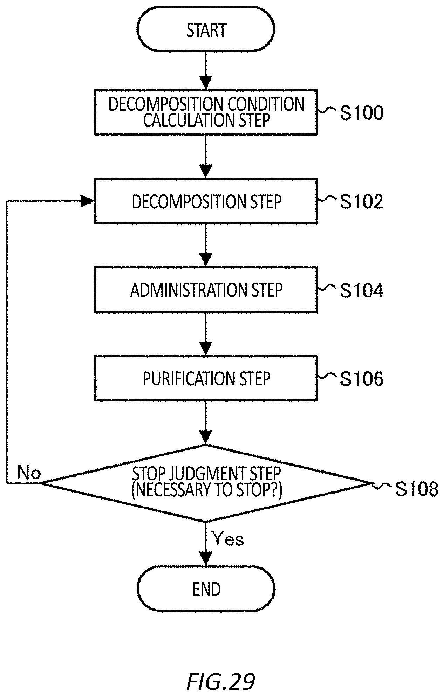

Fig. 29 is a flowchart showing another example of the cultivation method according to one embodiment of the present invention. The cultivation method of the present example is different from the cultivation method shown in Fig.

28 in that it further includes a purification step S106 and a stop judgment step S108. The cultivation method of the present example will be described by using, as an example, the cultivation apparatus 100 shown in Fig. 1.

The purification step S106 is a step in which the purification tank 80 purifies the decomposition liquid 12 administered to the cultivation tank 90 in the administration step S104. The purification of the decomposition liquid 12 refers to lowering the concentration of nitrate nitrogen in decomposition liquid 12. The purification of the decomposition liquid 12 may refer to removing components such as NaCl (sodium chloride) remaining in the decomposition liquid 12. The concentration of nitrate nitrogen in the decomposition liquid 12 may be adjusted by the purification tank 80. The concentration of NaCl (sodium chloride) in the decomposition liquid 12 may be adjusted by the purification tank 80. The decomposition liquid 12 purified by the purification tank 80 may be the liquid 13.

The stop judgment step S108 is a step in which the arithmetic apparatus 50 judges whether it is necessary to stop the operation of the cultivation apparatus 100. The stop judgment step S108 may be a step in which the arithmetic apparatus 50 judges the abnormality of the cultivation apparatus 100. The abnormality of the cultivation apparatus 100 is, for example, that the concentration of the organic matter 24 in the decomposition tank 10 is an abnormal value. The stop judgment step S108 may be a step in which the user of the cultivation apparatus 100 judges to stop the cultivation apparatus 100.

When it is judged in the stop judgment step S108 that it is necessary to stop the operation of the cultivation apparatus 100, the cultivation method stops the operation of the cultivation apparatus 100. When it is judged in the stop judgment step S108 that it is unnecessary to stop the operation of the cultivation apparatus 100, the cultivation method returns to the decomposition step S102. When the cultivation method returns to decomposition step S102, in the decomposition step S102, the decomposition tank 10 may further decompose the decomposition liquid 12 purified in the purification step S106.

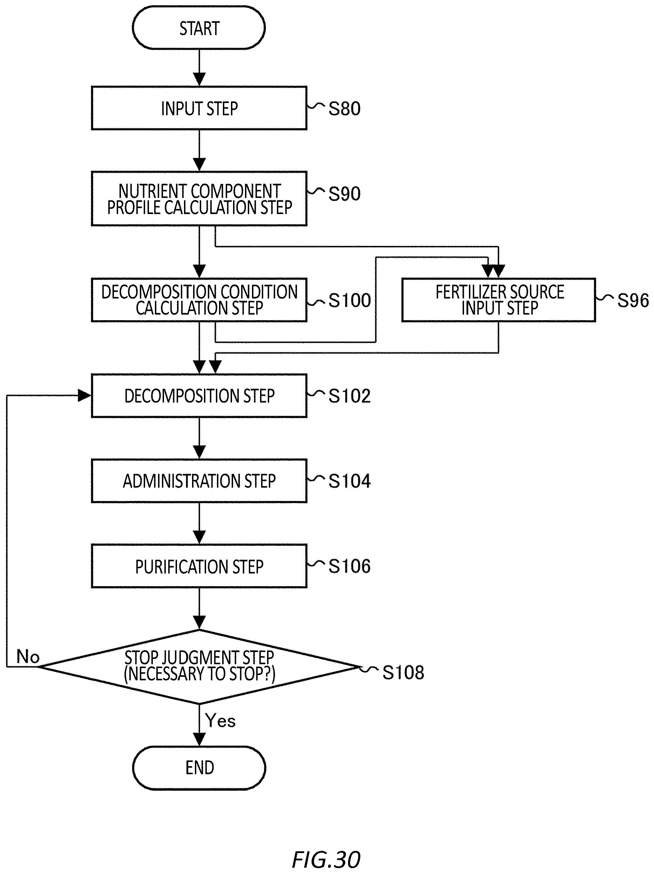

Fig. 30 is a flowchart showing another example of the cultivation method according to one embodiment of the present invention. The cultivation method of the present example is different from the cultivation method shown in Fig. 29 in that it further includes an input step S80, a nutrient component profile calculation step S90, and a fertilizer source input step S96. The cultivation method of the present example will be described by using, as an example, the cultivation apparatus 100 shown in Fig. 1.

The input step S80 is a step of inputting information on the cultivation target 92. The input step S80 may be a step in which the user of the cultivation apparatus 100 inputs the information on the cultivation target 92. The information on the cultivation target 92 may be information regarding at least one of a type of the cultivation target 92, an amount of the cultivation target 92, a season in which the cultivation target 92 is cultivated, or a region in which the cultivation target 92 is cultivated. The amount of the cultivation target 92 may be the mass of the cultivation target 92.

The nutrient component profile calculation step S90 is a step in which the arithmetic apparatus 50 calculates the nutrient component profile Pf based on the information on the cultivation target 92 input in the input step 580. Note that the nutrient component profile Pf may be input in the input step S80.

In the present example, the decomposition condition calculation step S100 is a step in which the arithmetic apparatus 50 calculates, as the decomposition condition Cb, the concentration of the inorganic matter in the decomposition liquid 12 at the predetermined time tp, based on the nutrient component profile Pf calculated in the nutrient component profile calculation step 590. The time tp may be one timing between the time zero and the time te shown in Fig. 2. The inorganic matter in the decomposition liquid 12 may be at least one of $NO_3^-$ (nitrate ion), $NO_2^-$ (nitrite ion), or $NH_4^+$ (ammonium ion).

The fertilizer source input step S96 is a step in which the fertilizer source input apparatus 20 inputs the fertilizer source 22 to the liquid 13 based on the nutrient component profile Pf calculated in the nutrient component profile calculation step 590. The decomposition condition Cb may include at least one of a timing when the fertilizer source input apparatus 20 inputs the fertilizer source 22 into the liquid 13 or an amount of the fertilizer source 22 input into the liquid 13 by the fertilizer source input apparatus 20. The fertilizer source input step S96 may be a step in which the fertilizer source input apparatus 20 inputs the fertilizer source 22 to the liquid 13 such that the concentration of the inorganic matter in the decomposition liquid 12 becomes the concentration calculated in the decomposition condition calculation step S100 at the time tp.

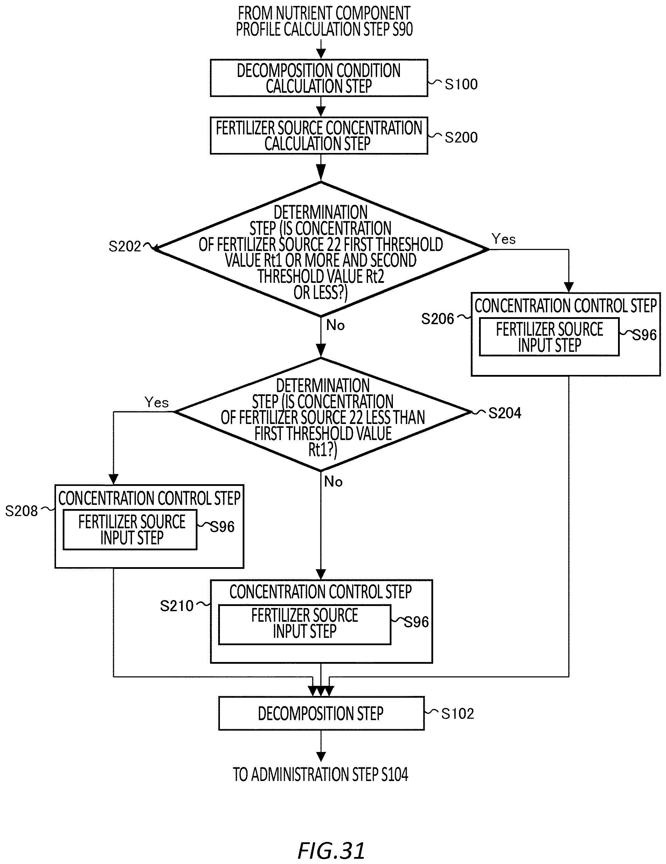

Fig. 31 is a flowchart showing an example of details of steps between the nutrient component profile calculation step S90 and the decomposition step S102 in Fig. 30. The cultivation method may further include a fertilizer source concentration calculation step S200, a determination step S202, a determination step 5204, a concentration control step S206, a fertilizer source input step S208, and a fertilizer source input step 5210. The cultivation method of Fig. 31 will be described by using, as an example, the cultivation apparatus 100 shown in Fig. 15.

The fertilizer source concentration calculation step 5200 is a step in which the arithmetic apparatus 50 calculates the concentration Df of the fertilizer source 22 of the liquid 13 under the decomposition condition Cd. The determination step 5202 is a step in which the arithmetic apparatus 50 determines whether the concentration of the fertilizer source 22 is equal to or more than the first threshold value Rt1 and equal to or less than the second threshold value Rt2. When it is determined in the determination step S202 that the concentration of the fertilizer source 22 is equal to or more than the first threshold value Rt1 and equal to or less than the second threshold value Rt2, the cultivation method proceeds to the concentration control step S206. When it is not determined in the determination step S202 that the concentration of the fertilizer source 22 is equal to or more than the first threshold value Rt1 and equal to or less than the second threshold value Rt2, the cultivation method proceeds to the determination step 5204.

The concentration control step S206 is a step in which the concentration control apparatus 72 controls the concentration of the fertilizer source 22 of the liquid 13 based on the concentration of the fertilizer source 22 calculated in the fertilizer source concentration calculation step 5200. The concentration control step S206 may be a step in which the concentration control apparatus 72 controls the concentration of the fertilizer source 22 of the liquid 13 by controlling the fertilizer source input apparatus 20. After the concentration control step S206, the cultivation method proceeds to the decomposition step S102.

The determination step 5204 is a step in which the arithmetic apparatus 50 determines whether the concentration of the fertilizer source 22 in the liquid 13 is less than the first threshold value Rt1. When it is determined in the determination step 5204 that the concentration of the fertilizer source 22 is less than the first threshold value Rt1, the cultivation method proceeds to the fertilizer source input step 5208. When it is not determined in the determination step 5204 that the concentration of the fertilizer source 22 is less than the first threshold value Rt1, the cultivation method proceeds to the fertilizer source input step 5210. The case where it is not determined in the determination step 5204 that the concentration of the fertilizer source 22 is less than the first threshold value Rt1 is a case where the concentration of the fertilizer source 22 exceeds the second threshold value Rt2.

The concentration control step 5208 is a step in which the concentration control apparatus 72 controls the concentration of the fertilizer source 22 of the liquid 13 such that the concentration of the fertilizer source 22 becomes a concentration equal to or more than the first threshold value Rt1. The concentration control step S208 may be a step in which the concentration control apparatus 72 controls the fertilizer source input apparatus 20 such that the fertilizer source input apparatus 20 inputs, to the liquid 13, such an amount of the fertilizer source 22 that allows the concentration of the fertilizer source 22 to be a concentration equal to or more than the first threshold value Rt1. Accordingly, the active state of the microorganisms in the liquid 13 can be maintained.

The concentration control step S210 is a step in which the concentration control apparatus 72 controls the concentration of the fertilizer source 22 of the liquid 13 such that the concentration of the fertilizer source 22 becomes a concentration equal to or less than the second threshold value Rt2. The concentration control step 5210 may be a step in which the concentration control apparatus 72 controls the fertilizer source input apparatus 20 such that the fertilizer source input apparatus 20 inputs, to the liquid 13, at least one of the fertilizer source 22 or $H_2O$ (water) in such an amount that allows the concentration of the fertilizer source 22 to be a concentration equal to or less than the second threshold value Rt2. Accordingly, the active state of the microorganisms in the liquid 13 can be maintained.

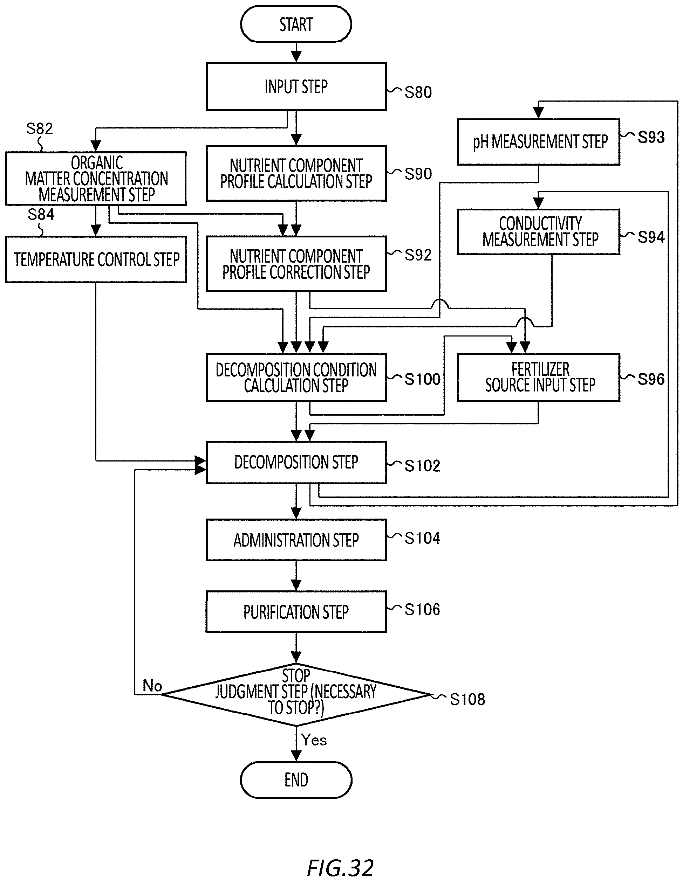

Fig. 32 is a flowchart showing another example of the cultivation method according to one embodiment of the present invention. The cultivation method of the present example is different from the cultivation method shown in Fig. 30 in that it further includes an organic matter concentration measurement step S82, a temperature control step S84, a nutrient component profile correction step S92, a pH measurement step S93, and a conductivity measurement step S94. The cultivation method of the present example will be described by using, as an example, the cultivation apparatus 100 shown in Fig. 15.

The organic matter concentration measurement step S82 is a step in which the organic matter sensor 11 measures the concentration of the organic matter 24 in the liquid 13. In the organic matter concentration measurement step S82, the concentration of the organic matter 24 may be calculated by Expression 3 or Expression 4 described above.

The decomposition condition calculation step S100 may be a step in which the arithmetic apparatus 50 calculates the decomposition condition Cb based on the concentration of the organic matter 24 measured in the organic matter concentration measurement step S82. The decomposition condition Cb may be a decomposition condition Cb that the concentration of the organic matter 24 in the decomposition liquid 12 becomes a predetermined concentration. The predetermined concentration of the organic matter 24 may be different for each type of the cultivation target 92 (see Fig. 15).

The temperature control step S84 is a step in which the temperature control apparatus 70 controls the temperature of the liquid 13. The temperature control step S84 may be a step in which the temperature control apparatus 70 controls the temperature of the liquid 13 based on the concentration of the organic matter 24 measured in the organic matter concentration measurement step S82. When the temperature T is in a desired range, the organic matter 24 input into the decomposition tank 10 is easily mineralized quickly by microorganisms than that in a case where the temperature T is out of the desired range. As described above, the temperature Ta may be one temperature T in the desired range. Therefore, the temperature control apparatus 70 controls the temperature of the liquid 13, such that the user of the cultivation method can control the concentration of the organic matter 24 in the decomposition liquid 12.

The nutrient component profile correction step S92 is a step in which the arithmetic apparatus 50 corrects the nutrient component profile Pf based on the concentration of the organic matter 24 measured in the organic matter concentration measurement step S82. By correcting the nutrient component profile Pf based on the concentration of the organic matter 24, the nutrient component profile Pf can be a more accurate profile reflecting a more accurate concentration of the inorganic matter.

The decomposition condition calculation step S100 may be a step in which the arithmetic apparatus 50 calculates the decomposition condition Cb based on the nutrient component profile Pf corrected in the nutrient component profile correction step S92. Accordingly, the decomposition condition Cb can be a more accurate decomposition condition Cb than the case based on the nutrient component profile Pf before correction.

The pH measurement step S93 is a step in which the pH sensor 16 measures the pH of the liquid 13. As described above, when the organic matter 24 is decomposed into $NH_4^+$ (ammonium ion), the pH of the liquid 13 increases.

A conductivity measurement step S94 is a step in which the conductivity sensor 17 measures the electrical conductivity of the liquid 13. As described above, $NH_4^+$ (ammonium ion) in the liquid 13 can be further decomposed into $NO_2^-$ (nitrite ion) by microorganisms. When $NH_4^+$ (ammonium ion) is decomposed into $NO_2^-$ (nitrite ion) by microorganisms, the electrical conductivity of the decomposition liquid 12 is more likely to decrease than before the decomposition.

The decomposition condition calculation step S100 may be a step in which the arithmetic apparatus 50 calculates the decomposition condition Cb based on the pH of the liquid 13 measured in the pH measurement step S93. The decomposition condition Cb may be a decomposition condition Cb that the concentration of the organic matter 24 in the decomposition liquid 12 becomes a predetermined concentration.

The decomposition condition calculation step S100 may be a step in which the arithmetic apparatus 50 calculates the decomposition condition Cb based on the electrical conductivity of the liquid 13 measured in the conductivity measurement step S94. The decomposition condition Cb may be a decomposition condition Cb that the concentration of the organic matter 24 in the decomposition liquid 12 becomes a predetermined concentration.

In the cultivation method shown in Fig. 32, the fertilizer source concentration calculation step S200, the determination step S202, the determination step S204, the concentration control step S206, the fertilizer source input step S208, and the fertilizer source input step S210 shown in Fig. 30 may be included between the nutrient component profile calculation step S90 and the decomposition step S102.

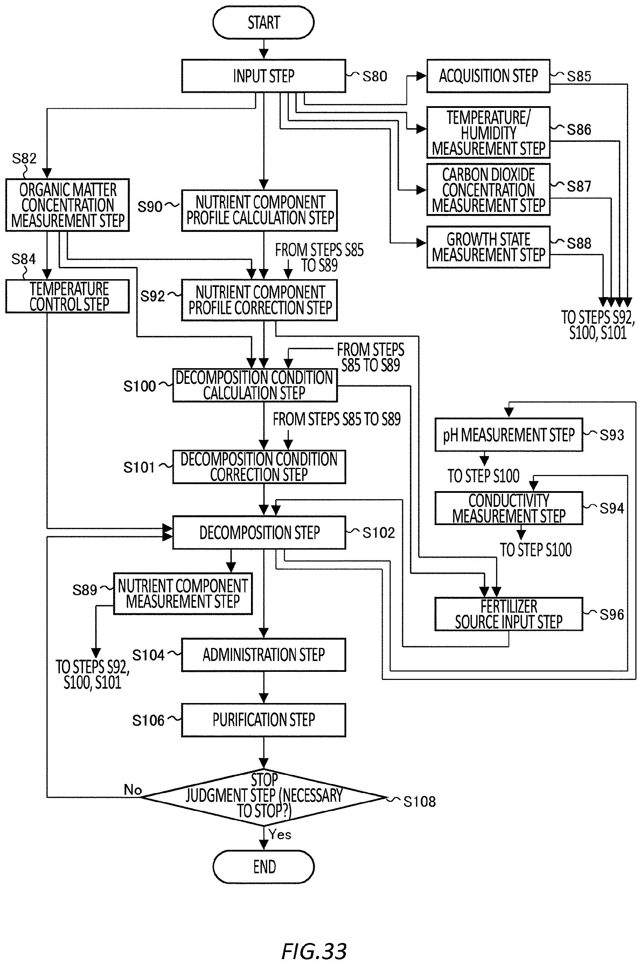

Fig. 33 is a flowchart showing another example of the cultivation method according to one embodiment of the present invention. The cultivation method of the present example is different from the cultivation method shown in Fig. 32 in that it further includes an acquisition step S85, a temperature/humidity measurement step S86, a $CO_2$ (carbon dioxide) concentration measurement step S87, a growth state measurement step S88, a nutrient component measurement step S89, and a decomposition condition correction step S101. The cultivation method of the present example will be described by using, as an example, the cultivation apparatus 100 shown in Fig. 23.

The acquisition step S85 is a step in which the acquisition apparatus 97 acquires at least one of an amount of solar radiation to the cultivation target 92 or the sunshine time. The temperature/humidity measurement step S86 is a step in which the temperature and humidity sensor 95 measures at least one of the air temperature or the humidity of the cultivation space 98. The $CO_2$ (carbon dioxide) concentration measurement step S87 is a step in which the $CO_2$ (carbon dioxide) sensor 96 measures the $CO_2$ (carbon dioxide) concentration of the cultivation space 98.

The decomposition condition calculation step S100 may be a step in which the arithmetic apparatus 50 calculates the decomposition condition Cb based on at least one of the amount of solar radiation to the cultivation target 92 or the sunshine time acquired in the acquisition step S85. The decomposition condition Cb may be a decomposition condition Cb that the concentration of the organic matter 24 in the decomposition liquid 12 becomes a predetermined concentration.

The nutrient component profile correction step S92 may be a step in which the arithmetic apparatus 50 corrects the nutrient component profile Pf based on at least one of the amount of solar radiation to the cultivation target 92 or the sunshine time acquired in the acquisition step S85. The decomposition condition correction step S101 may be a step in which the arithmetic apparatus 50 corrects the decomposition condition Cb based on at least one of the amount of solar radiation to the cultivation target 92 or the sunshine time acquired in the acquisition step S85.

The decomposition condition calculation step S100 may be a step in which the arithmetic apparatus 50 calculates the decomposition condition Cb based on at least one of the air temperature or the humidity of the cultivation space 98 measured in the temperature/humidity measurement step S86. The decomposition condition Cb may be a decomposition condition Cb that the concentration of the organic matter 24 in the decomposition liquid 12 becomes a predetermined concentration.

The nutrient component profile correction step S92 may be a step in which the arithmetic apparatus 50 corrects the nutrient component profile Pf based on at least one of the air temperature or the humidity of the cultivation space 98 measured in the temperature/humidity measurement step S86. The decomposition condition correction step S101 may be a step in which the arithmetic apparatus 50 corrects the decomposition condition Cb based on at least one of the air temperature or the humidity of the cultivation space 98 measured in the temperature/humidity measurement step S86.

The decomposition condition calculation step S100 may be a step in which the arithmetic apparatus 50 calculates the decomposition condition Cb based on the $CO_2$ (carbon dioxide) concentration of the cultivation space 98 measured in the $CO_2$ (carbon dioxide) concentration measurement step S87. The decomposition condition Cb may be a decomposition condition Cb that the concentration of the organic matter 24 in the decomposition liquid 12 becomes a predetermined concentration.

The nutrient component profile correction step S92 may be a step in which the arithmetic apparatus 50 corrects the nutrient component profile Pf based on the $CO_2$ (carbon dioxide) concentration in the cultivation space 98 measured in the $CO_2$ (carbon dioxide) concentration measurement step S87. The decomposition condition correction step S101 may be a step in which the arithmetic apparatus 50 corrects the decomposition condition Cb based on the $CO_2$ (carbon dioxide) concentration of the cultivation space 98 measured in the $CO_2$ (carbon dioxide) concentration measurement step S87.

The growth state measurement step S88 is a step in which the growth state sensor 99 measures the growth state of the cultivation target 92. The growth state of the cultivation target 92 may be a height of the cultivation target 92. When the cultivation target 92 is a plant, the growth state of the cultivation target 92 may be a flowering state of the plant, or may be a mature state of a fruit of the plant. The growth state sensor 99 is, for example, a camera.

The decomposition condition calculation step S100 may be a step in which the arithmetic apparatus 50 calculates the decomposition condition Cb based on the growth state of the cultivation target 92 measured in the growth state measurement step S88. The decomposition condition Cb may be a decomposition condition Cb that the concentration of the organic matter 24 in the decomposition liquid 12 becomes a predetermined concentration.

The nutrient component profile correction step S92 may be a step in which the arithmetic apparatus 50 corrects the nutrient component profile Pf based on the growth state of the cultivation target 92 measured in the growth state measurement step S88. The decomposition condition correction step S101 may be a step in which the decomposition condition Cb is corrected based on the growth state of the cultivation target 92 measured in the growth state measurement step S88.

The nutrient component measurement step S89 is a step in which the nutrient component sensor 42 measures the nutrient component of the decomposition liquid 12 administered to the cultivation target 92. The nutrient component sensor 42 may include at least one of the pH sensor 43 or the conductivity sensor 44. The decomposition condition calculation step S100 may be a step in which the arithmetic apparatus 50 calculates the decomposition condition Cb based on the nutrient component of the decomposition liquid 12 measured in the nutrient component measurement step S89. The decomposition condition Cb may be a decomposition condition Cb that the concentration of the organic matter 24 in the decomposition liquid 12 becomes a predetermined concentration.

The nutrient component profile correction step S92 may be a step in which the arithmetic apparatus 50 corrects the nutrient component profile Pf based on the nutrient components of the decomposition liquid 12 measured in the nutrient component measurement step S89. The decomposition condition correction step S101 may be a step in which the arithmetic apparatus 50 corrects the decomposition condition Cb based on the nutrient component of the decomposition liquid 12 measured in the nutrient component measurement step S89.

The decomposition step S102 may be a step in which the decomposition tank 10 generates the decomposition liquid 12 based on the decomposition condition Cb corrected in the decomposition condition correction step 5101. The administration step S104 may be a step in which the administration apparatus 40 administers, to the cultivation target 92, the decomposition liquid 12 generated based on the corrected decomposition condition Cb in the decomposition step S102.

In the cultivation method shown in Fig. 33, the fertilizer source concentration calculation step S200, the determination step S202, the determination step S204, the concentration control step S206, the fertilizer source input step S208, and the fertilizer source input step S210 shown in Fig. 30 may be included between the nutrient component profile calculation step S90 and the decomposition step S102.

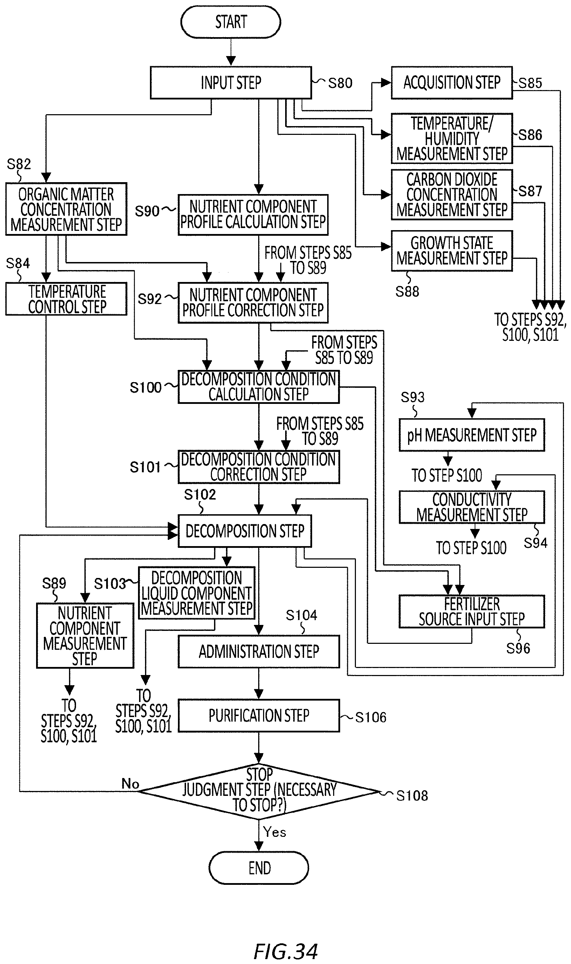

Fig. 34 is a flowchart showing another example of the cultivation method according to one embodiment of the present invention. The cultivation method of the present example is different from the cultivation method shown in Fig. 33 in that it further includes a decomposition liquid component measurement step S103. The cultivation method of the present example will be described by using, as an example, the cultivation apparatus 100 shown in Fig. 24.

The decomposition liquid component measurement step S103 is a step in which the plurality of decomposition liquid sensors 19 measure respective components of the plurality of liquids 13. The decomposition condition calculation step S100 may be a step in which the arithmetic apparatus 50 calculates the decomposition condition Cb based on each component of the plurality of liquids 13 measured in the decomposition liquid component measurement step S103. The decomposition condition Cb may be a decomposition condition Cb that the concentration of the organic matter 24 in the decomposition liquid 12 becomes a predetermined concentration. The decomposition condition calculation step S100 may be a step in which the arithmetic apparatus 50 calculates the decomposition condition Cb that the concentration of the organic matter 24 in the decomposition liquid 12 mixed in the decomposition liquid accumulation tank 30 becomes a predetermined concentration.

In the cultivation method shown in Fig. 34, the fertilizer source concentration calculation step S200, the determination step S202, the determination step S204, the concentration control step S206, the fertilizer source input step S208, and the fertilizer source input step S210 shown in Fig. 30 may be included between the nutrient component profile calculation step S90 and the decomposition step S102.

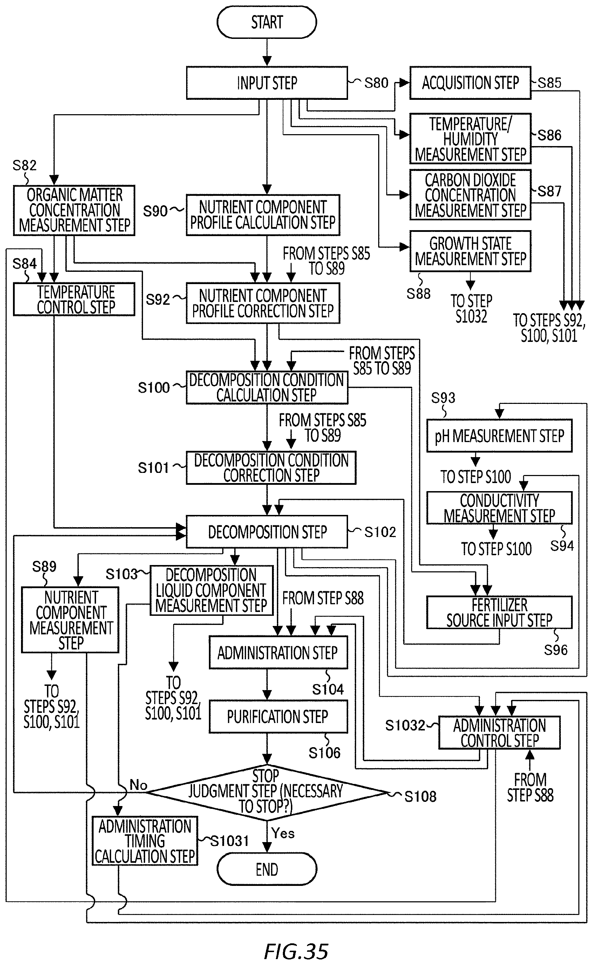

Fig. 35 is a flowchart showing another example of the cultivation method according to one embodiment of the present invention. The cultivation method of the present example is different from the cultivation method shown in Fig. 34 in that it further includes an administration timing calculation step S1031 and an administration control step S1032. The cultivation method of the present example will be described by using, as an example, the cultivation apparatus 100 shown in Fig. 24.

The administration timing calculation step S1031 is a step in which the arithmetic apparatus 50 calculates the timing when the administration apparatus 40 administers each of the plurality of decomposition liquids 12 to the cultivation target 92 based on each component of the plurality of liquids 13 measured in the decomposition liquid component measurement step S103. The administration control step S1032 is a step in which the administration control apparatus 46 controls the valve 47 such that the administration apparatus 40 administers the decomposition liquid 12 to the cultivation target 92 at each timing calculated in the administration timing calculation step S1031.

The administration control step S1032 may be a step of controlling the administration apparatus 40 based on at least one of the growth state of the cultivation target 92 measured in the growth state measurement step S88 or the nutrient component of the decomposition liquid 12 measured in the nutrient component measurement step S89, such that the timing when the administration apparatus 40 administers, to the cultivation target 92, one decomposition liquid 12 generated in the decomposition step S102 is different from the timing when the administration apparatus 40 administers, to the cultivation target 92, another decomposition liquid 12. In the example of Fig. 25, the administration control step S1032 is a step in which the administration control apparatus 46 controls the administration apparatus 40 based on at least one of the growth state Sg and the nutrient component Cn such that the timing Tm1, the timing Tm2, and the timing Tm3 are different from each other.

The administration control step S1032 may be a step in which when the administration control apparatus 46 controls the administration apparatus 40 so as not to administer, to the cultivation target 92, the decomposition liquid 12 generated by one decomposition tank 10, the temperature control apparatus 70 controls the temperature of the liquid 13 in the one decomposition tank 10. In the example of Fig. 25, the administration control step S1032 is a step in which the temperature control apparatus 70 controls the temperature of the liquid 13 in one decomposition tank 10-1 at at least one of the timing Tm2 or the timing Tm3 when the administration control apparatus 46 does not administer the decomposition liquid 12-1 generated by the one decomposition tank 10-1. The administration control step S1032 may be a step in which when the administration control apparatus 46 controls the administration apparatus 40 so as not to administer, to the cultivation target 92, the decomposition liquid 12 generated by one decomposition tank 10, the fertilizer source input apparatus 20 inputs the fertilizer source 22 into the liquid 13 in the one decomposition tank 10.

In the cultivation method shown in Fig. 35, the fertilizer source concentration calculation step S200, the determination step S202, the determination step S204, the concentration control step S206, the fertilizer source input step S208, and the fertilizer source input step S210 shown in Fig. 30 may be included between the nutrient component profile calculation step S90 and the decomposition step S102.

Various embodiments of the present invention may be described with reference to flowcharts and block diagrams. According to the various embodiments of the present invention, a block may represent (1) a step of a process where operations are executed or (2) a section of an apparatus having a role for executing operations.

A specific step may be executed by a dedicated circuit, a programmable circuit, or a processor. A specific section may be implemented by a dedicated circuit, a programmable circuit, or a processor. The programmable circuit and the processor may be supplied together with a computer readable instruction. The computer readable instruction may be stored on a computer readable medium.

The dedicated circuit may include at least one of a digital hardware circuit and an analog hardware circuit. The dedicated circuit may include at least one of an integrated circuit (IC) and a discrete circuit. The programmable circuit may a hardware circuit including include logical AND, logical OR, logical XOR, logical NAND, logical NOR, and other logical operations. The programmable circuit may include a reconfigurable hardware circuit including a flip-flop, a register, a memory element such as a field programmable gate array (FPGA) and a programmable logic array (PLA), and the like.

Computer readable medium may include any tangible device that can store instructions for execution by a suitable device. Since the computer readable medium includes the tangible device, the computer readable medium having the instruction stored on the device constitutes a product including an instruction that may be executed in order to provide means to execute an operation specified by a flowchart or a block diagram.

The computer readable medium may be, for example, an electronic storage medium, a magnetic storage medium, an optical storage medium, an electromagnetic storage medium, a semiconductor storage medium, or the like. More specifically, for example, the computer readable medium may be a floppy (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disk read only memory (CD-ROM), a digital versatile disk (DVD), a Blu-ray (registered trademark) disk, a memory stick, an integrated circuit card, or the like.

The computer readable instruction may include any of an assembler instruction, an instruction-set-architecture (ISA) instruction, a machine instruction, a machine dependent instruction, a microcode, a firmware instruction, state-setting data, a source code, and an object code. The source code and the object code may be written in any combination of one or more programming languages including an object oriented programming language and a procedural programming language in related art. The object oriented programming language may be, for example, Smalltalk (registered trademark), JAVA (registered trademark), C++, or the like. The procedural programming language may be, for example, a "C" programming language.

The computer readable instruction may be provided to a general purpose computer, a special purpose computer, or a processor or a programmable circuit of another programmable data processing apparatus locally or via a local area network (LAN) or a wide area network (WAN) such as the Internet. The general purpose computer, the special purpose computer, or the processor or the programmable circuit in another programmable data processing apparatus may execute the computer readable instruction in order to provide means to execute the operations specified by the flowcharts shown in Figs. 28 to 35 or the block diagrams shown in Fig. 1, 15, 21 to 24, or 26. The processor may be, for example, a computer processor, a processing unit, a microprocessor, a digital signal processor, a controller, a microcontroller, or the like.

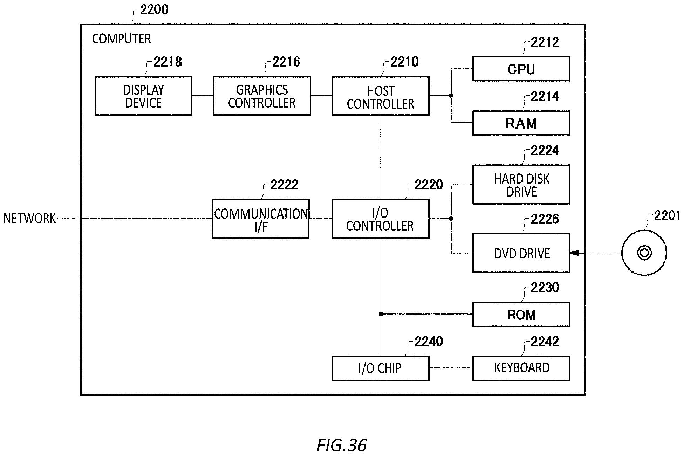

Fig. 36 shows an example of a computer 2200 in which the cultivation apparatus 100 according to one embodiment of the present invention may be wholly or partially embodied. The program installed in the computer 2200 can cause the computer 2200 to function as an operation associated with the cultivation apparatus 100 according to the embodiment of the present invention or one or more sections of the cultivation apparatus 100 or to execute the operation or the one or more sections, or can cause the computer 2200 to execute each stage (see Figs. 28 to 35) according to the cultivation method of the present invention. The program may be executed by the CPU 2212 to cause the computer 2200 to execute a specific operation associated with some or all of the blocks in the flowcharts (Figs. 28 to 35) and the block diagrams (Fig. 1, 15, 21 to 24, or 26) described herein.

The program that can cause the computer 2200 to execute the operation associated with the cultivation apparatus 100 according to the embodiment of the present invention may be stored in the storage apparatus 52 (see Fig. 15, 21 to 24, or 26). The arithmetic apparatus 50 (see Fig. 15, 21 to 24, or 26) may include a processor. The processor is, for example, the CPU 2212.

The program that can cause the computer 2200 to execute the operation associated with the cultivation apparatus 100 according to the embodiment of the present invention causes the processor included in the arithmetic apparatus 50 to execute an operation that the decomposition tank 10 decomposes at least a part of the organic matter 24 contained in the fertilizer source 22 to generate the decomposition liquid 12 in which at least a part of the organic matter 24 is mineralized. The program causes the processor to execute an operation that the administration apparatus 40 administers, to the cultivation target 92, the decomposition liquid 12 generated by the decomposition tank 10. The program causes the processor to execute an operation to calculate the decomposition condition Cb in the decomposition tank 10 based on the nutrient component profile Pf (see Fig. 2) indicating the component to be contained in the decomposition liquid 12. The program causes the processor to execute an operation that the decomposition tank 10 generates the decomposition liquid 12 based on the decomposition condition Cb. The program causes the processor to execute an operation that the administration apparatus 40 administers, to the cultivation target 92, the decomposition liquid 12 generated based on the decomposition condition Cb.

The computer 2200 according to an embodiment of the present invention includes the CPU 2212, a RAM 2214, a graphics controller 2216, and a display device 2218. The CPU 2212, the RAM 2214, the graphics controller 2216, and the display device 2218 are mutually connected by a host controller 2210. The computer 2200 further includes input/output unit such as a communication interface 2222, a hard disk drive 2224, a DVD-ROM drive 2226, and an IC card drive. The communication interface 2222, the hard disk drive 2224, the DVD-ROM drive 2226, and the IC card drive, and the like are connected to the host controller 2210 via an input/output controller 2220. The computer further includes legacy input/output units such as a ROM 2230 and a keyboard 2242. The ROM 2230, the keyboard 2242, and the like are connected to the input/output controller 2220 via an input/output chip 2240.

The CPU 2212 operates according to programs stored in the ROM 2230 and the RAM 2214, thereby controlling each unit. The graphics controller 2216 acquires image data generated by the CPU 2212 on a frame buffer or the like provided in the RAM 2214 or in the RAM 2214 itself to cause the image data to be displayed on the display device 2218.

The communication interface 2222 communicates with other electronic devices via a network. The hard disk drive 2224 stores programs and data used by the CPU 2212 in the computer 2200. The DVD-ROM drive 2226 reads the programs or the data from the DVD-ROM 2201, and provides the read programs or data to the hard disk drive 2224 via the RAM 2214. The IC card drive reads programs and data from an IC card, or writes programs and data to the IC card.

The ROM 2230 stores a boot program or the like executed by the computer 2200 at the time of activation, or a program depending on the hardware of the computer 2200. The input/output chip 2240 may connect various input/output unit via a parallel port, a serial port, a keyboard port, a mouse port, or the like to the input/output controller 2220.

The program is provided by a computer readable medium such as the DVD-ROM 2201 or the IC card. The program is read from a computer readable medium, installed in the hard disk drive 2224, the RAM 2214, or the ROM 2230 which are also examples of the computer readable medium, and executed by the CPU 2212. The information processing described in these programs is read by the computer 2200 and provides cooperation between the programs and the above-described various types of hardware resources. An apparatus or method may be constituted by realizing the operation or processing of information in accordance with the usage of the computer 2200.

For example, when a communication is executed between the computer 2200 and an external device, the CPU 2212 may execute a communication program loaded onto the RAM 2214 to instruct communication processing to the communication interface 2222, based on the processing described in the communication program. The communication interface 2222, under control of the CPU 2212, reads transmission data stored on a transmission buffering region provided in a recording medium such as the RAM 2214, the hard disk drive 2224, the DVD-ROM 2201, or the IC card, and transmits the read transmission data to a network or writes reception data received from a network to a reception buffering region or the like provided on the recording medium.

The CPU 2212 may cause all or a necessary portion of a file or a database to be read into the RAM 2214, the file or the database having been stored in an external recording medium such as the hard disk drive 2224, the DVD-ROM drive 2226 (DVD-ROM 2201), the IC card, or the like. The CPU 2212 may execute various types of processing on the data on the RAM 2214. The CPU 2212 may then write back the processed data to the external recording medium.

Various types of information, such as various types of programs, data, tables, and databases, may be stored in the recording medium to undergo information processing. The CPU 2212 may execute various types of processing on the data read from the RAM 2214, which includes various types of operations, information processing, condition judging, conditional branch, unconditional branch, search or replace of information, or the like, as described throughout the present disclosure and designated by an instruction sequence of programs. The CPU 2212 may write the result back to the RAM 2214.

The CPU 2212 may search for information in a file, a database, or the like in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, read the attribute value of the second attribute stored in the entry, and read a second attribute value to acquire the attribute value of the second attribute associated with the first attribute satisfying the predetermined condition.

The program or software modules described above may be stored in the computer readable media on the computer 2200 or of the computer 2200. A recording medium such as a hard disk or a RAM provided in a server system connected to a dedicated communication network or the Internet can be used as the computer readable media. The program may be provided to the computer 2200 by the recording medium.

While the present invention has been described by way of the embodiments, the technical scope of the present invention is not limited to the above-described embodiments. It is apparent to persons skilled in the art that various alterations or improvements can be made to the above-described embodiments. It is also apparent from the description of the claims that embodiments added with such alterations or improvements can be included in the technical scope of the present invention.

The operations, procedures, steps, and stages of each process performed by an apparatus, system, program, and method illustrated in the claims, embodiments, or diagrams can be performed in any order as long as the order is not indicated by "prior to," "before," or the like and as long as the output from a previous process is not used in a later process. Even if the operation flow is described by using phrases such as "first" or "next" in the scope of the claims, specification, or drawings, it does not necessarily mean that the process must be performed in this order.

EXPLANATION OF REFERENCES

10: decomposition tank; 11: organic matter sensor; 12: decomposition liquid; 13: liquid; 14: ORP sensor; 15: sensor; 16: pH sensor; 17: conductivity sensor; 19: decomposition liquid sensor; 20: fertilizer source input apparatus; 22: fertilizer source; 23: fertilizer source; 24: organic matter; 30: decomposition liquid accumulation tank; 40: administration apparatus; 42: nutrient component sensor; 43: pH sensor; 44: conductivity sensor; 45: valve; 46: administration control apparatus; 47: valve; 48: pipe; 50: arithmetic apparatus; 52: storage apparatus; 70: temperature control apparatus; 72: concentration control apparatus; 80: purification tank; 90: cultivation tank; 91: soil; 92: cultivation target; 93: solar radiation meter; 94: sunshine meter; 95: temperature and humidity sensor; 96: $CO_2$ (carbon dioxide) sensor; 97: acquisition apparatus; 98: cultivation space; 99: growth state sensor; 100: cultivation apparatus; 110: control apparatus; 112: inputting apparatus; 120: reference electrode; 122: wetted electrode; 124: voltmeter; 2200: computer; 2201: DVD-ROM; 2210: host controller; 2212: CPU; 2214: RAM; 2216: graphics controller; 2218: display device; 2220: input/output controller; 2222: communication interface; 2224: hard disk drive; 2226: DVD-ROM drive; 2230: ROM; 2240: input/output chip; and 2242: keyboard.

**Claims**

1. A cultivation apparatus comprising:

   a decomposition tank which decomposes at least a part of an organic matter contained in a fertilizer source to generate a decomposition liquid in which the at least a part of the organic matter is mineralized;
   an administration apparatus which administers, to a cultivation target, the decomposition liquid generated by the decomposition tank; and
   an arithmetic apparatus which calculates a decomposition condition in the decomposition tank based on a nutrient component profile indicating a component to be contained in the decomposition liquid, wherein
   the decomposition tank generates the decomposition liquid based on the decomposition condition, and
   the administration apparatus administers, to the cultivation target, the decomposition liquid generated based on the decomposition condition.

2. The cultivation apparatus according to claim 1, wherein

   the decomposition tank holds a liquid for generating the decomposition liquid, and
   the cultivation apparatus further comprises a fertilizer source input apparatus which inputs the fertilizer source to the liquid based on the nutrient component profile.

3. The cultivation apparatus according to claim 2, wherein

   the arithmetic apparatus calculates, as the decomposition condition, a concentration of an inorganic matter in the decomposition liquid at a predetermined timing based on the nutrient component profile, and
   the fertilizer source input apparatus inputs the fertilizer source to the liquid at the timing such that a concentration of an inorganic matter in the decomposition liquid becomes the concentration of the inorganic matter in the decomposition liquid calculated by the arithmetic apparatus.

4. The cultivation apparatus according to claim 3, wherein the arithmetic apparatus calculates the decomposition condition based on the nutrient component profile and a composition of the fertilizer source.

5. The cultivation apparatus according to claim 4, wherein the arithmetic apparatus calculates the decomposition condition based on the nutrient component profile and a mass ratio of carbon atoms and nitrogen atoms contained in the fertilizer source.

6. The cultivation apparatus according to claim 5, wherein the arithmetic apparatus calculates, based on a mass ratio of carbon atoms and nitrogen atoms in each of a plurality of fertilizer sources including the fertilizer source, a mixing ratio of one of the fertilizer sources and another of the fertilizer sources, and calculates the decomposition condition based on the mixing ratio.

7. The cultivation apparatus according to any one of claims 3 to 6, wherein

   a relationship between at least one of one temperature or one decomposition time of the liquid and a generation amount of at least one inorganic matter including the inorganic matter is determined in advance for each type or concentration of a plurality of fertilizer sources including the fertilizer source, and
   the arithmetic apparatus calculates the decomposition condition based on the relationship.

8. The cultivation apparatus according to any one of claims 2 to 7, further comprising a temperature control apparatus which controls a temperature of the liquid such that a concentration of an inorganic matter in the decomposition liquid or a decomposition time of the liquid becomes a predetermined concentration or a predetermined time.

9. The cultivation apparatus according to any one of claims 2 to 8, wherein

   the arithmetic apparatus calculates a concentration of the fertilizer source of the liquid under the decomposition condition, and
   the cultivation apparatus further comprises a concentration control apparatus which controls the concentration of the fertilizer source of the liquid based on the concentration of the fertilizer source calculated by the arithmetic apparatus.

10. The cultivation apparatus according to claim 9, wherein

   the arithmetic apparatus determines whether the concentration of the fertilizer source is equal to or more than a first threshold concentration and equal to or less than a second threshold concentration, and
   the concentration control apparatus controls the concentration of the fertilizer source in the liquid when the arithmetic apparatus determines that the concentration of the fertilizer source is equal to or more than the first threshold concentration and equal to or less than the second threshold concentration.

11. The cultivation apparatus according to any one of claims 2 to 10, wherein the arithmetic apparatus calculates the decomposition condition based on a concentration of the organic matter in the liquid measured by an organic matter sensor.

12. The cultivation apparatus according to claim 11, further comprising a temperature control apparatus which controls a temperature of the liquid based on the concentration of the organic matter measured by the organic matter sensor.

13. The cultivation apparatus according to any one of claims 2 to 10, wherein
   the arithmetic apparatus corrects the nutrient component profile based on a concentration of the organic matter in the liquid measured by an organic matter sensor, and calculates the decomposition condition based on the nutrient component profile which has been corrected.

14. The cultivation apparatus according to any one of claims 2 to 13, wherein
   the arithmetic apparatus calculates the decomposition condition based on a pH of the liquid measured by a pH sensor.

15. The cultivation apparatus according to any one of claims 2 to 14, wherein
   the arithmetic apparatus calculates the decomposition condition based on an electrical conductivity of the liquid measured by a conductivity sensor.

16. The cultivation apparatus according to any one of claims 2 to 15, wherein the arithmetic apparatus calculates the decomposition condition based on at least one of an amount of solar radiation to the cultivation target or a sunshine time acquired by an acquisition apparatus which acquires the at least one of the amount of solar radiation or the sunshine time.

17. The cultivation apparatus according to claim 16, wherein the arithmetic apparatus corrects at least one of the nutrient component profile or the decomposition condition based on the at least one of the amount of solar radiation or the sunshine time acquired by the acquisition apparatus.

18. The cultivation apparatus according to any one of claims 2 to 17, wherein

   the cultivation target is arranged in a cultivation space, and
   the arithmetic apparatus calculates the decomposition condition based on at least one of an air temperature or a humidity of the cultivation space measured by a temperature and humidity sensor which measures the at least one of the air temperature or the humidity in the cultivation space.

19. The cultivation apparatus according to claim 18, wherein the arithmetic apparatus calculates the decomposition condition based on a carbon dioxide concentration of the cultivation space measured by a carbon dioxide sensor which measures the carbon dioxide concentration in the cultivation space.

20. The cultivation apparatus according to claim 19, wherein the arithmetic apparatus corrects at least one of the nutrient component profile or the decomposition condition based on at least one of the at least one of the air temperature or the humidity of the cultivation space measured by the temperature and humidity sensor, or the carbon dioxide concentration of the cultivation space measured by the carbon dioxide sensor.

21. The cultivation apparatus according to any one of claims 2 to 20, wherein

   a growth state of the cultivation target is measured by a growth state sensor, and
   the arithmetic apparatus calculates the decomposition condition based on the growth state of the cultivation target measured by the growth state sensor.

**22.** The cultivation apparatus according to claim 21, wherein

a nutrient component of the decomposition liquid to be administered to the cultivation target is measured by a nutrient component sensor, and
the arithmetic apparatus calculates the decomposition condition based on the nutrient component of the decomposition liquid measured by the nutrient component sensor.

**23.** The cultivation apparatus according to claim 22, wherein the arithmetic apparatus corrects the decomposition condition based on at least one of the growth state of the cultivation target or the nutrient component of the decomposition liquid.

**24.** The cultivation apparatus according to claim 22 or 23, wherein the arithmetic apparatus corrects the nutrient component profile based on at least one of the growth state of the cultivation target or the nutrient component of the decomposition liquid.

**25.** The cultivation apparatus according to claim 24, wherein the arithmetic apparatus corrects the decomposition condition based on the nutrient component profile which has been corrected.

**26.** The cultivation apparatus according to any one of claims 22 to 25, further comprising

an administration control apparatus which controls timings when the administration apparatus administers, to the cultivation target, a plurality of decomposition liquids including the decomposition liquid, generated by a plurality of decomposition tanks including the decomposition tank, respectively, wherein
the administration control apparatus controls the administration apparatus based on at least one of the growth state of the cultivation target measured by the growth state sensor or the nutrient component of the decomposition liquid measured by the nutrient component sensor, such that a timing when one of the decomposition liquids generated in one of the decomposition tanks is administered to the cultivation target is different from a timing when another of the decomposition liquids generated in another of the decomposition tanks is administered to the cultivation target.

**27.** The cultivation apparatus according to claim 26, further comprising

a temperature control apparatus which controls a temperature of the liquid, wherein
when the administration control apparatus controls the administration apparatus so as not to administer, to the cultivation target, the decomposition liquid generated by the one of the decomposition tanks, the temperature control apparatus controls the temperature of the liquid in the one of the decomposition tanks.

**28.** The cultivation apparatus according to any one of claims 2 to 27, wherein

each of a plurality of decomposition tanks including the decomposition tank is provided with a plurality of decomposition liquid sensors which measure a component of the liquid, and
the arithmetic apparatus calculates the decomposition condition based on the component of the liquid measured by each of the plurality of decomposition liquid sensors.

**29.** The cultivation apparatus according to any one of claims 1 to 28, wherein
the arithmetic apparatus calculates the nutrient component profile based on information on the cultivation target input by an inputting apparatus.

**30.** The cultivation apparatus according to any one of claims 1 to 29, wherein

the administration apparatus administers the decomposition liquid to a cultivation tank which cultivates the cultivation target, and
at least a part of the decomposition liquid having passed through the cultivation tank is introduced into the decomposition tank.

**31.** The cultivation apparatus according to claim 30, wherein

the decomposition liquid administered to the cultivation tank is purified by a purification tank, and

at least a part of the decomposition liquid purified by the purification tank is introduced into the decomposition tank.

**32.** A cultivation apparatus, comprising:

a storage apparatus in which a program is stored; and an arithmetic apparatus including a processor, wherein the program causes the processor to execute:

decomposing, by a decomposition tank, at least a part of an organic matter contained in a fertilizer source to generate a decomposition liquid in which the at least a part of the organic matter is mineralized;
administering, by an administration apparatus, to a cultivation target, the decomposition liquid generated by the decomposition tank;
calculating, by the arithmetic apparatus, a decomposition condition in the decomposition tank based on a nutrient component profile indicating a component to be contained in the decomposition liquid;
generating, by the decomposition tank, the decomposition liquid based on the decomposition condition; and
administering, by the administration apparatus, to the cultivation target, the decomposition liquid generated based on the decomposition condition.

**33.** A cultivation method comprising:

decomposing, by a decomposition tank, at least a part of an organic matter contained in a fertilizer source to generate a decomposition liquid in which the at least a part of the organic matter is mineralized;
administering, by an administration apparatus, to a cultivation target, the decomposition liquid generated by the decomposing; and
calculating, by an arithmetic apparatus, a decomposition condition in the decomposition tank based on a nutrient component profile indicating a component to be contained in the decomposition liquid, wherein
the decomposing is generating, by the decomposition tank, the decomposition liquid based on the decomposition condition, and
the administrating is administering, by the administration apparatus, to the cultivation target, the decomposition liquid generated based on the decomposition condition.

**34.** A cultivation program for causing a computer to function as the cultivation apparatus according to any one of claims 1 to 31.

FIG.1

*FIG.2*

■ CULTIVATION TARGET INFORMATION Ic

| VARIETY K | CULTIVATION AMOUNT Am |
|-----------|-----------------------|
| TOMATO | 10 PLANTS |

*FIG.3*

■ CULTIVATION APPARATUS INFORMATION Ia

| CAPACITY CC OF CULTIVATION TANK 90 [L] | CAPACITY CD OF DECOMPOSITION TANK 10 [L] | NUMBER Nd OF DECOMPOSITION TANKS 10 |
|---|---|---|
| 500 | 500 | 3 |

*FIG.4*

EP 4 454 456 A1

■ NUTRIENT COMPONENT PROFILE Pf

| PERIOD T | START DATE Ds | END DATE De | NUMBER OF DAYS Dn | INORGANIC COMPONENT N | CONCENTRATION D [mg/L] | FERTILIZATION FREQUENCY F [TIMES/DAY] |
|---|---|---|---|---|---|---|
| T1 | 1 | 20 | 20 | N1 | 100 | 1 |
| T2 | 21 | 60 | 40 | N1 | 150 | 1 |
| T3 | 61 | 120 | 60 | N1 | 200 | 1 |

*FIG.5*

42

*FIG.6*

■ LIQUID AMOUNT AL OF DECOMPOSITION LIQUID 12

| PERIOD T | CAPACITY CC OF CULTIVATION TANK 90 [L] | CONCENTRATION D [mg/L] | FERTILIZATION FREQUENCY F | LIQUID AMOUNT AL OF DECOMPOSITION LIQUID 12 [L/DAY] |
|---|---|---|---|---|
| T1 | 500 | 100 | 1 | 500 |
| T2 | 500 | 150 | 1 | 500 |
| T3 | 500 | 200 | 1 | 500 |

*FIG.7*

■ FERTILIZER SOURCE INFORMATION If (EXAMPLE OF RELATIONSHIP R1)

| NAME F | N1 | | | N2 | | | N3 | | |
|---|---|---|---|---|---|---|---|---|---|
| | GENERATION AMOUNT An [mg/g] | TEMPER-ATURE Tp [°C] | DECOMPOSITION TIME Td [h] | GENERATION AMOUNT An [mg/g] | TEMPER-ATURE Tp [°C] | DECOMPOSITION TIME Td [h] | GENERATION AMOUNT An [mg/g] | TEMPER-ATURE Tp [°C] | DECOMPOSITION TIME Td [h] |
| F1 | 100 | 32 | 24 | 200 | 32 | 36 | 300 | 32 | 48 |
| F2 | 300 | 32 | 48 | 200 | 32 | 36 | 100 | 32 | 24 |

*FIG.8*

■ DECOMPOSITION CONDITION Cd

| PERIOD T | NAME F OF FERTILIZER SOURCE 22 | CONCENTRATION Df OF FERTILIZER SOURCE 22 [g/L] | TEMPERATURE Tq OF LIQUID 13 [°C] | DECOMPOSITION TIME Td' [DAYS] | NUMBER Nd' OF DECOMPOSITION TANKS 10 |
|---|---|---|---|---|---|
| T1 | F1 | 1 | 32 | 1 | 1 |
| T2 | F1 | 1.5 | 32 | 1.5 | 2 |
| T3 | F1 | 2.0 | 32 | 2 | 2 |

*FIG.9*

FERTILIZER SOURCE INFORMATION If (ANOTHER EXAMPLE OF RELATIONSHIP R1)

| NAME F | COMPOSITION Cf (C/N RATIO) OF FERTILIZER SOURCE 22 | N1 | | | N2 | | | N3 | | |
|---|---|---|---|---|---|---|---|---|---|---|
| | | GENERATION AMOUNT An [mg/g] | TEMPER-ATURE Tp [°C] | DECOM-POSITION TIME Td[h] | GENERATION AMOUNT An [mg/g] | TEMPER-ATURE Tp [°C] | DECOM-POSITION TIME Td[h] | GENERATION AMOUNT An [mg/g] | TEMPER-ATURE Tp [°C] | DECOM-POSITION TIME Td[h] |
| F1 | 3 | 200 | 30 | 24 | 400 | 30 | 36 | 600 | 30 | 48 |
| F2 | 4 | 200 | 30 | 28 | 350 | 30 | 40 | 500 | 30 | 52 |
| F3 | 15 | 50 | 35 | 60 | 100 | 35 | 70 | 200 | 35 | 80 |
| F4 | 20 | 50 | 35 | 70 | 80 | 35 | 80 | 100 | 35 | 90 |
| F5 | 11 | 100 | 32 | 48 | 200 | 32 | 60 | 300 | 32 | 72 |

*FIG.10*

■ FERTILIZER SOURCE INVENTORY INFORMATION Ifs

| NAME F | PRODUCTION AREA Pa | INVENTORY AMOUNT As [kg] |
|--------|--------------------|--------------------------|
| F1 | A | 100 |
| F3 | C | 1000 |

*FIG.11*

■ LIQUID AMOUNT AL OF DECOMPOSITION LIQUID 12

| PERIOD T | CAPACITY CC OF CULTIVATION TANK 90 [L] | CONCENTRATION D [mg/L] | FERTILIZATION FREQUENCY F | LIQUID AMOUNT AL OF DECOMPOSITION SOLUTION 12 [L/DAY] | DECOMPOSITION TIME UPPER LIMIT Tu [h] |
|---|---|---|---|---|---|
| T1 | 500 | 100 | 1 | 500 | 72 |
| T2 | 500 | 150 | 1 | 500 | 72 |
| T3 | 500 | 200 | 1 | 500 | 72 |

*FIG.12*

■ DECOMPOSITION CONDITION Cd

| PERIOD T | CONCENTRATION Df OF FERTILIZER SOURCE 22 [g/L] | THRESHOLD VALUE Rth OF COMPOSITION Cf | NAME F OF FERTILIZER SOURCE 22 | MIXING RATIO Rx | TEMPERATURE Tq OF LIQUID 13 [℃] | DECOM-POSITION TIME Td' [DAYS] | NUMBER Nd' OF DECOMPOSITION TANKS 10 |
|---|---|---|---|---|---|---|---|
| T1 | 1 | 11 | F1 | 3 | 32 | 2 | 2 |
| | | | F3 | 7 | | | |
| T2 | 1.5 | 11 | F1 | 3 | 32 | 3 | 3 |
| | | | F3 | 7 | | | |
| T3 | 2.0 | 9 | F1 | 5 | 32 | 3 | 3 |
| | | | F3 | 5 | | | |

*FIG.13*

■ FERTILIZER SOURCE INFORMATION If (ANOTHER EXAMPLE OF RELATIONSHIP R1)

| NAME F | COMPOSITION Cf (C/N RATIO) OF FERTILIZER SOURCE 22 | N1 | | | N2 | | | N3 | | |
|---|---|---|---|---|---|---|---|---|---|---|
| | | GENERATION AMOUNT An [mg/g] | TEMPER-ATURE Tp [°C] | DECOM-POSITION TIME Td[h] | GENERATION AMOUNT An [mg/g] | TEMPER-ATURE Tp [°C] | DECOM-POSITION TIME Td[h] | GENERATION AMOUNT An [mg/g] | TEMPER-ATURE Tp [°C] | DECOM-POSITION TIME Td[h] |
| F1 | 3 | 200 | 30 | 24 | 400 | 30 | 36 | 600 | 30 | 48 |
| F3 | 15 | 50 | 35 | 60 | 100 | 35 | 70 | 200 | 35 | 80 |
| F5 | 11 | 100 | 32 | 48 | 200 | 32 | 60 | 300 | 32 | 72 |
| | 10 | 100 | 32 | 42 | 200 | 32 | 54 | 400 | 32 | 66 |
| | 9 | 100 | 32 | 36 | 300 | 32 | 48 | 500 | 32 | 60 |

*FIG.14*

72
CONCENTRATION CONTROL APPARATUS

20

90
CULTIVATION TANK (CULTIVATE CULTIVATION TARGET 92)

12~

~12

110

70
TEMPERATURE CONTROL APPARATUS

FERTILIZER SOURCE INPUT APPARATUS
AT LEAST ONE OF FERTILIZER SOURCE 22 OR WATER

ADMINISTRATION APPARATUS ~40

FERTILIZER SOURCE 23 ~12

STORAGE APPARATUS ~52

50

10~

DECOMPOSITION TANK    ORGANIC MATTER SENSOR 11

ORP SENSOR 14
DO SENSOR 15
pH SENSOR 16

CONDUCTIVITY SENSOR 17

DECOMPOSITION LIQUID ACCUMU-LATION TANK ~30   12

12~   ~12

ARITHMETIC APPARATUS

12

80~ PURIFICATION TANK

INPUTTING APPARATUS

112

12

100

FIG.15

52

*FIG.16*

FIG.17

FIG.18

FIG.19

FIG.20

FIG.21

FIG.22

FIG.23

FIG.24

100

FIG.25

FIG.26

*FIG.27*

FIG.28

```
                    ┌─────────────┐
                    │    START    │
                    └─────────────┘
                           │
                           ▼
              ┌──────────────────────────┐
              │ DECOMPOSITION CONDITION  │  ～S100
              │    CALCULATION STEP      │
              └──────────────────────────┘
                           │
                           ▼
              ┌──────────────────────────┐
   ┌─────────▶│    DECOMPOSITION STEP    │  ～S102
   │          └──────────────────────────┘
   │                       │
   │                       ▼
   │          ┌──────────────────────────┐
   │          │    ADMINISTRATION STEP   │  ～S104
   │          └──────────────────────────┘
   │                       │
   │                       ▼
   │          ┌──────────────────────────┐
   │          │     PURIFICATION STEP    │  ～S106
   │          └──────────────────────────┘
   │                       │
   │                       ▼
   │  No       ◇─────────────────────────◇
   └──────────│    STOP JUDGMENT STEP    │  ～S108
              │   (NECESSARY TO STOP?)   │
               ◇───────────────────────◇
                           │
                          Yes
                           ▼
                    ┌─────────────┐
                    │     END     │
                    └─────────────┘
```

FIG.29

*FIG.30*

FROM NUTRIENT COMPONENT
PROFILE CALCULATION STEP S90

```
┌─────────────────────────────┐
│   DECOMPOSITION CONDITION    │ ～S100
│      CALCULATION STEP        │
└─────────────────────────────┘
              │
              ▼
┌─────────────────────────────┐
│ FERTILIZER SOURCE CONCENTRATION │ ～S200
│      CALCULATION STEP        │
└─────────────────────────────┘
              │
              ▼
```

S202～ DETERMINATION
STEP (IS CONCENTRATION
OF FERTILIZER SOURCE 22 FIRST THRESHOLD
VALUE Rt1 OR MORE AND SECOND
THRESHOLD VALUE Rt2
OR LESS?)                          Yes →

No

S206～ CONCENTRATION CONTROL STEP
FERTILIZER SOURCE ～S96
INPUT STEP

Yes    DETERMINATION
STEP (IS CONCENTRATION
OF FERTILIZER SOURCE 22 LESS THAN    ～S204
FIRST THRESHOLD VALUE
Rt1?)

No

S208～ CONCENTRATION CONTROL STEP
FERTILIZER SOURCE ～S96
INPUT STEP

S210～ CONCENTRATION CONTROL STEP
FERTILIZER SOURCE ～S96
INPUT STEP

┌─────────────────────────────┐
│      DECOMPOSITION STEP      │ ～S102
└─────────────────────────────┘

TO ADMINISTRATION STEP S104

FIG.31

FIG.32

FIG.33

FIG.34

*FIG.35*

*FIG.36*

## INTERNATIONAL SEARCH REPORT

| International application No. |
| --- |
| **PCT/JP2022/047223** |

**A.    CLASSIFICATION OF SUBJECT MATTER**

*A01G 31/00*(2018.01)i
FI:    A01G31/00 601A

According to International Patent Classification (IPC) or to both national classification and IPC

**B.    FIELDS SEARCHED**

Minimum documentation searched (classification system followed by classification symbols)

A01G31/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2013-226089 A (MITSUI ENG. & SHIPBUILD. CO., LTD.) 07 November 2013 (2013-11-07) | 1, 29-34 |
| | claims, paragraphs [0065]-[0073], fig. 1 | |
| A | claims, paragraphs [0065]-[0073], fig. 1 | 2-28 |
| A | JP 2012-228253 A (NATIONAL AGRICULTURE & FOOD RESEARCH ORG.) 22 November 2012 (2012-11-22) | 1-34 |
| | paragraphs [0020], [0033] | |
| A | JP 2015-112052 A (NATIONAL AGRICULTURE AND FOOD RESEARCH ORG.) 22 June 2015 (2015-06-22) | 1-34 |
| | entire text, all drawings | |
| A | JP 5071897 B2 (NATIONAL AGRICULTURE & FOOD RESEARCH ORG.) 14 November 2012 (2012-11-14) | 1-34 |
| | entire text, all drawings | |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 March 2023** | **14 March 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

International application No.

**PCT/JP2022/047223**

**C.    DOCUMENTS CONSIDERED TO BE RELEVANT**

| Category* | Citation of document, with indication, where appropriate, of the relevant passages | Relevant to claim No. |
|---|---|---|
| A | JP 5388096 B2 (NATIONAL AGRICULTURE & FOOD RESEARCH ORG.) 15 January 2014 (2014-01-15)<br>entire text, all drawings | 1-34 |

Form PCT/ISA/210 (second sheet) (January 2015)

**INTERNATIONAL SEARCH REPORT**
Information on patent family members

International application No.

**PCT/JP2022/047223**

| Patent document cited in search report | | | Publication date (day/month/year) | Patent family member(s) | | | Publication date (day/month/year) |
|---|---|---|---|---|---|---|---|
| JP | 2013-226089 | A | 07 November 2013 | (Family: none) | | | |
| JP | 2012-228253 | A | 22 November 2012 | (Family: none) | | | |
| JP | 2015-112052 | A | 22 June 2015 | (Family: none) | | | |
| JP | 5071897 | B2 | 14 November 2012 | JP entire text, all drawings | 2007-119260 | A | |
| JP | 5388096 | B2 | 15 January 2014 | US entire text, all drawings | 2011/0126455 | A1 | |
| | | | | WO | 2010/041503 | A1 | |
| | | | | EP | 2333046 | A1 | |
| | | | | IL | 210826 | D | |
| | | | | CN | 102112598 | A | |
| | | | | KR | 10-2011-0083504 | A | |
| | | | | HK | 1154397 | A | |
| | | | | ES | 2785058 | T | |
| | | | | JP | 2010-88359 | A | |

Form PCT/ISA/210 (patent family annex) (January 2015)

**REFERENCES CITED IN THE DESCRIPTION**

**Patent documents cited in the description**

- JP 2001103855 A
- JP 2008068829 A